# EUROPÄISCHE PATENTSCHRIFT

(11) **EP 4 194 376 B1**
(45) Veröffentlichungstag und Bekanntmachung des Hinweises auf die Patenterteilung: **29.01.2025**
(21) Anmeldenummer: 23154646.6
(22) Anmeldetag: 07.03.2019
(51) Int. Cl.: B65G 47/52, B65G 1/137, B65G 47/91

(54) **VERFAHREN ZUM AUTOMATISCHEN KOMMISSIONIEREN VON WAREN**
METHOD FOR THE AUTOMATIC COMMISSIONING OF GOODS
PROCÉDÉ DE PRÉPARATION AUTOMATIQUE DE COMMANDES DE MARCHANDISES

(30) Priorität: 09.03.2018 AT 502072018; 13.03.2018 AT 502172018; 10.10.2018 AT 508862018
(43) Veröffentlichungstag der Anmeldung: 14.06.2023
(62) Teilanmeldung aus: 19718228.0
(73) Patentinhaber: TGW Logistics Group GmbH, 4614 Marchtrenk (AT)
(72) Erfinder: DOPPLER, Christoph, 4902 Wolfsegg a. H. (AT); HOLZNER, Stefan, 83569 Zaisering (DE); FEISTL, Sebastian Maximilian, 83229 Aschau i. Chiemgau (DE); PRECHTL, Christian, 4840 Vöcklabruck (AT); SCHRÖPF, Harald, 4600 Wels (AT)
(74) Vertreter: Burger, Hannes

(56) Entgegenhaltungen:
- WO-A1-2006/065147
- WO-A1-2016/138101
- WO-A1-2018/006112
- DE-A1- 4 407 324
- JP-A- S5 259 475
- US-A- 4 242 025
- US-A- 5 564 893

## Beschreibung

Die Erfindung betrifft ein Verfahren zum vollautomatisierten Kommissionieren von verschiedenen Waren aus Quellbehälter in Zielbehälter durch einen Roboter mit einer Greifeinheit, wie im Oberbegriff des Anspruches 1 beschrieben.

Die WO 2016/138101 A1 offenbart ein Verfahren gemäß dem Oberbegriff des Anspruches 1.

Insbesondere offenbart die WO 2016/138101 A1 ein Verfahren zum Kommissionieren von Waren aus Quellbehältern in Zielbehälter. Insbesondere wird eine Liste für Positionsdaten der Waren ("pick list of location data of items") im gescannten Quellbehälter erstellt. Die Warenentnahme basiert auf den Positionsdaten der Waren im Quellbehälter. Es werden die Waren aus dieser "pick list" nacheinander entnommen, bis der Quellbehälter vollständig entleert ist. Es können ohne erneute Bilderfassung mehrere Warenentnahmen erfolgen. Unbeachtet dabei bleibt jedoch, dass zwischen den einzelnen Warenentnahme Waren verrutschen können und im nächsten Greifvorgang nicht sichergestellt werden kann, dass die Ware korrekt oder überhaupt noch gegriffen werden kann. Damit verbunden sind vielzählige Störungen und eine niedrige Kommissionierleistung.

Eine Kommissionierstation zum vollautomatisierten Kommissionieren von verschiedenen Waren mit einem einzigen Roboter ist auch aus der EP 2 984 007 B1 und der EP 2 315 714 B1 bekannt. Somit können Aufträge ausschließlich sequentiell abgearbeitet werden, womit die Kommissionierleistung (Pickleistung) der Kommissionierstation eher niedrig ist.

Aus der US 9,751,693 B1 ist eine Kommissionierstation bekannt, bei der mehrere Roboter relativ zu auf einer Fördervorrichtung hintereinander bereitgestellten Quellbehälter bewegt werden. Jeder Roboter ist mit einer Greifeinheit ausgestattet. Die Waren werden aus den Quellbehältern entnommen und in einem Lagerregal abgelegt.

Eine Aufgabe der Erfindung ist es daher, ein verbessertes Verfahren zum vollautomatisierten Kommissionieren von verschiedenen Waren aus Quellbehälter in Zielbehälter anzugeben. Insbesondere sollen die oben angegebenen Nachteile überwunden und eine hohe Kommissionierleistung erreicht werden. Insbesondere soll der Kommissionierprozess besonders zuverlässig durchgeführt werden können, daher sollen kaum Störungen auftreten.

Die Aufgabe der Erfindung wird durch die Maßnahmen im Anspruch 1 gelöst.

Von Vorteil ist, dass vor jeder (neuerlichen) Entnahme einer Ware aus dem ersten Quellbehälter / zweiten Quellbehälter mit Hilfe eines Sensorsystems eine Greifflächenpose einer Greiffläche für zumindest eine der Waren im Quellbehälter ermittelt wird. Aus der ermittelten Greifflächenpose kann eine Greifpose für die bewegbare Greifeinheit berechnet werden. Die Greifeinheit wird in die berechnete Greifpose bewegt und die mit der Greiffläche der Ware in Kontakt stehende oder in Kontakt kommende Greifeinheit, beispielweise zumindest ein Sauggreifer, wird aktiviert, um die Ware aufzunehmen. Somit werden Warenverlagerungen im ersten Quellbehälter / zweiten Quellbehälter nach einer durchgeführten Warenentnahme erfasst und stets eine optimierte Greifflächenpose ermittelt und die Greifeinheit anhand einer optimierten Greifpose bewegt. Dadurch werden "Fehlgriffe" auf ein Minimum reduziert und es wird die Ware optimal von der Greifeinheit aufgenommen bzw. gegriffen.

Es erweist sich von Vorteil, dass der Quellbehälter und Zielbehälter zu einem ersten Auftrag bzw. der Quellbehälter und Zielbehälter zu einem zweiten Auftrag jeweils knapp nebeneinander bereitgestellt werden können und dadurch die Bewegungen des Roboters / der Greifeinheit besonders kurz gestaltet werden können. Der Roboter und die Greifeinheit können entlang einfacher Bewegungsbahnen bewegt werden.

Insbesondere definiert der Roboter einen Arbeitsbereich, innerhalb welchem die Greifeinheit bewegt wird. Der Arbeitsbereich ist ein dreidimensionaler Raum. Man spricht deshalb auch von einem Arbeitsraum. Der Arbeitsbereich kann eine rechteckige Grundfläche ausbilden, wenn der Roboter beispielweise als Portalroboter gestaltet ist. Der Arbeitsbereich kann aber auch eine kreisförmige oder ovale Grundfläche ausbilden, wenn der Roboter beispielweise als Gelenkarmroboter (oder auch Knickarmroboter genannt) gestaltet ist. Der Roboter ist bevorzugt stationär aufgestellt.

Der Arbeitsbereich des Roboters ist derart ausgelegt, dass dieser die erste Andienungsvorrichtung mit dem ersten Entnahmeplatz, zweite Andienungsvorrichtung mit dem zweiten Entnahmeplatz, erste Andienungsvorrichtung mit dem ersten Beladeplatz und zweite Andienungsvorrichtung mit dem zweiten Beladeplatz einschließt. In diesem Zusammenhang ist der Begriff "einschließt" derart zu verstehen, dass der Arbeitsbereich an eine Andienungsebene der ersten/zweiten Andienungsvorrichtung angrenzt oder eine Andienungsebene der ersten/zweiten Andienungsvorrichtung den Arbeitsbereich schneidet.

Befinden sich der erste Quellbehälter am ersten Entnahmeplatz, der zweite Quellbehälter am zweiten Entnahmeplatz, der erste Zielbehälter am ersten Beladeplatz und/oder der zweite Zielbehälter am zweiten Beladeplatz, so sind diese innerhalb des Arbeitsbereiches bereitgestellt.

Mit anderen Worten kann das Robotersystem bloß einen einzigen Roboter umfassen, welcher auf mehr als einen Quellbehälter, insbesondere den ersten Quellbehälter und zweiten Quellbehälter, und auf mehr als einen Zielbehälter, insbesondere den ersten Zielbehälter und zweiten Zielbehälter zugreifen kann.

Es sind kaum zeitaufwändige Schwenkbewegungen des Roboters und der Greifeinheit erforderlich. Damit kann nicht nur die Anzahl an Warenentnahmen aus einem Quellbehälter und Warenabgaben in einen Zielbehälter deutlich erhöht, sondern auch die Anzahl an von der Greifeinheit hinunterfallenden Waren maximal reduziert werden. Insgesamt kann die Kommissionierleistung gegenüber den aus dem Stand der Technik bekannten Kommissionierstationen erhöht werden. Zudem ergibt sich auch ein sehr kompakter Aufbau der Kommissionierstation.

Es erweist sich als günstig, wenn der Abtransport des ersten Zielbehälters nach Abarbeitung der Auftragszeile zum ersten Auftrag von dem ersten Beladeplatz und Abtransport des zweiten Zielbehälters nach Abarbeitung der Auftragszeile zum zweiten Auftrag von dem zweiten Beladeplatz unabhängig voneinander durch eine durch die Zielbehälter-Fördertechnik. Der erste Zielbehälter wird nach der (vollständigen) Abarbeitung einer Auftragszeile vom ersten Beladeplatz abtransportiert, ebenso der zweite Zielbehälter nach der (vollständigen) Abarbeitung einer Auftragszeile vom zweiten Beladeplatz. Somit wechseln die Zielbehälter versus Aufträge sehr dynamisch, sodass in einer sehr kurzen Zeitspanne eine Vielzahl von Zielbehältern in Zugriff sind.

Von Vorteil ist aber auch eine Maßnahme, wonach zur Weiterbearbeitung des ersten Auftrags mit einer nächsten Auftragszeile und/oder zweiten Auftrags mit einer nächsten Auftragszeile ferner die Schritte durchgeführt werden:
m) Antransport eines dritten Quellbehälters zur Bearbeitung der nächsten Auftragszeile zum ersten Auftrag zur ersten Andienungsvorrichtung mit dem ersten Entnahmeplatz und/oder Antransport eines vierten Quellbehälters zur Bearbeitung der nächsten Auftragszeile zum zweiten Auftrag zur zweiten Andienungsvorrichtung mit dem zweiten Entnahmeplatz mit der automatisiert betriebenen Quellbehälter-Fördertechnik, wobei die Quellbehälter unterschiedliche Waren bevorraten,
n) Bereitstellung des ersten Zielbehälters auf dem ersten Beladeplatz während des Antransportes des dritten Quellbehälters, um die nächste Auftragszeile zum ersten Auftrag zu bearbeiten, und/oder Bereitstellung des zweiten Zielbehälters auf dem zweiten Beladeplatz während des Antransportes des vierten Quellbehälters (5g), um die nächste Auftragszeile zum zweiten Auftrag zu bearbeiten,
o) Ermittlung einer Greifflächenpose einer Greiffläche für zumindest eine der Waren im dritten Quellbehälter mit Hilfe eines Sensorsystems, nachdem der dritte Quellbehälter am ersten Entnahmeplatz bereitgestellt wurde, und Berechnung einer Greifpose für die Greifeinheit aus der ermittelten Greifflächenpose durch eine Robotersteuerung,
p) Entnahme der genannten Ware aus dem dritten Quellbehälter und Ablegen der genannten Ware in den ersten Zielbehälter durch die Greifeinheit des Roboters zur nächsten Auftragszeile des ersten Auftrags,
q) Wiederholung des Schrittes o) sofern die nächste Auftragszeile zum ersten Auftrag nochmals eine Ware dieses Warentyps enthält, neuerliche Entnahme der genannten Ware aus dem dritten Quellbehälter und Ablegen der genannten Ware in den ersten Zielbehälter durch die Greifeinheit des Roboters,
r) und/oder Ermittlung einer Greifflächenpose einer Greiffläche für zumindest eine der Waren im vierten Quellbehälter mit Hilfe eines Sensorsystems, nachdem der vierte Quellbehälter am zweiten Entnahmeplatz bereitgestellt wurde, und Berechnung einer Greifpose für die Greifeinheit aus der ermittelten Greifflächenpose durch eine Robotersteuerung,
s) und/oder Entnahme der genannten Ware aus dem vierten Quellbehälter und Ablegen der genannten Ware in den zweiten Zielbehälter durch die Greifeinheit des Roboters zur nächsten Auftragszeile des zweiten Auftrags,
t) Wiederholung des Schrittes r) sofern die nächste Auftragszeile zum zweiten Auftrag nochmals eine Ware dieses Warentyps enthält, neuerliche Entnahme der genannten Ware aus dem vierten Quellbehälter und Ablegen der genannten Ware in den zweiten Zielbehälter durch die Greifeinheit des Roboters,
u) Abtransport des ersten Zielbehälters nach Abarbeitung der Auftragszeilen zum ersten Auftrag von dem ersten Beladeplatz und/oder Abtransport des zweiten Zielbehälters nach Abarbeitung der Auftragszeilen zum zweiten Auftrag von dem zweiten Beladeplatz unabhängig voneinander durch eine durch die Zielbehälter-Fördertechnik.

Nach dieser Ausführung wird der erste Zielbehälter und/oder zweite Zielbehälter nicht nach jeder (vollständigen) Abarbeitung einer Auftragszeile zu einem mehrere Auftragszeilen umfassenden Auftrag vom ersten Beladeplatz / zweiten Beladeplatz abtransportiert. Es ist möglich, dass sämtliche Auftragszeilen eines Auftrags abgearbeitet werden, ehe der erste Zielbehälter und/oder zweite Zielbehälter vom ersten Beladeplatz / zweiten Beladeplatz abtransportiert wird / werden. Auch wenn dies nicht zwingend zu verstehen ist, kann in dieser Ausführung ein Sortierpuffer entfallen, da die Quellbehälter abhängig von dem zu bearbeiteten ersten Zielbehälter und/oder zweiten Zielbehälter in entsprechender Sequenz auf dem ersten Entnahmeplatz und zweiten Entnahmeplatz bereitgestellt werden.

Es wird vorerst die Auftragszeile zu einem ersten Auftrag oder zweiten Auftrag vollständig abgearbeitet. "Vollständig" bedeutet in diesem Zusammenhang, dass sämtliche Waren zur Erfüllung dieser Auftragszeile im jeweiligen ersten Zielbehälter / zweiten Zielbehälter abgelegt worden sein müssen.

Beispielweise wird die Auftragszeile zu einem ersten Auftrag vollständig abgearbeitet. Erst danach wird der Schritt r) durchgeführt und eine Greifflächenpose einer Greiffläche für zumindest eine Ware im vierten Quellbehälter ermittelt. Daher wird erst knapp vor einer geplanten Warenentnahme aus dem vierten Quellbehälter die genannte Greifflächenpose ermittelt. Sodann wird die Auftragszeile zu einem zweiten Auftrag bearbeitet und vollständig abgearbeitet. Danach wird der Schritt o) durchgeführt und eine Greifflächenpose einer Greiffläche für zumindest eine Ware im dritten Quellbehälter ermittelt. Daher wird erst knapp vor einer geplanten Warenentnahme aus dem dritten Quellbehälter die genannte Greifflächenpose ermittelt.

Eine vorteilhafte Maßnahme ist, wenn der erste Auftrag mit den Schritten f) bis h) und der zweite Auftrag mit den Schritten i) bis k) vom Roboter sequentiell bearbeitet werden.

Dabei kann der Schritt i) nach der Abarbeitung der Auftragszeile zum ersten Auftrag während der Bewegung des Roboters / der Greifeinheit vom ersten Zielbehälter zum zweiten Quellbehälter durchgeführt werden. Ebenso kann der Schritt f) nach der Abarbeitung der Auftragszeile zum zweiten Auftrag während der Bewegung des Roboters / der Greifeinheit vom zweiten Zielbehälter zum ersten Quellbehälter durchgeführt werden.

Es wird vorerst die Auftragszeile zu einem ersten Auftrag oder zweiten Auftrag vollständig abgearbeitet. "Vollständig" bedeutet in diesem Zusammenhang, dass sämtliche Waren zur Erfüllung dieser Auftragszeile im jeweiligen ersten Zielbehälter / zweiten Zielbehälter abgelegt worden sein müssen.

Beispielweise wird die Auftragszeile zu einem ersten Auftrag vollständig abgearbeitet. Erst danach wird der Schritt i) durchgeführt und eine Greifflächenpose einer Greiffläche für zumindest eine Ware im zweiten Quellbehälter ermittelt. Daher wird erst knapp vor einer geplanten Warenentnahme aus dem zweiten Quellbehälter die genannte Greifflächenpose ermittelt. Sodann wird die Auftragszeile zu einem zweiten Auftrag bearbeitet und vollständig abgearbeitet. Danach wird der Schritt f) durchgeführt und eine Greifflächenpose einer Greiffläche für zumindest eine Ware im ersten Quellbehälter ermittelt. Daher wird erst knapp vor einer geplanten Warenentnahme aus dem ersten Quellbehälter die genannte Greifflächenpose ermittelt.

Dies ist besonders vorteilhaft, da während der Abarbeitung der Auftragszeile zu einem ersten Auftrag durch den Roboter / die Greifeinheit Erschütterungen auftreten und die Waren im zweiten Quellbehälter verrutschen können. Würde wie im Stand der Technik die Greifflächenpose einer Greiffläche für zumindest eine Ware im zweiten Quellbehälter bereits während der Entnahme der Waren aus dem ersten Quellbehälter und Ablage genannter Waren in den Zielbehälter erfolgen, ist mit einer zunehmenden Anzahl an "Fehlgriffen" zu rechnen.

Es erweist sich auch vorteilhaft, wenn der Schritt f) während der Bearbeitung der Auftragszeile zum ersten Auftrag gemäß den Schritten g) und h) und der Schritt i) während der Bearbeitung der Auftragszeile zum zweiten Auftrag gemäß den Schritten j) und k) durchgeführt werden.

Es erweist sich auch als günstig, wenn der erste Auftrag mit den Schritten g) und h) und der zweite Auftrag mit den Schritten j) und k) vom Roboter sequentiell bearbeitet werden.

Von Vorteil ist auch, wenn der erste Quellbehälter und zweite Quellbehälter nach dem Kommissionieren der Waren gemäß den Schritten g) und h) und Schritten j) und k) unabhängig voneinander in einen Lagerbereich zurückgelagert werden, sofern nach der Warenentnahme Waren im ersten Quellbehälter und zweiten Quellbehälter verbleiben.

Günstig ist auch, wenn der erste Zielbehälter und zweite Zielbehälter nach dem Kommissionieren der Waren gemäß den Schritten g) und h) und Schritten j) und k) unabhängig voneinander in einen Sortierpuffer transportiert werden, sofern zum ersten Auftrag unterschiedliche Auftragszeilen und zum zweiten Auftrag unterschiedliche Auftragszeilen zu bearbeiten sind.

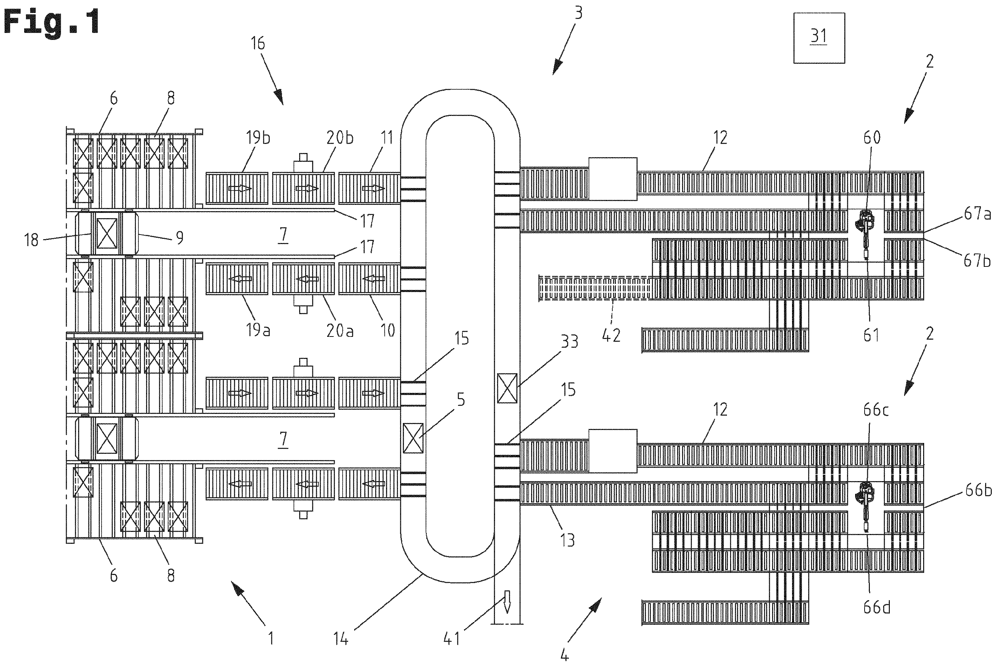

Der Sortierpuffer wird von einer Steuereinheit angesteuert und es werden die Zielbehälter im Sortierpuffer in eine Reihenfolge sortiert, die abhängig von der Reihenfolge in welcher die Quellbehälter jeweils auf dem ersten Entnahmeplatz und zweiten Entnahmeplatz bereitgestellt werden, bestimmt wird. Die Zielbehälter werden im und durch den Sortierpuffer in eine Reihenfolge sortiert, welche durch die Reihenfolge der Quellbehälter bestimmt wird. Von Vorteil ist, dass die Anforderung an die Sequenz, in welcher die Quellbehälter zu dem ersten Entnahmeplatz und zweiten Entnahmeplatz auf der Quellbehälter-Fördertechnik (siehe Fig. 1 Fördervorrichtung 12) antransportiert werden, gering ist und damit wird eine hohe Auslagerleistung im Lagerbereich erreicht. Die Kommissionierstation kann im Wesentlichen unterbrechungsfrei mit Quellbehältern versorgt werden.

Von Vorteil ist auch eine Verfahrensmaßnahme, bei der
die Quellbehälter aus einem Lagerbereich zu den Aufträgen ausgelagert und an dem ersten Entnahmeplatz und zweiten Entnahmeplatz in beliebiger Reihenfolge bereitgestellt werden,
wobei die Reihenfolge der Quellbehälter, in welcher die Quellbehälter zum ersten Entnahmeplatz und zweiten Entnahmeplatz antransportiert werden, erfasst wird, und
wobei die Zielbehälter im Sortierpuffer in eine Reihenfolge sortiert werden, die abhängig von der Reihenfolge in welcher die Quellbehälter auf dem ersten Entnahmeplatz und zweiten Entnahmeplatz bereitgestellt werden, bestimmt wird, und dass ein erster / zweiter Quellbehälter und ein erster / zweiter Zielbehälter zu einem Auftrag in etwa gleichzeitig am ersten / zweiten Entnahmeplatz und ersten / zweiten Beladeplatz ankommen.

Es werden die benötigten Quellbehälter für die Bearbeitung der Auftragszeilen zwar dem ersten Entnahmeplatz und zweiten Entnahmeplatz in einer ungeordneten Reihenfolge zugeführt, jedoch wird an einem Reihenfolgebestimmungspunkt diese Reihenfolge erfasst. Der Reihenfolgebestimmungspunkt ist vorzugsweise entlang der Quellbehälter-Fördertechnik zum Antransport der Quellbehälter, welche an die erste Fördervorrichtung der Kommissionierstation anschließt, angeordnet. Ab dem Reihenfolgebestimmungspunkt bleibt die (chaotische) Reihenfolge unverändert. Die Zielbehälter im Sortierpuffer bestimmen welche Quellbehälter ausgelagert werden müssen. Die Zielbehälter werden im und durch den Sortierpuffer in eine Reihenfolge sortiert, welche durch die (chaotische) Reihenfolge der Quellbehälter bestimmt wird.

Erfindungsgemäß ist es vorgesehen, dass von einem Sensorsystem nach der Entnahme einer Ware durch die Greifeinheit aus einem der ersten und zweiten Quellbehälter gemäß dem Schritt g) oder Schritt j)
geprüft wird, ob von der Greifeinheit eine Ware heruntergefallen ist und sich auf einer Ablageplatte befindet, welche oberhalb der Quellbehälter-Fördertechnik und Zielbehälter-Fördertechnik, insbesondere von zweiten Fördervorrichtungen, zwischen dem ersten Quellbehälter und ersten Zielbehälter und zwischen dem zweiten Quellbehälter und zweiten Zielbehälter angeordnet ist, und
die auf der Ablageplatte befindliche Ware von der Greifeinheit aufgenommen und im ersten Quellbehälter, oder
zweiten Quellbehälter (5a..5h), oder
ersten Zielbehälter (33a..33g), oder
zweiten Zielbehälter (33a..33g)
ablegt wird.

Auf diese Weise kann verhindert werden, dass eine Ware, die unbeabsichtigt von der Greifeinheit heruntergefallen ist, auf die Quellbehälter-Fördertechnik und Zielbehälter-Fördertechnik, insbesondere die zweiten Fördervorrichtungen, oder ersten / zweiten Andienungsvorrichtungen fällt. Stattdessen fällt die Ware auf die Ablageplatte. Von dieser Ablageplatte kann die Ware mit der Greifeinheit aufgenommen und entweder in den ersten / zweiten Quellbehälter oder in den bestimmungsgemäß vorgesehenen ersten / zweiten Zielbehälter abgelegt werden.

Die Ablageplatte kann eine horizontal oder schräg ausgerichtete Ablagefläche ausbilden oder durch eine schwenkbare Klappe gebildet sein und kann zwischen dem ersten Quellbehälter / ersten Zielbehälter bzw. zweiten Quellbehälter / zweiten Zielbehälter angeordnet sein aber auch rund um den ersten Quellbehälter / ersten Zielbehälter bzw. zweiten Quellbehälter / zweiten Zielbehälter. Die Klappe kann insbesondere motorisch angetrieben sein oder vom Roboter betätigt werden. Mithilfe einer Ablagefläche, welche in Form einer schräg ausgerichteten Ebene ausgeführt ist, kann eine von der Greifeinheit heruntergefallene Ware automatisch in den ersten Quellbehälter / ersten Zielbehälter bzw. zweiten Quellbehälter / zweiten Zielbehälter befördert werden. Mithilfe einer Klappe kann eine von der Greifeinheit heruntergefallene Ware wahlweise in ersten Quellbehälter / ersten Zielbehälter bzw. zweiten Quellbehälter / zweiten Zielbehälter befördert werden.

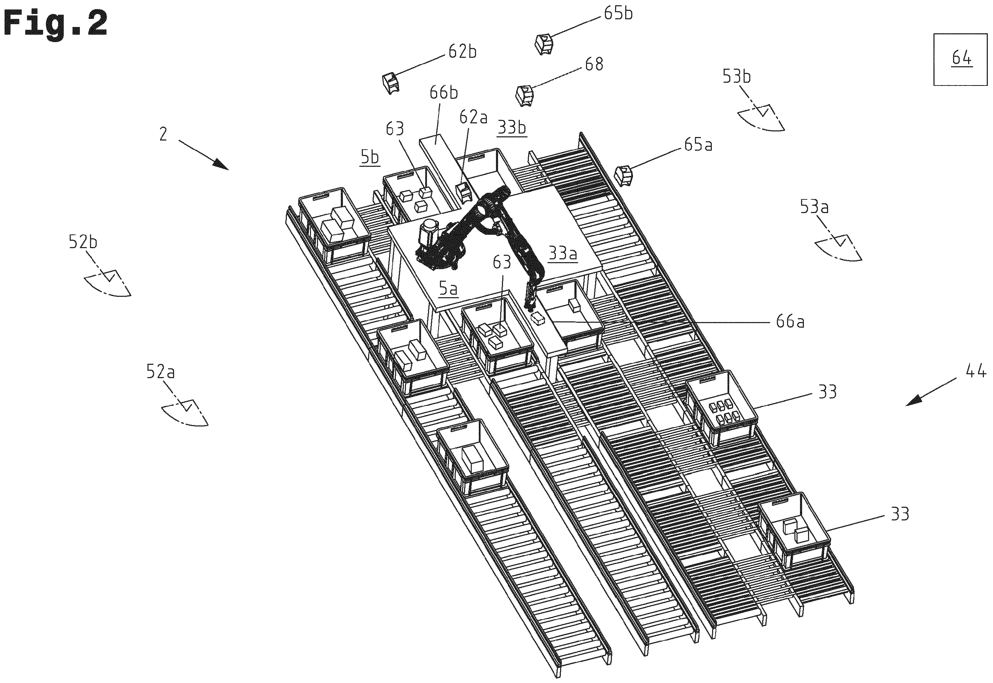

Nach einer möglichen Ausführung sind
oberhalb der zweiten Fördervorrichtungen zwischen dem ersten Quellbehälter und ersten Zielbehälter eine erste Ablageplatte (in Fig. 2, 66a), und
oberhalb der zweiten Fördervorrichtungen zwischen dem zweiten Quellbehälter und zweiten Zielbehälter eine zweite Ablageplatte (in Fig. 2, 66b) vorgesehen.

Es kann sich auch von Vorteil erweisen, wenn zusätzlich
oberhalb der zweiten Fördervorrichtungen zwischen dem ersten Quellbehälter und zweiten Quellbehälter eine dritte Ablageplatte (in Fig. 1, 66c), und
oberhalb der zweiten Fördervorrichtungen zwischen dem ersten Zielbehälter und zweiten Zielbehälter eine vierte Ablageplatte (in Fig. 1, 66d) vorgesehen sind.

Dabei ist es besonders vorteilhaft, dass das aufgetretene Problem durch das Robotersystem selbst behoben werden kann, wodurch eine Intervention durch eine Bedienperson überflüssig ist.

Darüber hinaus können die erfindungsgemäßen Verfahrensmaßnahmen in Verbindung mit der beschriebenen automatischen Fehlerbehebung durch den Roboter / Greifeinheit von Vorteil sein. Dies sei anhand nachfolgendem Beispiel beschrieben. Verliert die Greifeinheit nach einer Warenentnahme eine von ihr aufgenommene Ware und fällt in den Quellbehälter zurück und/oder wird eine von ihr aufgenommene Ware auf der Bewegung vom Quellbehälter zum Zielbehälter verloren und an der Ablageplatte "aufgefangen" und in den Quellbehälter zurückgelegt, ergibt sich eine veränderte Greifflächenpose einer Greiffläche für zumindest eine andere Ware im Quellbehälter. Dementsprechend wird eine aktualisierte Greifpose für die Greifeinheit berechnet. Auch dies ist eine Maßnahme, bei der die "Fehlgriffe" auf ein Minimum reduziert werden kann.

Insbesondere erweist es sich als vorteilhaft, wenn
oberhalb einer zweiten Fördervorrichtung zum Abtransport von Quellbehältern und zweiten Fördervorrichtung zum Abtransport von Zielbehältern zwischen der ersten Andienungsvorrichtung mit dem ersten Entnahmeplatz und der ersten Andienungsvorrichtung mit dem ersten Beladeplatz eine Ablageplatte, welche eine erste Zugangsöffnung oberhalb des ersten Entnahmeplatzes und eine zweite Zugangsöffnung oberhalb des ersten Beladeplatzes aufweist, und
oberhalb eines zweiten Fördervorrichtung zum Abtransport von Quellbehältern und zweiten Fördervorrichtung zum Abtransport von Zielbehältern zwischen der zweiten Andienungsvorrichtung mit dem zweiten Entnahmeplatz und der zweiten Andienungsvorrichtung mit dem zweiten Beladeplatz eine Ablageplatte, welche eine erste Zugangsöffnung oberhalb des ersten Entnahmeplatzes und eine zweite Zugangsöffnung oberhalb des ersten Beladeplatzes aufweist, angeordnet sind.

Insbesondere erweist sich auch als günstig, wenn
oberhalb einer zweiten Fördervorrichtung zum Abtransport von Quellbehältern zwischen der ersten Andienungsvorrichtung mit dem ersten Entnahmeplatz und der zweiten Andienungsvorrichtung mit dem zweiten Entnahmeplatz eine Ablageplatte, und
oberhalb einer zweiten Fördervorrichtung zum Abtransport von Zielbehältern zwischen der ersten Andienungsvorrichtung mit dem ersten Beladeplatz und der zweiten Andienungsvorrichtung mit dem zweiten Beladeplatz eine Ablageplatte angeordnet sind.

Nach einer besonders vorteilhaften Ausführungsvariante ist der Roboter durch einen Portalroboter gebildet sein. Der Portalroboter umfasst einen am dritten Portalschlitten um eine erste, vertikale Drehachse drehbar gelagerten und über eine vierte Antriebsvorrichtung bewegbaren Portalarm, und ferner eine am Portalarm um eine zweite, horizontale Drehachse drehbar gelagerte und über eine fünfte Antriebsvorrichtung bewegbare Greiferaufnahme, an welcher die Greifeinheit befestigt ist. Dadurch werden die Vorteile einer vertikalen Drehachse und einer horizontalen Drehachse kombiniert. Demzufolge kann die Greifeinheit besonders gut in eine vorteilhafte Greifpose bewegt werden. Besonders vorteilhaft ist es dabei, wenn der Portalarm um eine Vertikalachse bevorzugt um 360° (und insbesondere endlos) drehbar und in Vertikalrichtung höhenverstellbar ist. Der Portalarm kann in senkrechter Richtung auf einen Boden eines (Quell-)Behälters oder (Ziel-)Behälters bewegt werden, und die Greifeinheit kann gegebenenfalls in eine Winkelstellung gedreht werden, um eine Ware aus einem (Quell-)Behälter zu entnehmen und/oder in einem (Ziel-)Behälter abzugeben. Die optimale Greifpose kann also erreicht werden, indem der Portalarm in seiner Vertikalstellung verbleibt, während die Greifeinheit relativ zum Portalarm verschwenkt wird. Mit anderen Worten, und dies ist von besonderem Vorteil, wird der Portalarm gegenüber dem dritten Portalschlitten ausschließlich um die Vertikalrichtung (bevorzugt um 360°) gedreht, nicht jedoch gegenüber der Vertikalachse geneigt. Der Portalarm und die Greifeinheit können dadurch sehr knapp neben einer Seitenwand in einen (Quell-)Behälter und/oder (Ziel-)Behälter "eintauchen". Damit können aus einem (Quell-)Behälter auch Waren im Randbereich entnommen werden, welche ansonsten sehr schwierig zu greifen sind. Beispielweise können auch gegen eine Behälterwand angelehnte Waren gegriffen werden, daher Waren welche im Randbereich liegen und eine gegenüber einer Horizontalen geneigt ausgerichtete Greiffläche aufweisen. Gleiches gilt, wenn in einen (Ziel-)Behälter Waren im Randbereich abgegeben werden sollen.

Durch die Greiferaufnahme können Greifeinheiten verschiedener Art auf dem Portalroboter befestigt werden, wobei die Greifeinheiten jeweils an unterschiedliche Greifaufgaben angepasst sind.

Ein besonderer Vorteil des Portalroboters ist, dass die Antriebskräfte bei gleicher Bewegungsgeschwindigkeit bei einer Vergrößerung des Wirkungsbereichs (also dem Bereich, den der Roboter mit seiner Greifeinheit erreichen kann) weniger stark ansteigen als dies bei einem Gelenkarmroboter der Fall ist. Der Grund ist, dass beim Portalroboter hauptsächlich lineare Massenträgheiten maßgebend sind, wohingegen beim Gelenkarmroboter Massenträgheitsmomente eine Rolle spielen und die Antriebskräfte bei einer Vergrößerung des Wirkungsbereichs stärker als linear ansteigen. Die Massenträgheit der Portalschlitten eines Portalroboters ändert sich vorteilhaft dann überhaupt nicht, wenn die erste Richtung (x-Richtung) verlängert wird. Der Einsatz eines Portalroboters ist also insbesondere dann von Vorteil, wenn besonders große Ladehilfsmittel oder besonders viele Ladehilfsmittel gleichzeitig im Zugriff des Portalroboters sein sollen, so wie das bei komplexen Kommissioniervorgängen häufig gefordert beziehungsweise notwendig ist. Beispielsweise ist das bei dem weiter oben vorgestellten Kommissionierstation mit zwei Entnahmeplätzen für Quellbehälter und zwei Beladeplätzen für Zielbehälter der Fall.

Durch die besagten linearen Bewegungen der Portalschlitten kann der erste Quellbehälter, zweite Quellbehälter, erste Zielbehälter und zweite Zielbehälter gut erreicht werden, auch wenn diese in den Eckpunkten eines (gedachten) Rechtecks bereitgestellt werden.

Wird der Gelenkarmroboter dagegen nicht entsprechend des gestiegenen Wirkungsbereichs vergrößert, um die Antriebskräfte nicht übermäßig zu steigern, dann muss unter Umständen damit gerechnet werden, dass "Schattenbereiche" auftreten, das heißt Bereiche entstehen, die der Gelenkarmroboter nicht erreichen kann. Dieses Problem stellt sich insbesondere bei der Kommissionierung unter Zuhilfenahme von (Quell-)Behältern und/oder (Ziel-)Behältern, da das äußerste Armsegment des Gelenkarmroboters aufgrund der Höhe der genannten Behälter nicht senkrecht in einen Behälter eingeführt werden kann, welcher von der zentralen Drehachse des Gelenkarmroboters weiter entfernt steht. Durch das schräg stehende Armsegment ergeben sich dann die erwähnten Schattenbereiche. Waren, die in diesen Bereichen im (Quell-)Behälter lagern, können in Folge nicht ergriffen werden. Darüber hinaus können die Waren auch nicht in diesen Bereichen in einen (Ziel-)Behälter abgegeben werden. Dieser wird dann in ungünstiger Weise einseitig befüllt. Durch den Einsatz eines Portalroboters werden diese Probleme vorteilhaft vermieden.

Vorteilhaft treten bei Portalrobotern auch keine Singularitäten auf, so wie das bei Gelenkarmrobotern der Fall ist, also Raumpunkte, die durch mehrere (unter Umständen unendlich viele) Achsstellungen erreicht werden können. Die Bahnsteuerung für den Portalroboter kann daher einfacher aufgebaut sein.

Besonders vorteilhaft ist es auch, wenn der Portalarm eine gegenüber einer maximalen Querschnittskontur rückversetzte Seitenwand aufweist, welche sich vom unteren Ende in Richtung zum oberen Ende erstreckt und eine im Wesentlichen ebene Begrenzungsfläche ausbildet. Durch die zurückversetzte Begrenzungsfläche des Portalarms kann dieser besonders nahe an einer Behälterwand in einen Behälter eingetaucht werden.

Vorteilhaft umfasst die Greifeinheit einen Vakuum-Sauggreifer, welcher eine Greiffläche ausbildet, oder mehrere Vakuum-Sauggreifer, welche eine Greiffläche ausbilden. Insbesondere kann die Greifeinheit drei Vakuum-Sauggreifer, umfassen welche eine Greifebene ausbilden. Wegen der Redundanz der Greifmittel (das heißt wegen der Redundanz der Vakuum-Sauggreifer) können Waren durch die Greifeinheit bei besonders geringer Fehlerrate ergriffen werden. Das heißt, eine Anzahl fehlgeschlagener Handhabungen von Waren im Verhältnis zu einer Gesamtanzahl an Handhabungen dieser Waren ist gering. Durch die vorgeschlagenen Maßnahmen kann eine Greiffläche beim Greifen einer Ware gut mit einer Grenzfläche der Ware in Übereinstimmung gebracht werden. Das heißt, die Greiffläche tritt mit der zu ergreifenden Ware in Kontakt.

Besonders vorteilhaft ist es in diesem Zusammenhang, wenn die Greifeinheit drei im Dreieck angeordnete Vakuum-Sauggreifer umfasst und wenigstens eine der Seiten eines Dreiecks, an dessen Eckpunkten die Mittelpunkte der Vakuum-Sauggreifer liegen, im Wesentlichen parallel zu einer ebenen, vertikalen Begrenzungsfläche des Portalarms ausgerichtet ist. Durch die im Dreieck angeordneten Vakuum-Sauggreifer können insbesondere Waren gut erfasst werden, die eine ebene Begrenzungsfläche oder mehrere solcher Begrenzungsflächen aufweisen, beispielsweise Schachteln. Durch die zumindest eine, zu einer der Seiten des Dreiecks ausgerichtete, vertikale Begrenzungsfläche des Portalarms kann dieser wieder besonders nahe an einer Behälterwand in einen Behälter eingetaucht werden. Insbesondere kann der Portalarm einen runden (kreisförmigen) Querschnitt aufweisen, der im Bereich der genannten, vertikalen Begrenzungsfläche abgeflacht ist. Denkbar wäre aber auch, dass der Portalarm einen polygonförmigen Querschnitt aufweist (insbesondere einen rechteckförmigen Querschnitt oder dreieckförmigen Querschnitt). Die genannte, im Wesentlichen vertikale Begrenzungsfläche ist dann durch eine Seitenfläche eines polygonförmigen Prismas gebildet.

Besonders vorteilhaft ist es in obigem Zusammenhang bei einer Kommissionierstation auch, wenn diese einen auf dem zumindest einen Entnahmeplatz angeordneten Quellbehälter und/oder einen auf dem zumindest einen Beladeplatz angeordneten Zielbehälter aufweist, wobei eine Eintauch-Höhe, welche vom oberen Ende der genannten ebenen, vertikalen Begrenzungsfläche des Portalarms bis zum unteren Ende der Greifeinheit gemessen wird, größer ist als die 1,1-fache Behälterhöhe des Quellbehälters und/oder des Zielbehälters. Dadurch kann die Greifeinheit auch im Bereich der Behälterwand bis zum Boden des Behälters eingetaucht werden.

Besonders vorteilhaft ist es auch, wenn eine Kommissionierstation zumindest einen Behälter-Antrieb
zum Drehen des zumindest einen Entnahmeplatzes (inklusive einem darauf bereitgestellten Quellbehälter) und des zumindest einen Beladeplatzes (inklusive einem darauf bereitgestellten Zielbehälter) relativ zum Grundgestell des Portalroboters um eine vertikale Drehachse, und/oder
zum Kippen des zumindest einen Entnahmeplatzes (inklusive einem darauf bereitgestellten Quellbehälter) und des zumindest einen Beladeplatzes (inklusive einem darauf bereitgestellten Zielbehälter) relativ zum Grundgestell des Portalroboters um eine horizontale Drehachse
umfasst.

Dadurch kann die Greifeinheit ebenfalls gut in eine vorteilhafte Greifpose zum Greifen von Waren bewegt werden, allerdings durch Drehung des Quellbehälters und/oder Zielbehälters relativ zum Portalroboter. Können der Quellbehälter und der Zielbehälter um eine vertikale Drehachse gedreht werden, so braucht die Greifeinheit an sich nicht um eine vertikale Drehachse drehbar gegenüber dem dritten Portalschlitten gelagert sein. Ebenso braucht die Greifeinheit nicht um eine horizontale Drehachse drehbar gegenüber dem dritten Portal schlitten gelagert sein, wenn der Quellbehälter und der Zielbehälter um eine horizontale Drehachse gekippt werden können.

Günstig ist es weiterhin, wenn für eine Kommissionierstation eine Quellbehälter-Fördertechnik zum automatisierten Transport von Quellbehältern und eine Zielbehälter-Fördertechnik zum automatisierten Transport von Zielbehältern vorgesehen ist, wobei
die Quellbehälter-Fördertechnik eine erste Andienungsvorrichtung aufweist, welche einen ersten Entnahmeplatz umfasst, und in einer weiteren speziellen Ausführungsform eine zweite Andienungsvorrichtung aufweist, welche einen zweiten Entnahmeplatz umfasst, und
die Zielbehälter-Fördertechnik eine erste Andienungsvorrichtung aufweist, welche einen ersten Beladeplatz umfasst, und in einer weiteren speziellen Ausführungsform eine zweite Andienungsvorrichtung aufweist, welche einen zweiten Beladeplatz umfasst.

Auf diese Weise können die Quellbehälter und Zielbehälter automatisch in den Wirkungsbereich des Portalroboters gebracht werden. Insbesondere ist die Quellbehälter-Fördertechnik und/oder die Zielbehälter-Fördertechnik so wie weiter oben beschrieben ausgebildet.

In einer weiteren vorteilhaften Ausführungsvariante umfasst das vollautomatisierte Robotersystem den Roboter, insbesondere einen Portalroboter, und ein Sensorsystem, insbesondere ein Kamerasystem, zumindest zum Erfassen der Waren im ersten Quellbehälter und gegebenenfalls im zweiten Quellbehälter, sofern eine zweite Andienungsvorrichtung vorgesehen ist, und eine Robotersteuerung, die mit dem Sensorsystem verbunden ist und den Roboter mit der Greifeinheit ansteuert. Auf diese Weise kann der Kommissioniervorgang vollautomatisch ablaufen. Insbesondere ist durch die vorgeschlagenen Maßnahmen auch eine Korrektur beim Kommissionieren eventuell auftretender Fehler möglich.

In einer vorteilhaften Ausgestaltung bildet die erste Andienungsvorrichtung mit dem ersten Entnahmeplatz und die erste Andienungsvorrichtung mit dem ersten Beladeplatz jeweils eine Andienungsebene auf demselben Höhenniveau ausbilden. Ebenso kann die zweite Andienungsvorrichtung mit dem zweiten Entnahmeplatz und die zweite Andienungsvorrichtung mit dem zweiten Beladeplatz jeweils eine Andienungsebene auf demselben Höhenniveau ausbilden. Dies ermöglicht, dass der erste Quellbehälter / erste Zielbehälter und zweite Quellbehälter / zweite Zielbehälter auf demselben Höhenniveau bereitgestellt werden, was die Entnahme der Waren aus dem ersten / zweiten Quellbehälter und die Abgabe der Waren in den ersten / zweiten Zielbehälter vereinfacht.

Günstig ist, wenn zwischen der ersten Andienungsvorrichtung mit dem ersten Entnahmeplatz und der zweiten Andienungsvorrichtung mit dem zweiten Entnahmeplatz eine Puffervorrichtung mit zumindest einem Pufferplatz vorgesehen ist, an welchem ein zweiter Quellbehälter nach dem Kommissionieren gepuffert werden kann. Ebenso kann zwischen der ersten Andienungsvorrichtung mit dem ersten Beladeplatz und der zweiten Andienungsvorrichtung mit dem zweiten Beladeplatz eine Puffervorrichtung mit zumindest einem Pufferplatz vorgesehen ist, an welchem ein zweiter Zielbehälter nach dem Kommissionieren gepuffert werden kann. Dies ermöglicht zum Einen den Abtransport des zweiten Quellbehälters unmittelbar nachdem die Auftragszeile abgearbeitet wurde und keine weitere Ware aus dem genannten zweiten Quellbehälter zu diesem Auftrag benötigt wird, und zum Anderen den Abtransport des zweiten Zielbehälters unmittelbar nachdem die Auftragszeile abgearbeitet wurde und keine weitere Ware in den genannten zweiten Zielbehälter zu diesem Auftrag benötigt wird. Dadurch wird eine hohe Förderleistung an der Quellbehälter-Fördertechnik und Zielbehälter-Fördertechnik erreicht.

Zum besseren Verständnis der Erfindung wird diese anhand der nachfolgenden Figuren näher erläutert.

Es zeigen jeweils in stark vereinfachter, schematischer Darstellung:
- Fig. 1: einen Ausschnitt von einem Lager- und Kommissioniersystem mit einem Lagerbereich und mehreren Kommissionierstationen;
- Fig. 2: eine Kommissionierstation zum automatisierten Kommissionieren von Waren und einen Ausschnitt von einem Quellbehälter-Verteilsystem und einem Zielbehälter-Verteilsystem, in perspektivischer Ansicht;
- Fig. 3: eine Quellbehälter-Fördertechnik und Zielbehälter-Fördertechnik der Kommissionierstation und einen Ausschnitt von einem Quellbehälter-Verteilsystem und einem Zielbehälter-Verteilsystem, in Draufsicht;
- Fig. 4: eine Quellbehälter-Fördertechnik und Zielbehälter-Fördertechnik der Kommissionierstation, in Draufsicht;
- Fig. 5a bis 5m: eine Sequenzfolge von Verfahrensschritten für die Bearbeitung einer Anzahl von Aufträgen und die Bereitstellung der Quellbehälter und Zielbehälter an der Kommissionierstation gemäß einer ersten Ausführung, in Draufsicht;
- Fig. 6a bis 6e: eine Sequenzfolge von Verfahrensschritten für die Bearbeitung einer Anzahl von Aufträgen und die Bereitstellung der Quellbehälter und Zielbehälter an der Kommissionierstation gemäß einer zweiten Ausführung, in Draufsicht;
- Fig. 7: eine Kombination aus einer Kommissionierstation mit automatischer Kommissionierung und einer Kommissionierstation mit manueller Kommissionierung;
- Fig. 8: eine Kommissionierstation mit einem Portalroboter, an der ein Quellbehälter bereitgestellt ist, schräg von vorne gesehen;
- Fig. 9: die Kommissionierstation aus Fig. 8 schräg von hinten gesehen;
- Fig. 10: den Portalroboter aus Fig. 8 mit nach unten ausgefahrener Greifeinheit;
- Fig. 11: den Portalroboter aus Fig. 10 schräg von hinten gesehen;
- Fig. 12a: eine Detailansicht des Portalarms mit der im unteren Bereich angeordneten Greifeinheit schräg von vorne gesehen;
- Fig. 12b: den Portalarm aus Fig. 12a schräg von hinten gesehen;
- Fig. 13a: den Portalarm aus Fig. 12a mit einer in unterschiedliche Schwenkstellungen (beispielwiese ± 45°) bewegten Greifeinheit von links gesehen;
- Fig. 13b: den Portalarm aus Fig. 13a von rechts gesehen und
- Fig. 14: den abgeflachten Portalarm, der nahe an einer Behälterwand in einen Behälter eingetaucht ist.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

In der Fig. 1 ist ein Lager- und Kommissioniersystem zum Kommissionieren von Waren gezeigt, umfassend einen Lagerbereich 1 und eine oder mehreren Kommissionierstationen 2 zum Kommissionieren von Waren mit einem Robotersystem, einem Quellbehälter-Verteilsystem 3 und einem Zielbehälter-Verteilsystem 4.

Unter einer "Ware" wird im Rahmen der Erfindung insbesondere ein einzeln handhabbares Objekt beziehungsweise eine einzeln handhabbare Gruppe von Objekten verstanden.

Der beispielhaft gezeigte Lagerbereich 1 dient vornehmlich der Bereitstellung einer Vielzahl von Quellbehältern 5, in welchen in Fig. 2 dargestellte Waren A, B usw., nämlich (Lager)Artikel enthalten sind. Die Quellbehälter 5 können jeweils einen einzigen Warentyp enthalten. Beispielsweise enthält ein erster Quellbehälter 5a die Ware A, ein zweiter Quellbehälter 5b die Ware B usw. Andererseits können die Quellbehälter 5 durch Trennwände in mehrere Aufnahmefächer unterteilt werden und unterschiedliche Warentypen aufnehmen, wobei im ersten Aufnahmefach eine Ware A und im zweiten Aufnahmefach eine Ware B aufgenommen werden kann. Durch segmentierte Quellbehälter 5 kann das Sortiment an Waren im Lagerbereich 1 erhöht werden.

Grundsätzlich ist es auch denkbar, dass die Zielbehälter durch Trennwände in mehrere Aufnahmefächer unterteilt werden und unterschiedliche Aufträge aufnehmen, wobei im ersten Aufnahmefach ein erster Auftrag mit einem oder mehreren Waren und im zweiten Aufnahmefach ein zweiter Auftrag mit einem oder mehreren Waren aufgenommen werden kann. Die Zielbehälter können aber auch ohne Trennwände gestaltet sein und unterschiedliche Aufträge aufnehmen. Durch Segmentierung der Zielbehälter kann der nachfolgend beschriebene Sortierpuffer verkleinert werden, daher die Anzahl an Sortierplätzen und Pufferplätzen reduziert werden.

Die Erfindung ist nicht auf Behälter eingeschränkt zu verstehen. Vielmehr können auch andere Ladehilfsmittel, wie Tablare, Kartons und dg1. verwendet werden. Der Quellbehälter entspricht einem Quellladehilfsmittel und der Zielbehälter entspricht einem Zielladehilfsmittel.

Der Lagerbereich 1 umfasst bevorzugt ein automatisiert betriebenes Lager. Der Lagerbereich 1 umfasst nach gezeigtem Ausführungsbeispiel parallel angeordnete Lagerregale 6 und eine zwischen den Lagerregalen 6 vorgesehene Regalgasse 7. Jedes Lagerregal 6 bildet in übereinander liegenden Regalebenen nebeneinander eine Vielzahl von Lagerplätzen 8 aus, auf denen die Quellbehälter 5 gelagert werden. Im gezeigten Beispiel sind zwei Lagerregale 6 dargestellt. Im Rahmen der Erfindung können aber auch mehr als zwei Lagerregale 6 vorgesehen werden, wobei zwischen benachbarten Lagerregalen 6 jeweils eine Regalgasse 7 ausgebildet ist.

Das Quellbehälter-Verteilsystem 3 dient dem Transport von Quellbehältern 5 zwischen dem Lagerbereich 1 und der/den Kommissionierstation(en) 2. Das Quellbehälter-Verteilsystem 3 ist bevorzugt ein automatisiert betriebenes Quellbehälter-Verteilsystem. Es kann die Auslagerung von Quellbehältern 5 aus dem Lagerbereich 1 automatisiert und der Transport der Quellbehälter 5 vom Lagerbereich 1 zur Kommissionierstation 2 automatisiert erfolgen.

Das Quellbehälter-Verteilsystem 3 umfasst beispielsweise ein oder mehrere Lagerbediengeräte 9 und eine Quellbehälter-Fördertechnik zwischen dem Lagerbereich 1 und den Kommissionierstationen 2, um Quellbehälter 5 vom Lagerbereich 1 zu den betreffenden Kommissionierstationen 2 zu transportieren und um Quellbehälter 5 von den Kommissionierstationen 2 zu dem Lagerbereich 1 zu transportieren.

Die Quellbehälter-Fördertechnik zwischen dem Lagerbereich 1 und den Kommissionierstationen 2 kann beispielweise eine erste Fördervorrichtung 10 zum Antransport von Quellbehältern 5 zum Lagerbereich 1 und eine zweite Fördervorrichtung 11 zum Abtransport von Quellbehältern 5 vom Lagerbereich 1 und eine dritte Fördervorrichtung 12 zum Antransport von Quellbehältern 5 zur Kommissionierstation 2 und eine vierte Fördervorrichtung 13 zum Abtransport von Quellbehältern 5 von der Kommissionierstation 2 und schließlich eine fünfte Fördervorrichtung 14 zum Transport von Quellbehältern 5 zwischen den Fördervorrichtungen 10, 11, 12, 13 aufweisen. Die fünfte Fördervorrichtung 14 umfasst Ein- und/oder Ausschleusvorrichtungen 15, um die Quellbehälter 5 zwischen den Fördervorrichtungen 10 bis 14 zu transportieren. Die fünfte Fördervorrichtung 14 ist beispielweise eine geschlossene Förderschleife. Die Ein- und/oder Ausschleusvorrichtung 15 ist beispielsweise durch einen Riemenumsetzer gebildet.

Das Quellbehälter-Verteilsystem 3 kann zusätzlich eine Übergabevorrichtung 16 zum Transport von Quellbehältern 5 zwischen dem Lagerbediengerät 9 und der Quellbehälter-Fördertechnik umfassen.

Werden im Lagerbereich 1 Einebenenregalbediengeräte als Lagerbediengerät 9 eingesetzt, so sind in übereinander liegenden (horizontalen) Fahrebenen paarweise Führungsbahnen 17 angeordnet. Die Führungsbahnen 17 sind vorzugsweise an den benachbarten Lagerregalen 6 befestigt. Die von einer Steuereinheit unabhängig voneinander ansteuerbaren Einebenenregalbediengeräte (Shuttles) sind entlang der Regalgasse 7 verfahrbar und können in den übereinander liegenden Fahrebenen vor den Lagerplätzen 8 bewegt werden.

Das Lagerbediengerät 9 umfasst eine Ladeplattform und eine Transportvorrichtung 18 (Lastaufnahmevorrichtung). Die Transportvorrichtung 18 kann die Quellbehälter 5 zwischen der Ladeplattform und dem Lagerplatz 8 manipulieren, nämlich Quellbehälter 5 in die zu beiden Seiten des Lagerbediengerätes 9 angeordneten Lagerregale 6 einlagern bzw. Quellbehälter 5 aus den zu beiden Seiten des Lagerbediengerätes 9 angeordneten Lagerregale 6 auslagern. Es kann vorgesehen werden, dass jeder Regalebene zumindest ein Lagerbediengerät 9 zugeordnet ist. Somit bedient ein Lagerbediengerät 9 über die Transportvorrichtung 18 eine Regalebene.

Im Detail wird das Einlagern und Auslagern von Quellbehältern 5 mittels der Lagerbediengeräte 9, der Übergabevorrichtung 16 und den Fördervorrichtungen 10, 11 in der WO 2013/090970 A2 beschrieben.

Die Übergabevorrichtung 16 umfasst eine erste Puffervorrichtung 19a, eine erste Hebevorrichtung 20a, eine zweite Puffervorrichtung 19b und eine zweite Hebevorrichtung 20b.

Die Puffervorrichtung 19a umfasst je Fahrebene Bereitstellvorrichtungen für das Zwischenpuffern eines oder mehrerer einzulagernder Quellbehälter 5 und die Puffervorrichtung 19b umfasst je Fahrebene Bereitstellvorrichtungen für das Zwischenpuffern eines oder mehrerer auszulagernder Quellbehälter 5. Auch andere Ausführungsvarianten sind möglich, wie in der WO 2013/090970 A2 beschrieben.

Die Hebevorrichtungen 20a, 20b sind ortsfest aufgestellt und umfassen jeweils eine über einen Hubantrieb heb- und senkbare Transfervorrichtung. Bevorzugt sind die Transfervorrichtungen jeweils auf einem Vertikalmast gelagert und umfassen jeweils eine antreibbare Fördervorrichtung.

Das Quellbehälter-Verteilsystem 3 kann eine optionale Drehstation 23 umfassen, mit welcher die aus der fünften Fördervorrichtung 14 ausgeschleusten Quellbehälter 5 von einer Querausrichtung in eine Längsausrichtung gedreht werden.

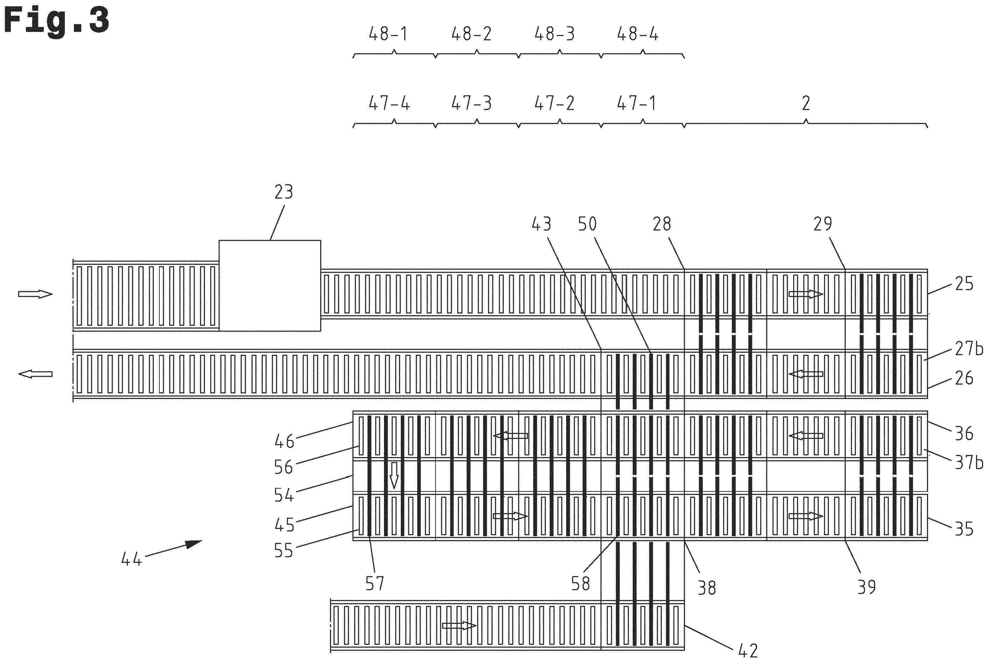

Wie in Fig. 3 im Detail gezeigt, umfasst die Kommissionierstation 2 eine Quellbehälter-Fördertechnik zum automatisierten Transport der Quellbehälter 5, insbesondere zum Antransport von Quellbehältern 5 zu einer ersten Andienungsvorrichtung 24a und einer zweiten Andienungsvorrichtung 24b und zum Abtransport von Quellbehältern von der ersten Andienungsvorrichtung 24a und der zweiten Andienungsvorrichtung 24b.

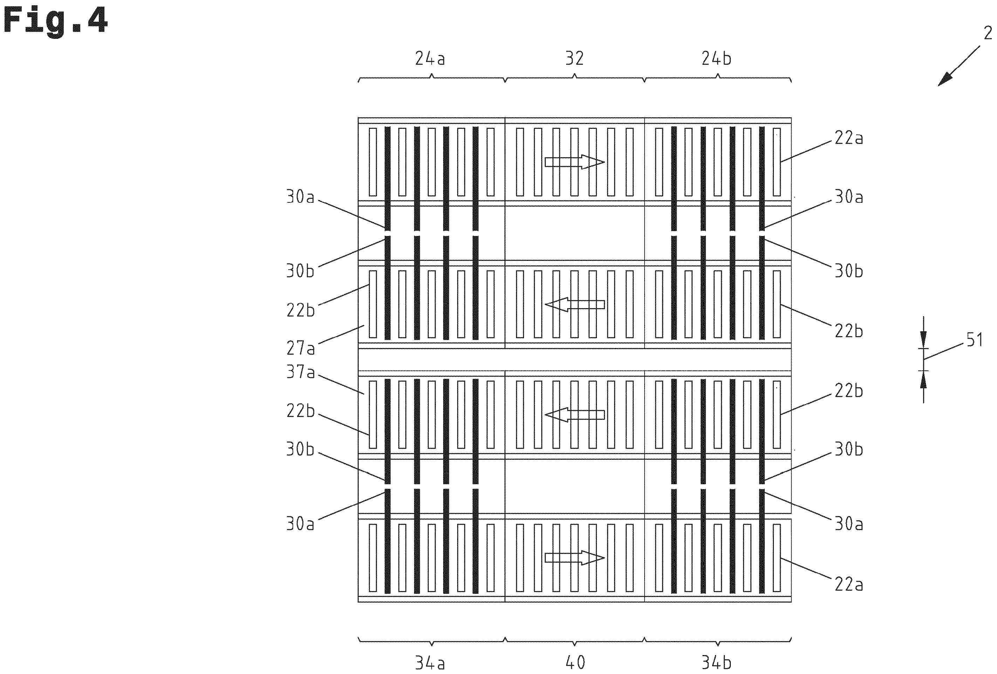

Die Quellbehälter-Fördertechnik der Kommissionierstation 2, wie sie in den Fig. 3 und 4 dargestellt ist, umfasst eine erste Fördervorrichtung 25 zum Antransport von Quellbehältern 5a, 5b, die erste Andienungsvorrichtung 24a zur Bereitstellung eines ersten Quellbehälters 5a, eine zweite Andienungsvorrichtung 24b zur Bereitstellung eines zweiten Quellbehälters 5b und eine zweite Fördervorrichtung 26 zum Abtransport der Quellbehälter 5a, 5b von der ersten Andienungsvorrichtung 24a und zweiten Andienungsvorrichtung 24b. Die erste Fördervorrichtung 25 und zweite Fördervorrichtung 26 umfassen jeweils zumindest ein Fördermittel 22a, 22b. Das Fördermittel 22a ist angetrieben und mit einem Antriebsmotor gekuppelt. Das Fördermittel 22a weist beispielweise an einem Rahmen drehbare gelagerte Förderrollen auf. Das Fördermittel 22b ist angetrieben und mit einem Antriebsmotor gekuppelt. Das Fördermittel 22b weist beispielweise an einem Rahmen drehbare gelagerte Förderrollen auf. Nach gezeigter Ausführung sind die erste Fördervorrichtung 25 und zweite Fördervorrichtung 26 bevorzugt durch einen Rollenförderer gebildet und umfassen eine Vielzahl von Förderrollen, wovon zumindest einige von einem Antriebsmotor angetrieben sind.

Die erste Andienungsvorrichtung 24a mit dem ersten Entnahmeplatz 27a und die zweite Andienungsvorrichtung 24b mit dem zweiten Entnahmeplatz 27b sind entlang der zweiten Fördervorrichtung 26 und in Förderrichtung (Pfeil) hintereinander angeordnet sind.

Die erste Andienungsvorrichtung 24a ist mit der ersten Fördervorrichtung 25 fördertechnisch verbunden und umfasst einen ersten Entnahmeplatz 27a. Bevorzugt ist die erste Andienungsvorrichtung 24a über eine erste Umsetzvorrichtung 28 mit der ersten Fördervorrichtung 25 fördertechnisch verbunden. Ein erster Quellbehälter 5a wird von der ersten Fördervorrichtung 25 antransportiert und anschließend durch die erste Umsetzvorrichtung 28 zur ersten Andienungsvorrichtung 24a auf den ersten Entnahmeplatz 27a transportiert. Sodann wird der erste Quellbehälter 5a am ersten Entnahmeplatz 27a (stehend) bereitgestellt werden.

Die zweite Andienungsvorrichtung 24b ist mit der ersten Fördervorrichtung 25 fördertechnisch verbunden und umfasst einen zweiten Entnahmeplatz 27b. Bevorzugt ist die zweite Andienungsvorrichtung 24b über eine zweite Umsetzvorrichtung 29 mit der ersten Fördervorrichtung 25 fördertechnisch verbunden. Ein zweiter Quellbehälter 5b wird von der ersten Fördervorrichtung 25 antransportiert und anschließend durch die zweite Umsetzvorrichtung 29 zur zweiten Andienungsvorrichtung 24b auf den zweiten Entnahmeplatz 27b transportiert. Sodann wird der zweite Quellbehälter 5b am zweiten Entnahmeplatz 27b (stehend) bereitgestellt werden.

Die erste Umsetzvorrichtung 28 und zweite Umsetzvorrichtung 29 umfassen nach gezeigter Ausführung jeweils ein erstes Fördermittel 30a und ein zweites Fördermittel 30b, die beispielsweise durch einen ersten Riemenumsetzer und zweiten Riemenumsetzer gebildet sind. Derartige Riemenumsetzer (und dies gilt auch für die an anderer Stelle genannten Riemenumsetzer) weisen mit einem Antriebsmotor gekuppelte Förderriemen auf, welche an einem Hubwerk gelagert sind und die Förderebene ausbilden.

Die Förderriemen des ersten Riemenumsetzers können über das Hubwerk zwischen einer abgesenkten Ruhestellung, in welcher die Förderriemen unterhalb der Förderebene der ersten Fördervorrichtung 25 abgesenkt sind und ein Quellbehälter 5b von der ersten Fördervorrichtung 25 zur zweiten Umsetzvorrichtung 29 transportiert wird, und einer angehobenen Förderstellung, in welcher ein Quellbehälter 5a, 5b von der ersten Fördervorrichtung 25 abgehoben und über die Förderriemen quer zur ersten Fördervorrichtung 25 gefördert wird, verstellt werden.

Die Förderriemen des zweiten Riemenumsetzers können über das Hubwerk zwischen einer angehobenen Förderstellung, in welcher ein Quellbehälter 5a, 5b vom ersten Riemenumsetzer übernommen und über die Förderriemen quer zur zweiten Fördervorrichtung 26 gefördert wird, und einer abgesenkten Ruhestellung, in welcher die Förderriemen unterhalb der Förderebene der zweiten Fördervorrichtung 26 abgesenkt sind und ein Quellbehälter 5a, 5b auf der zweiten Fördervorrichtung 26 abgesetzt wird, verstellt werden.

Die beschriebene Ausführung der ersten Umsetzvorrichtung 28 und zweiten Umsetzvorrichtung 29 sind keineswegs einschränkend zu verstehen. Die erste Umsetzvorrichtung 28 und zweite Umsetzvorrichtung 9 ermöglichen eine Querversetzung eines auf der ersten Fördervorrichtung 25 antransportierten ersten Quellbehälters 5a und eine Querversetzung eines auf der ersten Fördervorrichtung 25 antransportierten zweiten Quellbehälters 5b, um den ersten Quellbehälter 5a zur ersten Andienungsvorrichtung 24a und den zweiten Quellbehälter 5a zur zweiten Andienungsvorrichtung 24b zu transportieren.

In einer bevorzugten Ausführung sind die erste Andienungsvorrichtung 24a mit dem ersten Entnahmeplatz 27a und die zweite Andienungsvorrichtung 24b mit dem zweiten Entnahmeplatz 27b an der zweiten Fördervorrichtung 26 zum Abtransport von Quellbehältern 5a, 5b ausgebildet. Konkret sind die erste Andienungsvorrichtung 24a mit dem ersten Entnahmeplatz 27a und die zweite Andienungsvorrichtung 24b mit dem zweiten Entnahmeplatz 27b durch Förderabschnitte an der zweiten Fördervorrichtung 26 zum Abtransport von Quellbehältern 5a, 5b gebildet. Diese Förderabschnitte umfassen jeweils ein von der Steuereinheit 31 (Fig. 1) ansteuerbares und antreibbares Fördermittel 22b auf. Das Fördermittel 22b umfasst eine Vielzahl von Förderrollen, wovon zumindest einige von einem Antriebsmotor angetrieben sind.

Das Fördermittel 22b eines ersten Förderabschnittes wird von der Steuereinheit 31 angesteuert und angetrieben, um einen ersten Quellbehälter 5a von ersten Andienungsvorrichtung 24a durch die zweite Fördervorrichtung 26 nach der Abarbeitung einer Auftragszeile zu einem ersten Auftrag abzutransportieren. Ebenso wird das Fördermittel 22b eines zweiten Förderabschnittes von der Steuereinheit 31 angesteuert und angetrieben, um einen zweiten Quellbehälter 5b von zweiten Andienungsvorrichtung 24b durch die zweite Fördervorrichtung 26 einer Auftragszeile zu einem zweiten Auftrag abzutransportieren.

Wie in Fig. 4 eingetragen, ist zwischen der ersten Andienungsvorrichtung 24a mit dem ersten Entnahmeplatz 27a und der zweiten Andienungsvorrichtung 24b mit dem zweiten Entnahmeplatz 27b eine Puffervorrichtung 32 mit zumindest einem Pufferplatz vorgesehen ist, an welchem ein zweiter Quellbehälter 5b nach dem Kommissionieren (nach der Abarbeitung einer Auftragszeile zu einem zweiten Auftrag) gepuffert werden kann. Die Puffervorrichtung 32 ist bevorzugt an der zweiten Fördervorrichtung 26 zum Abtransport von Quellbehältern 5a, 5b ausgebildet.

Konkret ist die Puffervorrichtung 32 mit dem zumindest einen Pufferplatz durch einen Förderabschnitt an der zweiten Fördervorrichtung 26 zum Abtransport von Quellbehältern 5a, 5b gebildet. Dieser Förderabschnitt umfasst ein von der Steuereinheit 31 ansteuerbare und antreibbares Fördermittel 22b (nicht eingetragen). Das Fördermittel 22b umfasst eine Vielzahl von Förderrollen, wovon zumindest einige von einem Antriebsmotor angetrieben sind. Das Fördermittel 22b des genannten Förderabschnittes wird von der Steuereinheit 31 angesteuert und angetrieben, um einen zweiten Quellbehälter 5b von der zweiten Andienungsvorrichtung 24b auf den Pufferplatz anzutransportieren und einen zweiten Quellbehälter 5b vom Pufferplatz abzutransportieren. Der zweite Quellbehälter 5b passiert die erste Andienungsvorrichtung 24a und wird von der zweiten Fördervorrichtung 26 abtransportiert.

Die erste Fördervorrichtung 25 und die zweite Fördervorrichtung 26 weisen entgegengesetzte Förderrichtung auf, wie in den Fig. 3 und 4 mit den Pfeilen angedeutet. Bevorzugt sind die Fördermittel 22a der ersten Fördervorrichtung 25 unidirektional angetrieben und die Fördermittel 22b der zweiten Fördervorrichtung 26 unidirektional angetrieben.

Die Kommissionierstation 2 ist an die Quellbehälter-Fördertechnik des Quellbehälter-Verteilsystems angeschlossen. Konkret schließt die Kommissionierstation 2 mit der ersten Fördervorrichtung 25 an die dritte Fördervorrichtung 12 und mit der zweiten Fördervorrichtung 26 an die vierte Fördervorrichtung 13 an.

Wie in den Fig. 3 und 4 im Detail gezeigt, umfasst die Kommissionierstation 2 eine Zielbehälter-Fördertechnik zum automatisierten Transport der Zielbehälter 33, insbesondere zum Antransport von Zielbehältern 33 zu einer ersten Andienungsvorrichtung 34a und einer zweiten Andienungsvorrichtung 34b und zum Abtransport von Zielbehältern 33 von der ersten Andienungsvorrichtung 34a und der zweiten Andienungsvorrichtung 34b.

Die Zielbehälter-Fördertechnik der Kommissionierstation 2 umfasst eine erste Fördervorrichtung 35 zum Antransport von Zielbehältern 33, die erste Andienungsvorrichtung 34a zur Bereitstellung eines ersten Zielbehälters 33a, eine zweite Andienungsvorrichtung 34b zur Bereitstellung eines zweiten Zielbehälters 33b und eine zweite Fördervorrichtung 36 zum Abtransport der Zielbehälter 33 von der ersten Andienungsvorrichtung 34a und zweiten Andienungsvorrichtung 34b.

Die erste Fördervorrichtung 35 und zweite Fördervorrichtung 36 umfassen jeweils zumindest ein Fördermittel 22a, 22b. Das Fördermittel 22a ist angetrieben und mit einem Antriebsmotor gekuppelt. Das Fördermittel 22a weist beispielweise an einem Rahmen drehbare gelagerte Förderrollen auf. Das Fördermittel 22b ist angetrieben und mit einem Antriebsmotor gekuppelt. Das Fördermittel 22b weist beispielweise an einem Rahmen drehbare gelagerte Förderrollen auf. Nach gezeigter Ausführung sind die erste Fördervorrichtung 35 und zweite Fördervorrichtung 36 bevorzugt durch einen Rollenförderer gebildet und umfassen eine Vielzahl von Förderrollen, wovon zumindest einige von einem Antriebsmotor angetrieben sind.

Die erste Andienungsvorrichtung 34a mit dem ersten Beladeplatz 37a und die zweite Andienungsvorrichtung 34b mit dem zweiten Beladeplatz 37b sind entlang der zweiten Fördervorrichtung 36 und in Förderrichtung (Pfeil) hintereinander angeordnet sind.

Die erste Andienungsvorrichtung 34a ist mit der ersten Fördervorrichtung 35 fördertechnisch verbunden und umfasst einen ersten Beladeplatz 37a. Bevorzugt ist die erste Andienungsvorrichtung 34a über eine erste Umsetzvorrichtung 38 mit der ersten Fördervorrichtung 35 fördertechnisch verbunden. Ein erster Zielbehälter 33a wird von der ersten Fördervorrichtung 35 antransportiert und anschließend durch die erste Umsetzvorrichtung 38 zur ersten Andienungsvorrichtung 34a auf den ersten Beladeplatz 37a transportiert. Sodann wird der erste Zielbehälter 33a am ersten Beladeplatz 37a (stehend) bereitgestellt werden.

Die zweite Andienungsvorrichtung 34b ist mit der ersten Fördervorrichtung 35 fördertechnisch verbunden und umfasst einen zweiten Beladeplatz 37b. Bevorzugt ist die zweite Andienungsvorrichtung 34b über eine zweite Umsetzvorrichtung 39 mit der ersten Fördervorrichtung 35 fördertechnisch verbunden. Ein zweiter Zielbehälter 33b wird von der ersten Fördervorrichtung 35 antransportiert und anschließend durch die zweite Umsetzvorrichtung 39 zur zweiten Andienungsvorrichtung 34b auf den zweiten Beladeplatz 37b transportiert. Sodann wird der zweite Zielbehälter 33b am zweiten Beladeplatz 37b (stehend) bereitgestellt werden.

Die erste Umsetzvorrichtung 38 und zweite Umsetzvorrichtung 39 umfassen nach gezeigter Ausführung jeweils ein erstes Fördermittel 30a und ein zweites Fördermittel 30b, die beispielsweise durch einen ersten Riemenumsetzer und zweiten Riemenumsetzer gebildet sind. Derartige Riemenumsetzer (und dies gilt auch für die an anderer Stelle genannten Riemenumsetzer) weisen mit einem Antriebsmotor gekuppelte Förderriemen auf, welche an einem Hubwerk gelagert sind und die Förderebene ausbilden.

Die Förderriemen des ersten Riemenumsetzers können über das Hubwerk zwischen einer abgesenkten Ruhestellung, in welcher die Förderriemen unterhalb der Förderebene der ersten Fördervorrichtung 35 abgesenkt sind und ein Zielbehälter 33b von der ersten Fördervorrichtung 35 zur zweiten Umsetzvorrichtung 39 transportiert wird, und einer angehobenen Förderstellung, in welcher ein Zielbehälter 33a, 33b von der ersten Fördervorrichtung 35 abgehoben und über die Förderriemen quer zur ersten Fördervorrichtung 35 gefördert wird, verstellt werden.

Die Förderriemen des zweiten Riemenumsetzers können über das Hubwerk zwischen einer angehobenen Förderstellung, in welcher ein Zielbehälter 33a, 33b vom ersten Riemenumsetzer übernommen und über die Förderriemen quer zur zweiten Fördervorrichtung 36 gefördert wird, und einer abgesenkten Ruhestellung, in welcher die Förderriemen unterhalb der Förderebene der zweiten Fördervorrichtung 36 abgesenkt sind und ein Zielbehälter 33a, 33b auf der zweiten Fördervorrichtung 36 abgesetzt wird, verstellt werden.

Die beschriebene Ausführung der ersten Umsetzvorrichtung 38 und zweiten Umsetzvorrichtung 39 sind keineswegs einschränkend zu verstehen. Die erste Umsetzvorrichtung 38 und zweite Umsetzvorrichtung 39 ermöglichen eine Querversetzung eines auf der ersten Fördervorrichtung 35 antransportierten ersten Zielbehälters 33a und eine Querversetzung eines auf der ersten Fördervorrichtung 35 antransportierten zweiten Zielbehälters 33b, um den ersten Zielbehälter 5a zur ersten Andienungsvorrichtung 34a und den zweiten Zielbehälter 33a zur zweiten Andienungsvorrichtung 34b zu transportieren.

In einer bevorzugten Ausführung sind die erste Andienungsvorrichtung 34a mit dem ersten Beladeplatz 37a und die zweite Andienungsvorrichtung 34b mit dem zweiten Beladeplatz 37b an der zweiten Fördervorrichtung 36 zum Abtransport von Zielbehältern 33a, 33b ausgebildet. Konkret sind die erste Andienungsvorrichtung 34a mit dem ersten Entnahmeplatz 37a und die zweite Andienungsvorrichtung 34b mit dem zweiten Beladeplatz 37b durch Förderabschnitte an der zweiten Fördervorrichtung 36 zum Abtransport von Zielbehältern 33a, 33b gebildet.

Diese Förderabschnitte umfassen jeweils ein von der Steuereinheit 31 (Fig. 1) ansteuerbares und antreibbares Fördermittel 22b. Das Fördermittel 22b umfasst eine Vielzahl von Förderrollen, wovon zumindest einige von einem Antriebsmotor angetrieben sind.

Das Fördermittel 22b eines ersten Förderabschnittes wird von der Steuereinheit 31 angesteuert und angetrieben, um einen ersten Zielbehälter 33a von ersten Andienungsvorrichtung 34a durch die zweite Fördervorrichtung 36 nach Abarbeitung einer Auftragszeile zu einem ersten Auftrag abzutransportieren. Ebenso wird das Fördermittel 22b eines zweiten Förderabschnittes von der Steuereinheit 31 angesteuert und angetrieben, um einen zweiten Zielbehälter 33b von zweiten Andienungsvorrichtung 34b durch die zweite Fördervorrichtung 36 nach Abarbeitung einer Auftragszeile zu einem zweiten Auftrag abzutransportieren.

Wie in Fig. 3 ersichtlich, ist zwischen der ersten Andienungsvorrichtung 34a mit dem ersten Beladeplatz 37a und der zweiten Andienungsvorrichtung 34b mit dem zweiten Beladeplatz 37b eine Puffervorrichtung 40 mit zumindest einem Pufferplatz vorgesehen ist, an welchem ein zweiter Zielbehälter 33b nach dem Kommissionieren (nach Abarbeitung einer Auftragszeile zu einem zweiten Kommissionierauftrag) gepuffert werden kann. Die Puffervorrichtung 40 ist bevorzugt an der zweiten Fördervorrichtung 36 zum Abtransport von Zielbehältern 33a, 33b ausgebildet.

Konkret ist die Puffervorrichtung 40 mit dem zumindest einen Pufferplatz durch einen Förderabschnitt an der zweiten Fördervorrichtung 36 zum Abtransport von Quellbehältern 33a, 33b gebildet. Dieser Förderabschnitt umfasst ein von der Steuereinheit 31 ansteuerbares und antreibbares Fördermittel 22b.

Das Fördermittel 22b umfasst eine Vielzahl von Förderrollen, wovon zumindest einige von einem Antriebsmotor angetrieben sind. Das Fördermittel 22b des genannten Förderabschnittes wird von der Steuereinheit 31 angesteuert und angetrieben, um einen zweiten Zielbehälter 33b von der zweiten Andienungsvorrichtung 34b auf den Pufferplatz anzutransportieren und einen zweiten Zielbehälter 33b vom Pufferplatz abzutransportieren. Der zweite Zielbehälter 33b passiert die erste Andienungsvorrichtung 34a und wird von der zweiten Fördervorrichtung 36 abtransportiert.

Die erste Fördervorrichtung 35 und die zweite Fördervorrichtung 36 weisen entgegengesetzte Förderrichtung auf, wie in den Fig. 3 und 4 mit den Pfeilen angedeutet. Bevorzugt sind die Fördermittel 22a der ersten Fördervorrichtung 35 unidirektional angetrieben und die Fördermittel 22b der zweiten Fördervorrichtung 36 unidirektional angetrieben.

Die Kommissionierstation 2 ist an eine Zielbehälter-Fördertechnik des Zielbehälter-Verteilsystems 4 angeschlossen.

Das Zielbehälter-Verteilsystem 4 dient dem Transport von fertiggestellten Zielbehältern 33 zwischen der/den Kommissionierstation(en) 2 und einem Warenausgang, wie mit dem Pfeil 41 in Fig. 1 angedeutet, oder dem Transport von teilkommissionierten Zielbehältern 33 zwischen einer ersten Kommissionierstation 2 und einer zweiten Kommissionierstation 2. Das Zielbehälter-Verteilsystem 4 dient ferner dem Antransport von leeren Zielbehältern 33 oder teilkommissionierten Zielbehältern 33 zu der/den Kommissionierstation(en) 2. Das Zielbehälter-Verteilsystem 4 ist bevorzugt ein automatisiert betriebenes Zielbehälter-Verteilsystem. Es kann der Transport genannter Zielbehälter 33 automatisiert erfolgen.

Das Zielbehälter-Verteilsystem 4 umfasst eine Zielbehälter-Fördertechnik. Die Zielbehälter-Fördertechnik kann beispielweise eine erste Fördervorrichtung 42 zum Antransport von leeren Zielbehältern 33 und/oder teilkommissionierten Zielbehältern 33 zu der / den betreffenden Kommissionierstation(en) 2 und eine zweite Fördervorrichtung 43 zum Abtransport von teilkommissionierten Zielbehältern 33 bzw. fertiggestellten Zielbehältern 33 von der / den betreffenden Kommissionierstation(en) 2 umfassen. Die erste Fördervorrichtung 42 und zweite Fördervorrichtung 43 umfassen nach gezeigter Ausführung jeweils eine Umsetzvorrichtung.

Wie in Fig. 3 ersichtlich, sind die erste Fördervorrichtung 35 der Kommissionierstation 2 und die erste Fördervorrichtung 42 der Zielbehälter-Fördertechnik fördertechnisch verbunden. Zudem sind die zweite Fördervorrichtung 36 der Kommissionierstation 2 und die zweite Fördervorrichtung 43 der Zielbehälter-Fördertechnik fördertechnisch verbunden.

Optional kann die Zielbehälter-Fördertechnik mit ihrer ersten Fördervorrichtung 42 zum Antransport von leeren Zielbehältern 33 und/oder teilkommissionierten Zielbehältern 33 zu der / den betreffenden Kommissionierstation(en) 2 an einen noch näher zu beschreibenden Sortierpuffer 44 anschließen (wie beispielhaft in Fig. 1 in strichlierte Linien eingetragen), sodass leere Zielbehälter 33 und/oder teilkommissionierte Zielbehälter 33 vorerst in den Sortierpuffer 44 und anschließend gegebenenfalls sortiert zu der / den betreffenden Kommissionierstation(en) 2 transportiert werden. Die erste Fördervorrichtung 42 kann entweder an die noch näher zu beschreibende erste Fördervorrichtung 45 des Sortierpuffers oder an die noch näher zu beschreibende zweite Fördervorrichtung 46 des Sortierpuffers anschließen. Die erste Fördervorrichtung 42 kann im Gegensatz zur Darstellung in Fig. 1 auch an die fünfte Fördervorrichtung 14 anschließen, um leere Zielbehälter 33 und/oder teilkommissionierte Zielbehälter 33 anzutransportieren. Die leeren Zielbehälter 33 und/oder teilkommissionierte Zielbehälter 33 werden auf einen Pufferplatz 47-4 übergeben und danach zu dem ersten Beladeplatz 37a oder zweiten Beladeplatz 37b oder auf einen Sortierplatz 48-1 transportiert.

Die Fördervorrichtung 13 zum Abtransport von Quellbehältern 5 von der Kommissionierstation 2 und die zweite Fördervorrichtung 36 zum Abtransport von beladenen Zielbehältern 33 von der Kommissionierstation 2 sind über eine dritte Fördervorrichtung mit einem Fördermittel 50 fördertechnisch verbunden. Das Fördermittel 50 ist beispielsweise durch einen oben beschriebenen Riemenumsetzer gebildet. Das Fördermittel 50 wird von der Steuereinheit 31 angesteuert, um die beladenen Zielbehälter 33 von der Zielbehälter-Fördertechnik auf die Quellbehälter-Fördertechnik auszuschleusen. Nach gezeigter Ausführung wird aus Platz sparenden Gründen eine einzige Fördervorrichtung 13 zum Abtransport von beladenen Zielbehältern 33 von der Kommissionierstation 2 und zum Abtransport von Quellbehältern 5 von der Kommissionierstation 2 verwendet. Es wäre aber auch denkbar, zwei getrennte Fördervorrichtungen zu verwenden.

Demnach ist / sind die Kommissionierstation(en) 2 an die Quellbehälter-Fördertechnik angeschlossen, um Quellbehälter 5 auf einer Fördervorrichtung 12 zu der / den Kommissionierstation(en) 2 anzutransportieren und Quellbehälter 5 auf einer Fördervorrichtung 13 von der / den Kommissionierstation(en) 2 abzutransportieren, und ist / sind die Kommissionierstation(en) 2 an die Zielbehälter-Fördertechnik angeschlossen, um leere / teilkommissionierte Zielbehälter 33 auf einer Fördervorrichtung 42 zu der / den Kommissionierstation(en) 2 anzutransportieren und teilkommissionierte / fertig kommissionierte Zielbehälter 33 auf einer Fördervorrichtung 13, 30 von der / den Kommissionierstation(en) 2 abzutransportieren.

Eine besonders vorteilhafte Ausführung ergibt sich, wenn die zweite Fördervorrichtung 26 zum Abtransport von Quellbehältern 5a, 5b und die zweite Fördervorrichtung 36 zum Abtransport von Zielbehältern 33a, 33b parallel angeordnet sind. Die erste Andienungsvorrichtung 24a mit dem ersten Entnahmeplatz 27a und die erste Andienungsvorrichtung 34a mit dem ersten Beladeplatz 37a sind einander gegenüberliegend angeordnet. Insbesondere ist die erste Andienungsvorrichtung 34a mit dem ersten Beladeplatz 37a im Wesentlichen gegenüber einer Symmetrieachse gespiegelt zu der ersten Andienungsvorrichtung 24a mit dem ersten Entnahmeplatz 27a angeordnet. Die Symmetrieachse verläuft parallel zur Förderrichtung der zweiten Fördervorrichtungen 26, 36.

Die erste Andienungsvorrichtung 24b mit dem zweiten Entnahmeplatz 27b und die zweite Andienungsvorrichtung 34b mit dem zweiten Beladeplatz 27b sind einander gegenüberliegend angeordnet. Insbesondere ist die zweite Andienungsvorrichtung 34b mit dem zweiten Beladeplatz 37b im Wesentlichen gegenüber einer Symmetrieachse gespiegelt zu der ersten Andienungsvorrichtung 24b mit dem ersten Entnahmeplatz 27b angeordnet. Die Symmetrieachse verläuft parallel zur Förderrichtung der zweiten Fördervorrichtungen 26, 36.

Besonders vorteilhaft ist auch, dass die zweite Fördervorrichtung 26 zum Abtransport von Quellbehältern 5a, 5b und die zweite Fördervorrichtung 36 zum Abtransport von Zielbehältern 33a, 33b in einem Abstand 51 von maximal 400 mm angeordnet sind.

Wie in Fig. 2 ersichtlich, bilden die erste Andienungsvorrichtung 24a mit dem ersten Entnahmeplatz 27a und die erste Andienungsvorrichtung 34a mit dem ersten Beladeplatz 37a jeweils eine (horizontale) Andienungsebene 52a, 53a auf demselben Höhenniveau ausbilden. Ebenso bilden die zweite Andienungsvorrichtung 24b mit dem zweiten Entnahmeplatz 27b und die zweite Andienungsvorrichtung 34b mit dem zweiten Beladeplatz 37b jeweils eine (horizontale) Andienungsebene 52b, 53b auf demselben Höhenniveau ausbilden. Die Andienungsebenen 52a, 53a und Andienungsebenen 52b, 53b liegen bevorzugt auf demselben Höhenniveau.

Wie in den Fig. 1 und 3 ersichtlich, schließt die Kommissionierstation 2 an den Sortierpuffer 44 an, der dazu ausgebildet ist, die Zielbehälter 33 in einer Reihenfolge sortiert an dem ersten Beladeplatz 37a und zweiten Beladeplatz 37b bereitzustellen. Die Reihenfolge der Zielbehälter 33 wird abhängig von der Reihenfolge, in welcher die Quellbehälter 5 auf dem ersten Entnahmeplatz 27a und zweiten Entnahmeplatz 27b bereitgestellt werden, bestimmt. Die Erfassung der Reihenfolge der Quellbehälter 5 erfolgt durch die Steuereinheit 31, wobei an sich bekannte Wegeverfolgungssysteme (Tracking System) zum Einsatz kommen, welche den Aufenthaltsort jedes Quellbehälters 5 entlang dem Transportweg bestimmen können, oder durch eine geeignete Sensorik entlang dem Transportweg.

Der Sortierpuffer 44 ist ein automatisiert betriebener Sortierpuffer. Der Transport der Zielbehälter 33 im Sortierpuffer 44 (insbesondere zwischen den Puffer- und Sortierplätzen 47, 48) und die Sortierung der Zielbehälter 33 durch den Sortierpuffer 44 erfolgt automatisiert.

Der Sortierpuffer 44 umfasst auf einer ersten Fördervorrichtung 45 in einer Abgaberichtung (Pfeil von links nach rechts) hintereinander angeordnete Pufferplätze 47 und auf einer zweiten Fördervorrichtung 46 in einer Rückführrichtung (Pfeil von rechts nach links) hintereinander angeordnete Sortierplätze 48 und die Pufferplätzen 47 mit den Sortierplätze 48 verbindende dritte Fördervorrichtungen 54. Nach einer bevorzugten Ausführung sind die erste Fördervorrichtung 45 und zweite Fördervorrichtung 46 parallel angeordnet, während die dritten Fördervorrichtungen 54 senkrecht zu der ersten Fördervorrichtung 45 / zweiten Fördervorrichtung 46 angeordnet sind. Die Abgaberichtung der angeforderten Zielbehälter 33 auf der ersten Fördervorrichtung 45 und die Rückführrichtung der retournierten Zielbehälter 33 auf der zweiten Fördervorrichtung 46 verlaufen in entgegengesetzter Richtung.

Die erste Fördervorrichtung 45 und die zweite Fördervorrichtung 46 sind mit der ersten Fördervorrichtung 35 und zweiten Fördervorrichtung 36 fördertechnisch verbunden, um die Zielbehälter 33 zur Bearbeitung von unterschiedlichen Auftragszeilen zu zumindest einem Auftrag vom Sortierpuffer 44 zu dem ersten Beladeplatz 34a oder zweiten Beladeplatz 34b anzufördern und vom ersten Beladeplatz 34a oder zweiten Beladeplatz 34b 35 zu dem Sortierpuffer 44 abzufördern.

Die erste Fördervorrichtung 45 und zweite Fördervorrichtung 46 weisen jeweils Fördermittel 55, 56 auf. Die Zielbehälter 33 werden zur Bearbeitung von Aufträgen auf der ersten Fördervorrichtung 45 mittels der Fördermittel 55 in der Abgaberichtung und sortiert zu dem ersten Beladeplatz 34a oder zweiten Beladeplatz 34b transportiert. Die Fördermittel 55 bildet eine horizontale Förderebene aus. Andererseits können Zielbehälter 33 nach einer Bearbeitung von Aufträgen und welche noch Waren zu Aufträgen benötigen, auf der zweiten Fördervorrichtung 46 mittels der Fördermittel 56 in der Rückführrichtung von dem ersten Beladeplatz 34a oder zweiten Beladeplatz 34b zu den Sortierplätzen 48 transportiert werden. Die Fördermittel 56 bildet eine horizontale Förderebene aus.

Die Fördermittel 55, 56 weisen jeweils beispielweise an einem Rahmen drehbare gelagerte Förderrollen auf und bilden jeweils eine Rollenbahn aus. Den Pufferplätzen 47 ist zumindest ein Fördermittel 55 zum Transport der Zielbehälter 33 in Abgaberichtung und den Sortierplätzen 48 ist zumindest ein Fördermittel 56 zum Transport der Zielbehälter 33 in Rückführrichtung zugeordnet. Das Fördermittel 55 ist angetrieben und mit einem ersten Antriebsmotor gekuppelt. Das Fördermittel 56 ist angetrieben und mit einem zweiten Antriebsmotor gekuppelt. Nach gezeigtem Ausführungsbeispiel umfasst jeder Pufferplatz 47 ein Fördermittel 55 mit mehreren Förderrollen, wovon zumindest eine Förderrolle angetrieben und mit einem Antriebsmotor gekuppelt ist. Zudem umfasst jeder Sortierplatz 48 ein Fördermittel 56 mit mehreren Förderrollen, wovon zumindest eine Förderrolle angetrieben und mit einem Antriebsmotor gekuppelt ist.

Die Antriebsmotoren sind mit der Steuereinheit 31 verbunden, und es können die Fördermittel 55, 56 von der Steuereinheit 31 separat angesteuert werden.

Die dritten Fördervorrichtungen 54 verbinden die einander gegenüberliegenden Pufferplätze 47 und Sortierplätze 48, um die Zielbehälter 33 von der Steuereinheit 31 derart zeitlich gesteuert von den Sortierplätzen 48 auf die Pufferplätze 47 abzugeben, dass die Zielbehälter 33b den Sortierpuffer 44 bereits in einer sortierten Reihenfolge verlassen und in dieser sortierten Reihenfolge dem ersten Beladeplatz 34a und zweiten Beladeplatz 34b nacheinander zugeführt werden. Die dritten Fördervorrichtungen 54 weisen jeweils Fördermittel 57, 58 auf. Die Zielbehälter 33 werden zur Bearbeitung von Aufträgen auf der dritten Fördervorrichtung 54 mittels der Fördermittel 57, 58 von den Sortierplätzen 48 auf die Pufferplätze 47 transportiert.

Die Fördermittel 57, 58 bildet eine horizontale Förderebene aus. Das Fördermittel 57, 58 je dritter Fördervorrichtung 54 ist angetrieben und mit einem dritten Antriebsmotor gekuppelt.

Wie aus den Fig. 1 und 3 ersichtlich, können einigen der Pufferplätze 47 und Sortierplätze 48 jeweils ein gemeinsames Fördermittel 57 zugeordnet werden. Anderenfalls können einigen der Pufferplätze 47 und Sortierplätze 48 je Pufferplatz 47 ein Fördermittel 58 und je Sortierplatz 48 ein Fördermittel 58 zugeordnet werden.

Die Fördermittel 57, 58 sind beispielsweise jeweils durch einen Riemenumsetzer gebildet, wie oben beschrieben. Die Förderriemen können über das Hubwerk zwischen einer angehobenen Förderstellung, in welcher ein Zielbehälter 33 von einem Sortierplatz 48 abgehoben und über die Förderriemen auf einen Pufferplatz 47 gefördert wird, und einer abgesenkten Ruhestellung, in welcher die Förderriemen unterhalb der Förderebene der Fördermittel 55, 56 abgesenkt sind und ein Zielbehälter 33 von dem Fördermittel 56 von einem ersten Sortierplatz zu einem zweiten Sortierplatz oder ein Zielbehälter 33 von dem Fördermittel 55 von einem ersten Pufferplatz zu einem zweiten Pufferplatz transportiert wird, verstellt werden.

Das Fördermittel 58 auf dem Sortierplatz 48-4 und das Fördermittel 58 auf dem Pufferplatz 47-1 können bidirektional betrieben werden.

Die Fördermittel 55, 56, 57, 58 werden von der Steuereinheit 31 derart ansteuert, dass die Zielbehälter 33 im Sortierpuffer 44 in eine Reihenfolge sortiert werden, die abhängig von der Reihenfolge in welcher die Quellbehälter 5 auf dem ersten Entnahmeplatz 27a und zweiten Entnahmeplatz 27b bereitgestellt werden, bestimmt wird, und dass ein Quellbehälter 5a, 5b und ein Zielbehälter 33a, 33b zu einem Auftrag in etwa gleichzeitig am ersten / zweiten Entnahmeplatz 27a, 27b und ersten / zweiten Beladeplatz 37a, 37b ankommen.

Die Antriebsmotoren / Stellantriebe sind mit der Steuereinheit 31 verbunden, und es können die Fördermittel 57, 58 von der Steuereinheit 31 separat angesteuert werden.

Wie in Fig. 2 gezeigt, umfasst die Kommissionierstation 2 ein vollautomatisiertes Robotersystem. Das Robotersystem umfasst einen Roboter 60 mit einer relativ gegenüber einer Roboterbasis bewegbaren Greifeinheit 61, mittels welchem Waren A zu einem ersten Auftrag vom ersten Quellbehälter 5a entnommen und in den ersten Zielbehälter 33a abgelegt und Waren B zu einem zweiten Auftrag vom zweiten Quellbehälter 5b entnommen und in den zweiten Zielbehälter 33b abgelegt werden. Es wäre auch denkbar, dass eine Ware A, B zu verschiedenen Aufträgen benötigt wird und der erste Zielbehälter 33a und zweite Zielbehälter 33b bereits bereitgestellt sind. Einerseits kann mittels der Greifeinheit 61 vorerst eine Ware A aus dem ersten Quellbehälter 5a entnommen und in den ersten Zielbehälter 33a abgelegt werden und danach eine Ware A wiederum aus dem ersten Quellbehälter 5a entnommen und in den zweiten Zielbehälter 33b abgelegt werden. Andererseits kann mittels der Greifeinheit 61 vorerst eine Ware B aus dem zweiten Quellbehälter 5b entnommen und in den ersten Zielbehälter 33a abgelegt werden und danach eine Ware B wiederum aus dem zweiten Quellbehälter 5b entnommen und in den zweiten Zielbehälter 33b abgelegt werden.

Ein Arbeitsraum des Roboters 60 ist derart ausgelegt, dass die Greifeinheit 61 auf den ersten Quellbehälter 5a, zweiten Quellbehälter 5b, ersten Zielbehälter 33a und zweiten Zielbehälter 33b zugreifen kann. Die Greifeinheit 61 umfasst vorzugsweise zumindest zwei Vakuum-Sauggreifer, wobei jeder Vakuum-Sauggreifer gesondert ansteuerbar ist. Grundsätzlich kann die die Greifeinheit 61 auch nur einen Vakuum-Sauggreifer umfassen.

Der Roboter 60 ist nach gezeigter Ausführung durch einen Gelenkarmroboter gebildet. Möglich ist aber auch ein Portalroboter.

Das Robotersystem umfasst zudem ein Sensorsystem 62a, 62b zumindest zum Erfassen der Waren A, B im ersten Quellbehälter 5a und zweiten Quellbehälter 5b. Einerseits wird vor der Entnahme einer Ware A aus dem ersten Quellbehälter 5a durch das Sensorsystem 62a eine Greifflächenpose einer Greiffläche 63 für zumindest eine der Waren A im ersten Quellbehälter 5a erfasst. Andererseits wird vor der Entnahme einer Ware B aus dem zweiten Quellbehälter 5b durch das Sensorsystem 62b eine Greifflächenpose einer Greiffläche 63 für zumindest eine der Waren B im zweiten Quellbehälter 5b erfasst. Das Sensorsystem 62a, 62b ist mit einer Robotersteuerung 64 verbunden. Das Sensorsystem 62a, 62b umfasst nach gezeigter Ausführung eine Bilderkennungsvorrichtung.

Das Sensorsystem 62a, 62b bzw. die Bilderkennungsvorrichtung umfasst Kameras welche oberhalb der Quellbehälter 5a, 5b angeordnet und jeweils als Stereokamera ausgebildet sind. Demnach erfassen die Kameras ein dreidimensionales Abbild zumindest von den Quellbehältern 5a, 5b und der darin lagernden Waren A, B.

Die Robotersteuerung 64 berechnet aus der ermittelten Greifflächenpose eine Greifpose für die Greifeinheit 61 und steuert den Roboter 61 und/oder die Greifeinheit 61 entsprechend der Greifpose an, um eine Ware aus dem ersten / zweiten Quellbehälter 5a, 5b zu entnehmen.

Es erweist sich auch von Vorteil, wenn mit Hilfe eines Sensorsystems 62a, 62b eine Greifflächenpose und eine Greifflächengröße einer Greiffläche 63 einer Ware A, B ermittelt wird. Aus der ermittelten Greifflächenpose und Greifflächengröße kann eine Greifpose für die Greifeinheit 61 berechnet werden, bei der eine maximale Anzahl an Sauggreifern in Kontakt mit der Greiffläche 63 der genannten Ware A steht. Der Greifeinheit 61 wird in die berechnete Greifpose bewegt und es werden die mit der Greiffläche 63 der genannten Ware A in Kontakt stehenden oder in Kontakt kommenden Sauggreifer aktiviert, um die Ware A aufzunehmen.

Wie in Fig. 2 eingetragen, kann das Sensorsystem 65a, 65b zudem ein verfügbares Aufnahmevolumen im ersten Zielbehälter 33a und zweiten Zielbehälter 33b erfassen. Das Aufnahmevolumen reduziert sich mit einer zunehmenden Anzahl an im ersten Zielbehälter 33a / zweiten Zielbehälter 33b abgelegten Waren A, B. Einerseits wird vor dem Ablegen der Ware A, B in den ersten Zielbehälter 33a durch das Sensorsystem 65a ein verfügbares Aufnahmevolumen erfasst und von der Robotersteuerung 64 eine Ablegepose für die Greifeinheit 61 berechnet. Die Greifeinheit 61 wird in die berechnete Ablegepose bewegt und im ersten Zielbehälter 33a / zweiten Zielbehälter 33b die Ware A, B abgelegt. Andererseits wird vor dem Ablegen der Ware A, B in den zweiten Zielbehälter 33b durch das Sensorsystem 65b ein verfügbares Aufnahmevolumen erfasst und von der Robotersteuerung 64 eine Ablegepose für die Greifeinheit 61 berechnet. Das Sensorsystem 65a, 65b ist mit einer Robotersteuerung 64 verbunden. Das Sensorsystem 65a, 65b umfasst nach gezeigter Ausführung eine Bilderkennungsvorrichtung.

Es sei an dieser Stelle hingewiesen, dass der Begriff "Ablegen einer Ware in einen Zielbehälter" im Sinne der Erfindung nicht einschränkend zu verstehen ist, als dass die Ware in den Zielbehälter ausschließlich abgelegt wird, sondern die Ware auch in den Zielbehälter abgeworfen werden kann. Besonders bei weichen Waren eignet sich das "Abwerfen" besonders gut, da diese nicht beschädigt werden können und die Greifeinheit 61 kürzere Bewegungen machen kann. In diesem Fall kann die Ablegepose auch als Abwerfpose bezeichnet werden.

Das Sensorsystem 65a, 65b bzw. die Bilderkennungsvorrichtung umfasst Kameras, welche oberhalb der Zielbehälter 33a, 33b angeordnet und jeweils als Stereokamera ausgebildet sind.

Demnach erfassen die Kameras ein dreidimensionales Abbild zumindest von den Zielbehältern 33a, 33b und das verfügbare Aufnahmevolumen.

Eine "Pose" ist generell die Kombination von Position und Orientierung im Raum. Eine "Greifflächenpose" ist demgemäß die Kombination von Position und Orientierung der Greiffläche einer Ware und die "Greifpose" und "Ablegepose" die Kombination von Position und Orientierung der Greifeinheit 61.

Generell kann eine "Greiffläche" einer Ware, welche zum Greifen der genannten Ware mit der Greifeinheit 61 dient, eine beliebige Form aufweisen und beispielsweise polygonförmig (insbesondere rechteckig), kreisförmig oder ellipsenförmig sein oder auch durch eine Freiformfläche gebildet sein.

Außerdem sei hingewiesen, dass die Waren in den Quellbehältern 5 nebeneinander, übereinander, stehend oder liegend angeordnet sein können, daher ungeordnet (chaotisch) bzw. in Wirrlage.

Wie in den Fig. 1 und 2 ersichtlich, ist oberhalb der zweiten Fördervorrichtung 26 zum Abtransport von Quellbehältern 5a, 5b und zweiten Fördervorrichtung 36 zum Abtransport von Zielbehältern 33a, 33b eine Ablageplatte 66a angeordnet. Die Ablageplatte 66a ist zwischen der ersten Andienungsvorrichtung 24a mit dem ersten Entnahmeplatz 27a und der ersten Andienungsvorrichtung 34a mit dem ersten Beladeplatz 37a angeordnet und umfasst eine erste Zugangsöffnung 67a (vertikal) oberhalb des ersten Entnahmeplatzes 27a und eine zweite Zugangsöffnung 67b (vertikal) oberhalb des ersten Beladeplatzes 37a. Ebenso ist oberhalb der zweiten Fördervorrichtung 26 zum Abtransport von Quellbehältern 5a, 5b und zweiten Fördervorrichtung 36 zum Abtransport von Zielbehältern 33a, 33b eine Ablageplatte 66b angeordnet. Die Ablageplatte 66b ist zwischen der zweiten Andienungsvorrichtung 24b mit dem zweiten Entnahmeplatz 27b und der zweiten Andienungsvorrichtung 34b mit dem zweiten Beladeplatz 37b angeordnet und umfasst eine erste Zugangsöffnung 67a (vertikal) oberhalb des zweiten Entnahmeplatzes 27b und eine zweite Zugangsöffnung 67b (vertikal) oberhalb des zweiten Beladeplatzes 37b.

Die Ablageplatte 66a und die Ablageplatte 66b überdecken jeweils im Bereich des ersten / zweiten Entnahmeplatzes 27a, 27b und ersten / zweiten Beladeplatzes 37a, 37b im Wesentlichen den Abstand 51 zwischen der zweiten Fördervorrichtung 26 und zweiten Fördervorrichtung 36.

Auch wenn das Robotersystem sehr zuverlässig arbeitet, kann nicht ausgeschlossen werden, dass eine an der Greifeinheit 61 aufgenommene Ware A, B auf der Bewegung zwischen dem ersten / zweiten Entnahmeplatz 27a, 27b und ersten / zweiten Beladeplatz 37a, 37b unbeabsichtigt verloren geht. Die von der Greifeinheit (unbeabsichtigt) heruntergefallene Ware A (wie in Fig. 2 beispielhaft in strichlierten Linien eingetragen) fällt nicht auf den Boden oder auf die zweiten Fördervorrichtungen 26, 36, sondern kommt auf der Ablageplatte 66a / Ablageplatte 66b zu liegen.

Es kann sich darüber hinaus von Vorteil erweisen, wenn zusätzlich oberhalb der zweiten Fördervorrichtung 26 zum Abtransport von Quellbehältern 5a, 5b zwischen der ersten Andienungsvorrichtung 24a mit dem ersten Entnahmeplatz 27a und der zweiten Andienungsvorrichtung 24b mit dem zweiten Entnahmeplatz 27b eine Ablageplatte 66c angeordnet ist. Diese Ablageplatte 66c erstreckt sich parallel zur Förderrichtung der zweiten Fördervorrichtung 26 zum Abtransport von Quellbehältern 5a, 5b und schließt an die Ablageplatten 66a, 66b an. Ebenso ist oberhalb der zweiten Fördervorrichtung 36 zum Abtransport von Zielbehältern 33a, 33b zwischen der ersten Andienungsvorrichtung 34a mit dem ersten Beladeplatz 37a und der zweiten Andienungsvorrichtung 34b mit dem zweiten Beladeplatz 37b eine Ablageplatte 66d angeordnet. Diese Ablageplatte 66d erstreckt sich parallel zur Förderrichtung der zweiten Fördervorrichtung 36 zum Abtransport von Zielbehältern 33a, 33b und schließt an die Ablageplatten 66a, 66b an. Die Ablageplatte 66c oder Ablageplatte 66d kann gleichzeitig als Montageportal für den Roboter 60 dienen.

Wie oben beschrieben, kann eine Ware A aus dem ersten Quellbehälter 5a entnommen und in den zweiten Zielbehälter 33b abgelegt werden oder eine Ware B aus dem zweiten Quellbehälter 5b entnommen und in den ersten Zielbehälter 33a abgelegt werden. Dabei kann eine an der Greifeinheit 61 aufgenommene Ware A, B auf einer Diagonalbewegung zwischen dem ersten / zweiten Entnahmeplatzes 27a, 27b und ersten / zweiten Beladeplatzes 37a, 37b verloren gehen. Die von der Greifeinheit (unbeabsichtigt) heruntergefallene Ware A, B fällt nicht auf den Boden oder auf die zweiten Fördervorrichtungen 26, 36, sondern kommt auf der Ablageplatte 66c / Ablageplatte 66d zu liegen.

Wie in den Fig. 1 und 2 ersichtlich, sind die Ablageplatten 66a..66d durch eine einzige Ablageplatte gebildet.

Um eine automatisierte "Fehlerbebung" zu ermöglichen, kann nun vorgesehen werden, dass das Sensorsystem auch zum Erfassen einer Ware A, B, welche von der Greifeinheit 61 nach der Entnahme aus dem ersten / zweiten Quellbehälter 5a, 5b und vor dem Ablegen in den ersten / zweiten Zielbehälter 33a, 33b (bzw. auf der Bewegung der Greifeinheit 61 zwischen dem ersten / zweiten Entnahmeplatz 27a, 27b und ersten / zweiten Beladeplatz 37a, 37b) heruntergefallen ist und auf der Ablageplatte 66a..66d liegt, ausgebildet ist. Die Robotersteuerung 64 kann den Roboter 60 und/oder die Greifeinheit 61 derart ansteuern, dass diese die genannte Ware A, B aufnimmt und in den ersten Quellbehälter 5a oder zweiten Quellbehälter 5b zurücklegt oder in den bestimmungsgemäßen ersten Zielbehälter 33a oder zweiten Zielbehälter 33b ablegt. Im gezeigten Beispiel soll die Ware A im ersten Zielbehälter 33a abgelegt werden.

Das Erfassen der Ware A, B auf der Ablageplatte 66a..66d kann durch das ohnehin vorhandene Sensorsystem 62a, 62b und/oder Sensorsystem 65a, 65b erfolgen. Alternativ oder zusätzlich kann auch ein Sensorsystem 68 (wie in strichlierten Linien eingetragen) oberhalb der Ablageplatte 66a..66d vorgesehen werden, mittels welchem eine (unbeabsichtigt) heruntergefallene Ware A, B auf der Ablageplatte 66a..66d erfasst werden kann. Das Sensorsystem 68 ist mit einer Robotersteuerung 64 verbunden. Das Sensorsystem 68 umfasst nach gezeigter Ausführung eine Bilderkennungsvorrichtung.

Das Sensorsystem 68 bzw. die Bilderkennungsvorrichtung umfasst eine oder mehrere Kameras, welche oberhalb der Ablageplatte 66a..66d angeordnet und jeweils als Stereokamera ausgebildet sind. Demnach erfasst / erfassen die Kamera(s) ein dreidimensionales Abbild zumindest von der Ware A, B auf der Ablageplatte 66a..66d.

Mit Hilfe des Sensorsystems 62a, 62b; 65a, 65b; 68 wird eine Greifflächenpose einer Greiffläche 63 der heruntergefallenen Ware A, B ermittelt. Aus der ermittelten Greifflächenpose kann eine Greifpose für die Greifeinheit 61 berechnet werden, um die genannte Ware A, B auf der Greifeinheit 61 aufzunehmen. Die Greifeinheit 61 wird in die berechnete Greifpose bewegt und es werden die mit der Greiffläche 63 der genannten Ware A in Kontakt stehenden oder in Kontakt kommenden Sauggreifer aktiviert, um die genannte Ware A, B aufzunehmen.

Weiterhin wird angemerkt, dass das Sensorsystem nicht nur Kameras aufweisen kann, sondern alternativ oder zusätzlich auch einen Raumtiefensensor, einen Laserscanner und/oder einen Ultraschallsensor umfassen kann. Mithilfe dieser Sensoren kann insbesondere ein dreidimensionales Abbild der Waren A, B erfasst werden.

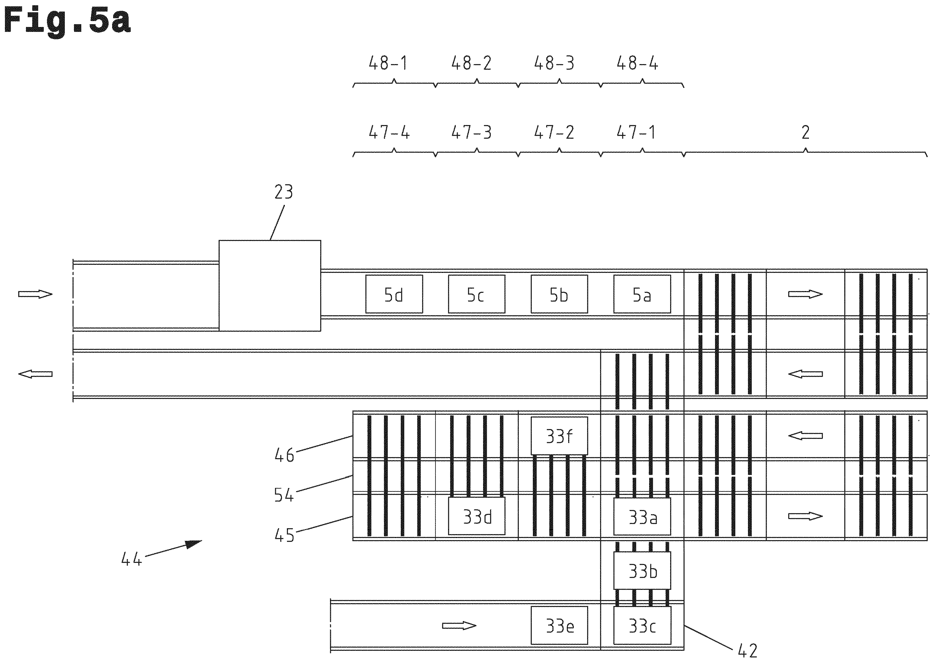

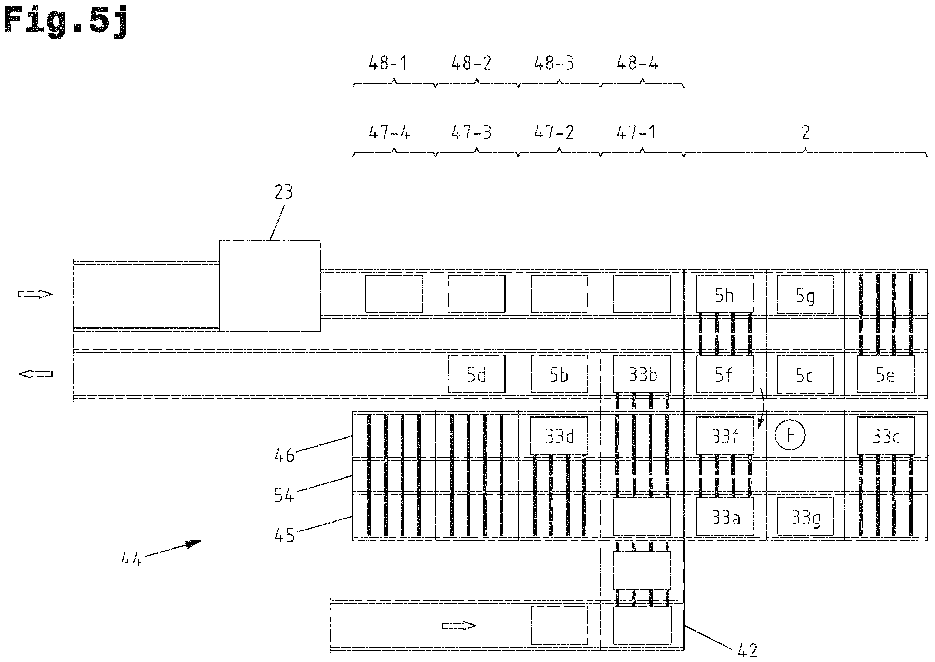

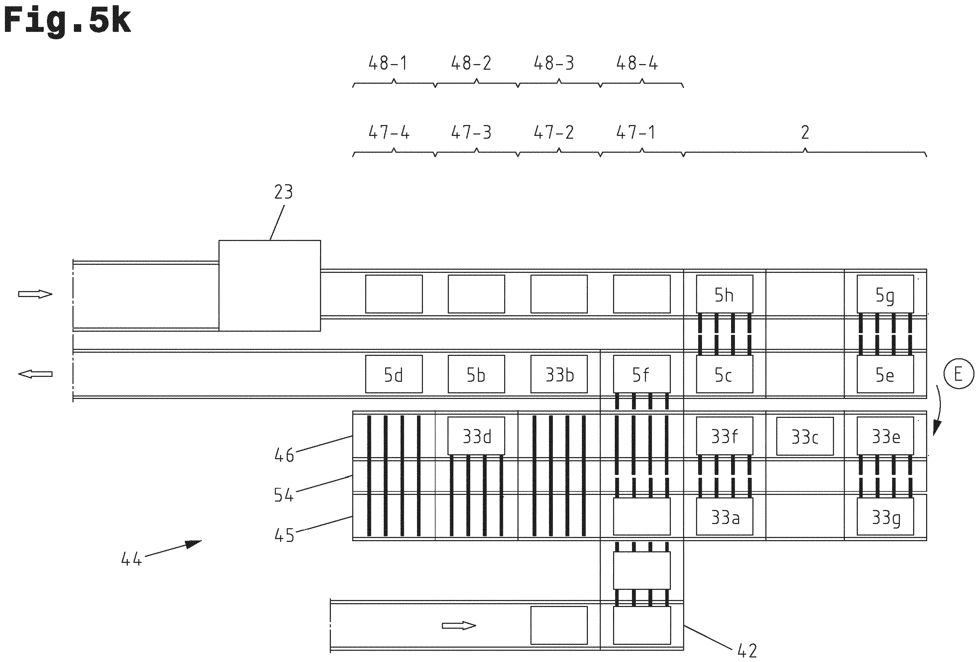

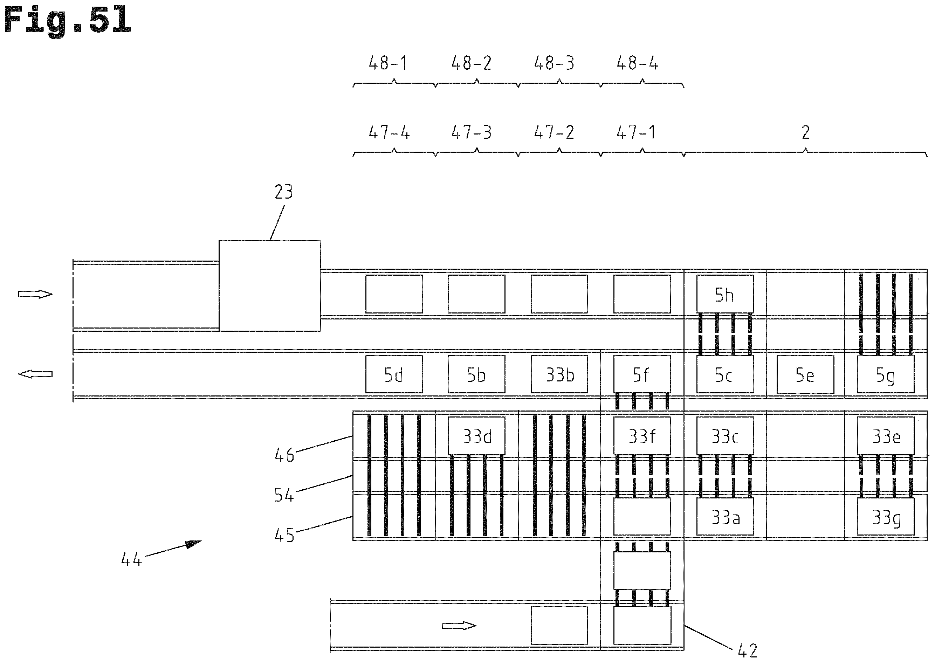

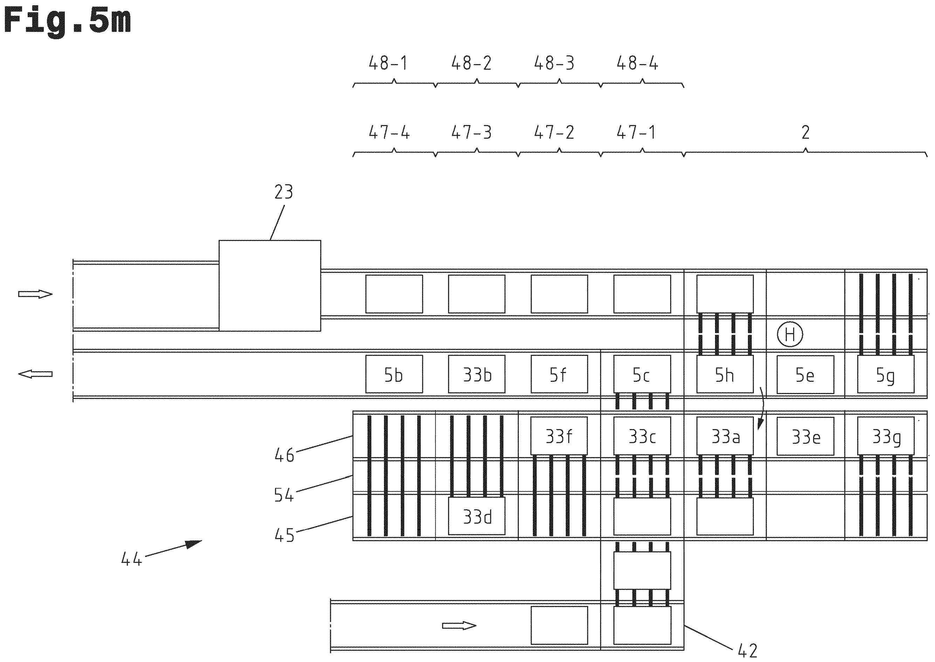

In den gemeinsam beschriebenen Fig. 5a bis 5m ist ein Verfahren zum Kommissionieren von Waren an einer Kommissionierstation 2 beschrieben, an der Aufträge bearbeitet werden. Aus Gründen der besseren Übersicht sind das Robotersystem und von der Quellbehälter-Fördertechnik bzw. Zielbehälter-Fördertechnik die Fördermittel 22a, 22b, 55, 56 nicht eingetragen. Auch der Roboter 60 und Greifeinheit 61 sind nicht dargestellt. Ein Auftrag kann auch in Teilaufträgen an einer einzigen Kommissionierstation 2 bearbeitet werden. Anderenfalls können die Aufträge oder Teilaufträge der Aufträge auch an mehreren Kommissionierstationen 2 abgearbeitet. Dabei wird ein Zielbehälter 33 vorerst einer ersten Kommissionierstation 2 zugeführt und zumindest eine Ware kommissioniert. Danach wird der Zielbehälter 33 einer zweiten Kommissionierstation 2 zugeführt und zumindest eine Ware kommissioniert. Mit anderen Worten kann der Auftrag an einer einzigen Kommissionierstation 2 nicht vollständig abgearbeitet werden und wird der Zielbehälter 33 nach der Teilkommissionierung in der ersten Kommissionierstation 2 über die fünfte Fördervorrichtung 14 (Fig. 1) zu der zweiten Kommissionierstation 2 transportiert.

Im Nachfolgenden wird der Einfachheit halber von "Aufträgen" gesprochen. Ein Auftrag kann auch als Kommissionierauftrag verstanden werden. Eine Kundenbestellung umfasst zumindest einen Auftrag. Die Aufträge liegen als Datensätze vor. Die Aufträge werden an einem Rechner (nicht dargestellt) elektronisch erfasst und die Steuereinheiten 31, 64 übermittelt. Jeder Auftrag umfasst eine oder mehrere Auftragszeilen. Spezifiziert der Auftrag mehrere Auftragszeilen, so werden unterschiedliche Waren benötigt. Jede Auftragszeile weist zumindest Angaben über eine Stückzahl einer bestellten Ware und über einen Warentyp auf.

Im dargestellten Ausführungsbeispiel gemäß den Fig. 5a bis 5m umfasst ein erster Auftrag eine erste Auftragszeile, beispielweise 2 Stück von der Ware A, und eine zweite Auftragszeile, beispielweise 1 Stück von der Ware H. Ein zweiter Auftrag umfasst eine einzige Auftragszeile, beispielweise 1 Stück von der Ware B. Ein dritter Auftrag umfasst eine erste Auftragszeile, beispielweise 1 Stück von der Ware N (welche sich bereits im Zielbehälter 33d befindet), und eine zweite Auftragszeile, beispielweise 2 Stück von der Ware D und eine dritte Auftragszeile, beispielweise 4 Stück von der Ware O. Ein vierter Auftrag umfasst eine erste Auftragszeile, beispielweise 2 Stück von der Ware C, und eine zweite Auftragszeile, beispielweise 3 Stück von der Ware P. Ein fünfter Auftrag umfasst eine erste Auftragszeile, beispielweise 1 Stück von der Ware F. Ein sechster Auftrag umfasst eine erste Auftragszeile, beispielweise 1 Stück von der Ware E und eine zweite Auftragszeile, beispielweise 3 Stück von der Ware Q.

Zur erstmaligen Bearbeitung von (neuen) Aufträgen werden leere Zielbehälter 33a, 33b, 33c und 33e über die Fördervorrichtung 42 zugeführt. Die leeren Zielbehälter 33a, 33b, 33c und 33e werden identifiziert und ein leerer Zielbehälter 33a, 33b, 33c und 33e datentechnisch mit einem erfassten Auftrag verknüpft.

Der Transport der identifizierten und leeren Zielbehälter 33a, 33b, 33c und 33e zu dem ersten Beladeplatz 34a und zweiten Beladeplatz 34b erfolgt durch Fördervorrichtung 42 und in der Kommissionierstation 2 durch die erste Fördervorrichtung 35 und die Umsetzvorrichtungen 38, 39. Beispielweise wird der erste Zielbehälter 33a am ersten Beladeplatz 34a zur Bearbeitung der ersten Auftragszeile zu einem ersten Auftrag und der zweite Zielbehälter 33b wird am zweiten Beladeplatz 34b zur Bearbeitung der Auftragszeile zu einem zweiten Auftrag bereitgestellt.

Im Sortierpuffer 44 werden Zielbehälter 33 temporär gepuffert, welche Waren zu mehr als einer Auftragszeile benötigen und bereits eine erste Auftragszeile enthalten, beispielweise die Zielbehälter 33d, 33f. Daher wurde in den Zielbehältern 33 jeweils bereits zumindest eine Ware abgelegt. Einige Zielbehälter 33 (nicht dargestellt) können aber auch leer sein, welche über die an den Sortierpuffer 44 anschließende Fördertechnik 42 zugeführt werden.

Die Quellbehälter 5a..5h werden in einer ungeordneten (chaotischen) Reihenfolge aus dem Lagerbereich 1 ausgelagert und in einer ungeordneten (chaotischen) Reihenfolge zum ersten Entnahmeplatz 24a und zweiten Entnahmeplatz 24b angefördert. Vorzugsweise bevorraten die Quellbehälter 5a..5h jeweils einen einzigen Warentyp. Man spricht von so genannten "warentypreinen" Quellbehältern 5a..5h. Im gezeigten Ausführungsbeispiel enthält der erste Quellbehälter 5a die Ware A, der zweite Quellbehälter 5b die Ware B, der dritte Quellbehälter 5c die Ware C usw..

Üblicherweise sind an der Kommissionierstation 2 eine Anzahl an Aufträgen zu bearbeiten und einige Aufträge enthalten, die mehr als eine Auftragszeile umfassen. Dies hat zur Konsequenz, dass die diesen Aufträgen zugeordneten Zielbehälter 33 (zum Beispiel die Zielbehälter 33a, 33c, 33d) mehrmals an den ersten und zweiten Beladeplätzen 37a, 37b und in einer Reihenfolge bereitgestellt werden müssen, die abhängig von der Reihenfolge in welcher die Quellbehälter 5a..5h auf den ersten und zweiten Entnahmeplätzen 24a, 24b bereitgestellt werden, bestimmt wird. Dies ist beispielweise anhand dem Zielbehälter 33a veranschaulicht, der zu einer ersten Auftragszeile 2 Stück von der Ware A und zu einer zweiten Auftragszeile 1 Stück von der Ware H.

Im Sortierpuffer 44 können Zielbehälter 33 zu unterschiedlichen Aufträgen auf den Sortierplätzen 48-1 bis 48-4 und auf dem Pufferplatz 47-4 bis 47-1 Zielbehälter 33 zu unterschiedlichen Aufträgen, beispielsweise ein Zielbehälter

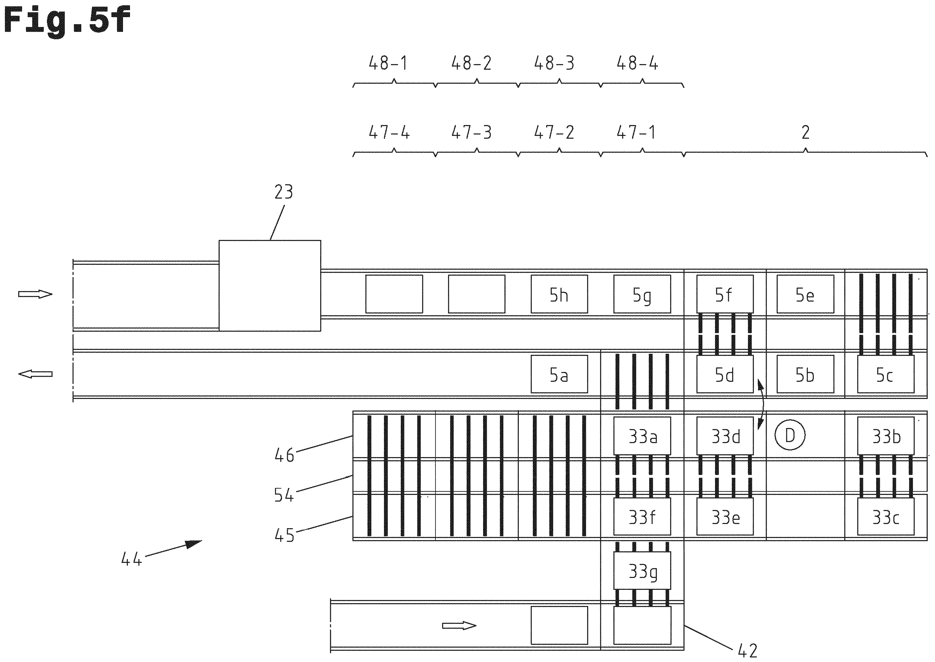

Wie in den Fig. 5f-5g ersichtlich, wird ein zuvor bearbeiteter Zielbehälter 33a über die zweite Fördervorrichtung 36 von dem ersten Beladeplatz 37a zurück in den Sortierpuffer 44 und auf einen von der Steuereinheit 31 bestimmten Sortierplatz 48-3 transportiert, da noch eine zweite Auftragszeile zu bearbeiten ist. Der Quellbehälter 5a wird auf der Quellbehälter-Fördertechnik vom ersten Entnahmeplatz 24a abtransportiert und in den Lagerbereich 1 rückgelagert. Ebenso kann ein zuvor bearbeiteter Zielbehälter 33c über die zweite Fördervorrichtung 36 von dem zweiten Beladeplatz 37b zurück in den Sortierpuffer 44 und auf einen von der Steuereinheit 31 bestimmten Sortierplatz 48-1 bis 48-4 transportiert werden, da noch eine zweite Auftragszeile zu bearbeiten ist. Der Quellbehälter 5c wird auf der Quellbehälter-Fördertechnik vom zweiten Entnahmeplatz 24b abtransportiert und in den Lagerbereich 1 rückgelagert.

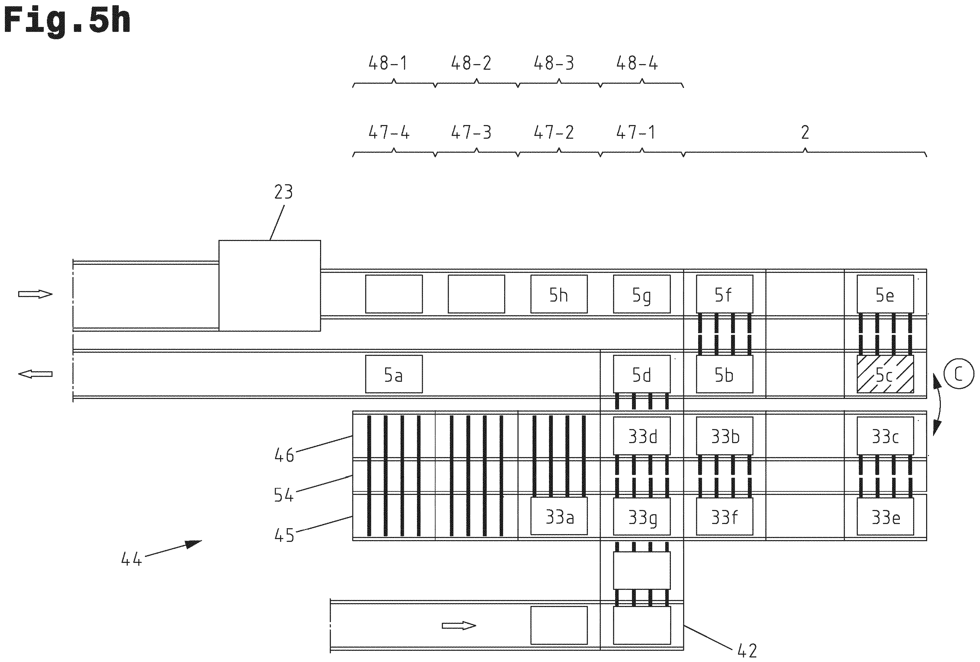

Wie in Fig. 5h ersichtlich, kann der Zielbehälter 33a unmittelbar nachdem dieser in den Sortierpuffer 44 transportiert wurde, von dem Sortierplatz 48-3 auf einen der von der Steuereinheit 31 bestimmten Pufferplätze 47-2 transportiert werden, nachdem bereits der Quellbehälter 5h mit der Ware H für die zweite Auftragszeile zur Kommissionierstation 2 antransportiert wird. Der Transport des Zielbehälters 33a von einem der Sortierplätze 48-3 auf einen der Pufferplätze 47-2 erfolgt mittels dem Fördermittel 57 einer der dritten Fördervorrichtungen 54. Der Transport des Zielbehälters 33a entlang der Sortierplätze 48-4 und 48-3 erfolgt mittels dem Fördermittel 56 der zweiten Fördervorrichtung 46. Der Transport des Zielbehälters 33a entlang der Pufferplätze 47-2 und 47-1 erfolgt mittels dem Fördermittel 55 der ersten Fördervorrichtung 45. Demnach können die Zielbehälter 33 im Sortierpuffer 44 entlang der Sortierplätze 48-4 bis 48-1 und entlang der Pufferplätze 47-1 bis 47-4 parallel transportiert werden. Auch ist es möglich, dass ein zuvor auf einen der Sortierplätze 48-4 bis 48-1 transportierter Zielbehälter 33 an einem nachfolgend auf einen der Sortierplätze 48-4 bis 48-1 transportierten Zielbehälter 33 vorbeibewegt wird.

Somit wird vom Sortierpuffer 44 über die Pufferplätze 47-1 bis 47-4 und/oder Sortierplätze 48-4 bis 48-1 ein Sortierprozess durchgeführt.

Hingegen wird ein zuvor bearbeiteter Zielbehälter 33b über die zweite Fördervorrichtung 36 von einem der ersten und zweiten Beladeplätze 34a, 34b, beispielweise dem zweiten Beladeplatz 37a und die Fördervorrichtung 43 zur Fördervorrichtung 13 zum Abtransport von Zielbehältern 33 von der Kommissionierstation 2 transportiert, wie in den Fig. 5f-5j ersichtlich. Bevorzugt werden auch die Quellbehälter 5 durch die Fördervorrichtung 13 von der Kommissionierstation 2 abtransportiert.

Eine mögliche Sortierfunktion des Sortierpuffers 44 lässt sich somit wie folgt beschreiben:
ein erster Zielbehälter 33 wird zur Bearbeitung von unterschiedlichen Auftragszeilen zu zumindest einem Auftrag nach dem Ablegen einer Ware zu einer ersten Auftragszeile zurück in den Sortierpuffer 44 transportiert und auf einem ersten Sortierplatz 48 zumindest solange temporär gepuffert wird, bis ein Quellbehälter 5 mit einer Ware zu einer zweiten Auftragszeile in einen stromaufwärts von der Kommissionierstation 2 (insbesondere dem ersten Entnahmeplatz 24a und zweiten Entnahmeplatz 24b) vorgesehenen Fördervorrichtung 12 zum Antransport von Quellbehältern 5 zur Kommissionierstation 2 angefördert wird, und genannter erster Zielbehälter 33 vom ersten Sortierplatz 48 auf einen der Pufferplätze 47 und danach zu einem der ersten und zweiten Beladeplätze 34a, 34b bewegt werden kann, nachdem der Quellbehälter 5 mit einer Ware zu einer zweiten Auftragszeile auf die Fördervorrichtung 12 zum Antransport von Quellbehältern 5 zur Kommissionierstation 2 transportiert wurde, und
ein zweiter Zielbehälter 33 zur Bearbeitung von unterschiedlichen Auftragszeilen zu zumindest einem Auftrag nach dem Ablegen einer Ware zu einer ersten Auftragszeile zurück in den Sortierpuffer 36 transportiert und über einen zweiten Sortierplatz 48 auf einen der Pufferplätze 47 und danach zu ersten und zweiten Beladeplätze 34a, 34b bewegt wird, sofern ein Quellbehälter 5 mit einer Ware zu einer zweiten Auftragszeile bereits in einen stromaufwärts von der Kommissionierstation 2 (insbesondere dem ersten Entnahmeplatz 24a und zweiten Entnahmeplatz 24b) vorgesehenen Fördervorrichtung 12 zum Antransport von Quellbehältern 5 zur Kommissionierstation 2 transportiert wurde.

Sobald sich die Quellbehälter 5 auf der Fördervorrichtung 12 befinden und von dieser transportiert werden, wird die zuvor erfasste (chaotische) Reihenfolge nicht mehr verändert.

Im nachfolgenden wird eine erste Ausführung eines Verfahren zum vollautomatisierten Kommissionieren von verschiedenen Waren A..H aus Quellbehälter 5a..5h in Zielbehälter 33a..33g durch einen Roboter 60 mit einer Greifeinheit 61 gemäß Aufträgen beschrieben. Dieses Verfahren zum vollautomatisierten Kommissionieren ist besonders gut an der oben beschriebenen Kommissionierstation 2 einzusetzen.

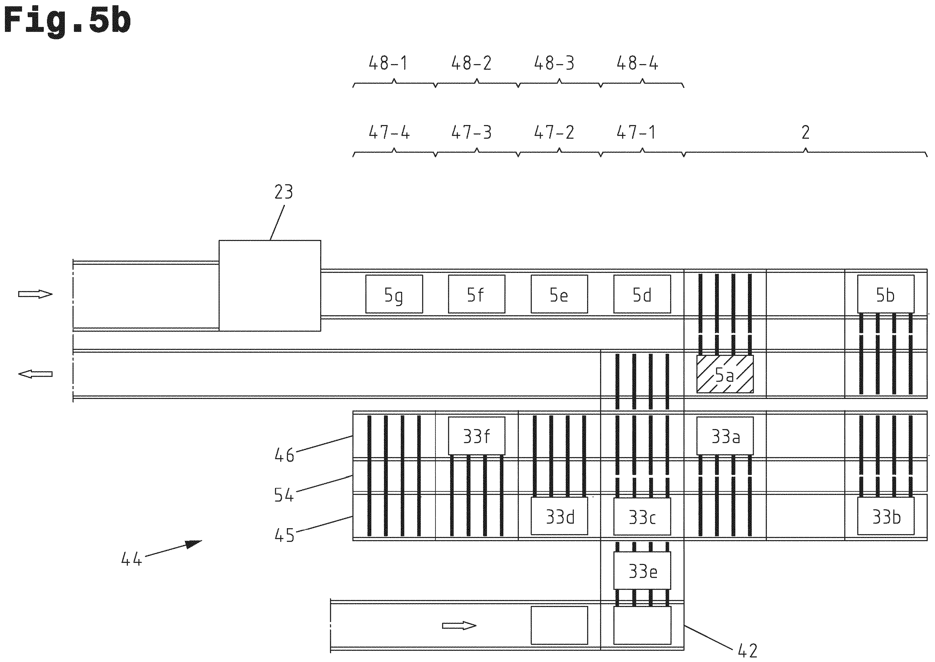

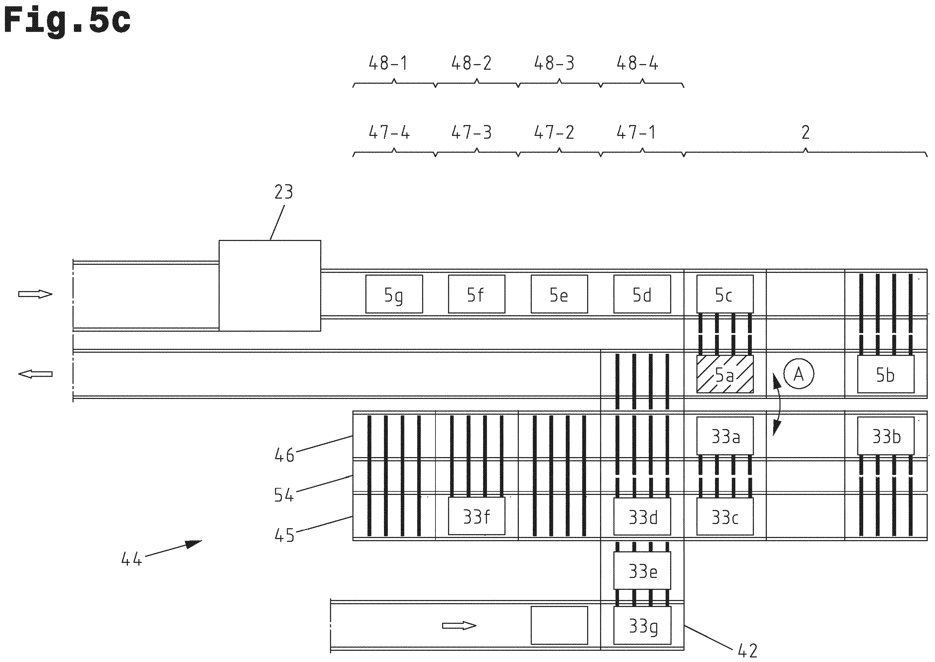

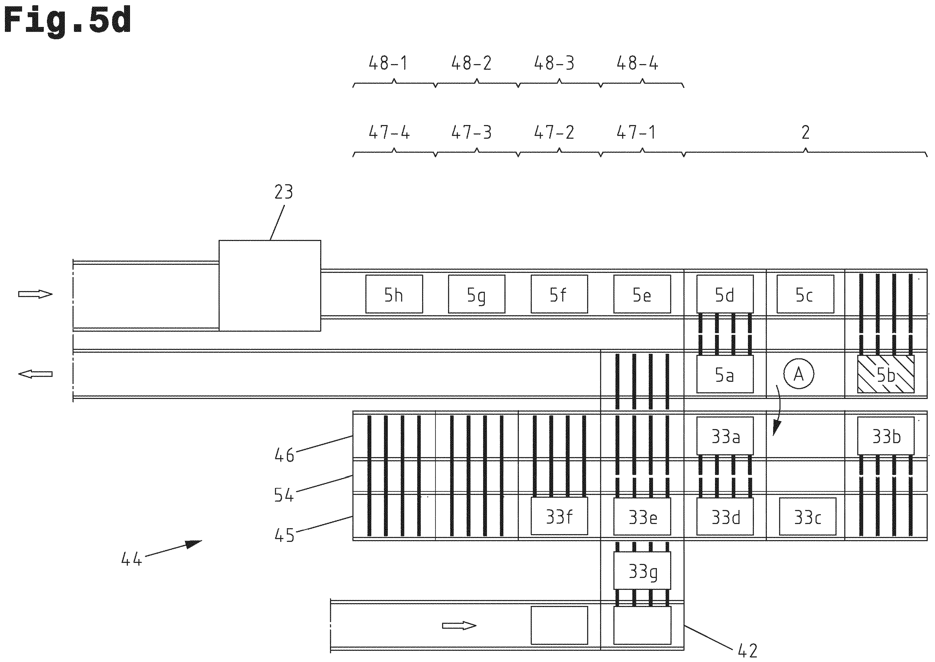

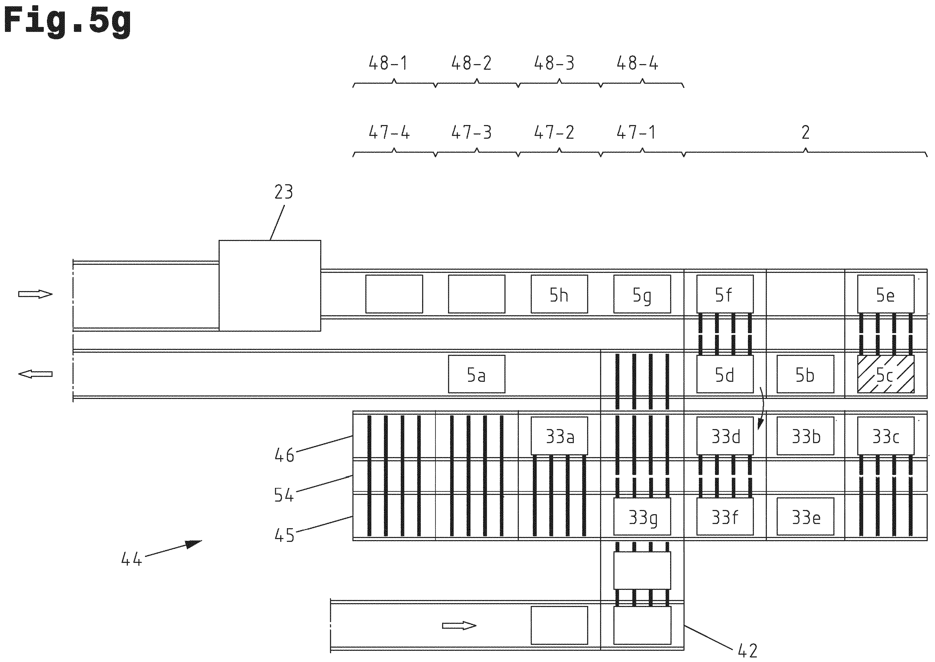

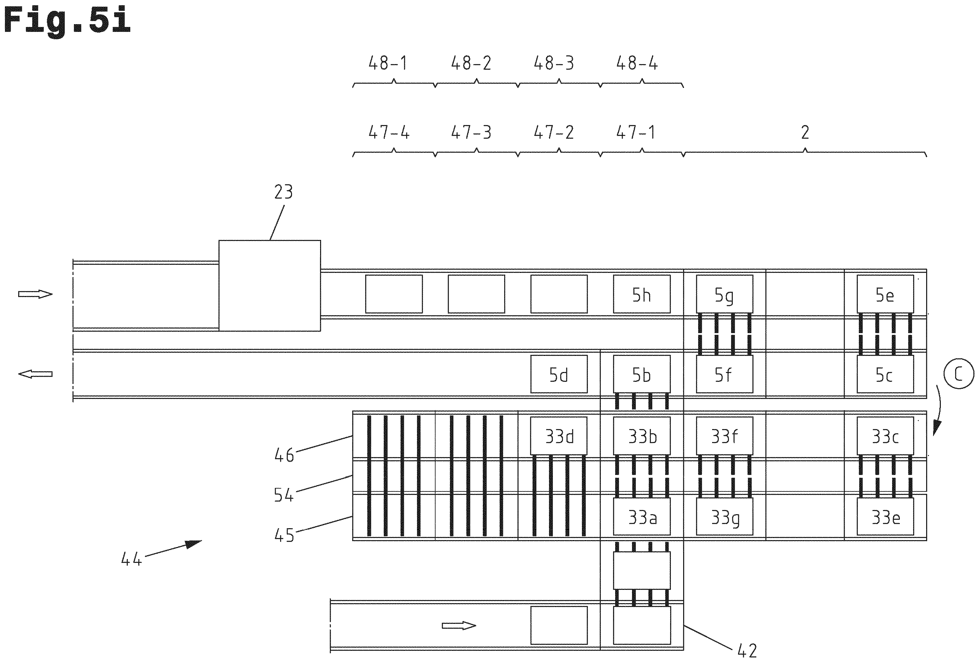

Das Verfahren umfasst zumindest die folgenden Schritte:
a) Erfassung von Aufträgen mit jeweils einer oder mehreren Auftragszeilen, wobei jede Auftragszeile zumindest eine Ware nach seinem Warentyp und seiner bestellten Stückzahl spezifiziert,
b) Antransport eines ersten Quellbehälters 5a für einen ersten Kommissionierauftrag und Antransport eines zweiten Quellbehälters 5c für einen zweiten Kommissionierauftrag auf einer ersten Fördervorrichtung 25 und Transport des ersten Quellbehälters 5a von der ersten Fördervorrichtung 25 zu einer ersten Andienungsvorrichtung 24a mit einem ersten Entnahmeplatz 27a und Transport des zweiten Quellbehälters 5c von der ersten Fördervorrichtung 25 zu einer zweiten Andienungsvorrichtung 24b mit einem zweiten Entnahmeplatz 27b (siehe Fig. 5a-5f),
c) Bereitstellung des ersten Quellbehälters 5a auf dem ersten Entnahmeplatz 27a (siehe Fig. 5b) und Bereitstellung des zweiten Quellbehälters 5c auf dem zweiten Entnahmeplatz 27b (siehe Fig. 5f),
d) Transport eines ersten Zielbehälters 33a zu einer ersten Andienungsvorrichtung 34a mit einem ersten Beladeplatz 37a und Bereitstellung eines ersten Zielbehälters 33a auf dem ersten Beladeplatz 37a, um eine Auftragszeile zu einem ersten Auftrag zu bearbeiten (siehe Fig. 5a-5b),
e) Transport eines zweiten Zielbehälters 33b zu einer zweiten Andienungsvorrichtung 34b mit einem zweiten Beladeplatz 37b und Bereitstellung eines zweiten Zielbehälters 33b auf dem zweiten Beladeplatz 37b, um eine Auftragszeile zu einem zweiten Auftrag zu bearbeiten (siehe Fig. 5b-5g),
f) Ermittlung einer Greifflächenpose einer Greiffläche 63 (Fig. 2) für zumindest eine der Waren A im ersten Quellbehälter 5a mit Hilfe eines Sensorsystem 62a, insbesondere eine Bilderkennungsvorrichtung mit einem Kamerasystem, nachdem der erste Quellbehälter 5a am ersten Entnahmeplatz 24a bereitgestellt wurde, und Berechnung einer Greifpose für die Greifeinheit 64 aus der ermittelten Greifflächenpose durch die Robotersteuerung 64 (siehe Fig. 5b - Schraffur des ersten Quellbehälters 5a symbolisiert die vorangehende Ermittlung einer Greifflächenpose),
g) Entnahme der genannten Ware A aus dem ersten Quellbehälter 5a und Ablegen der genannten Ware A in den ersten Zielbehälter 33a durch die Greifeinheit 61 des Roboters 60 gemäß dem ersten Auftrag (siehe Fig. 5c - Pfeil symbolisiert die erste Entnahme und das Ablegen einer ersten Ware A),
h) Wiederholung des Schrittes f) sofern die Auftragszeile zum ersten Auftrag nochmals eine Ware A dieses Warentyps enthält, neuerliche Entnahme der genannten Ware A aus dem ersten Quellbehälter 5a und Ablegen der genannten Ware A in den ersten Zielbehälter 33a durch die Greifeinheit 61 des Roboters 60 (siehe Fig. 5c - Schraffur des ersten Quellbehälters 5a symbolisiert die wiederholte Ermittlung einer Greifflächenpose und siehe Fig. 5d - Pfeil symbolisiert die zweite Entnahme und das nochmalige Ablegen einer ersten Ware A),
i) Ermittlung einer Greifflächenpose einer Greiffläche 63 für zumindest eine der Waren C im zweiten Quellbehälter 5c mit Hilfe eines Sensorsystems 62b, insbesondere eine Bilderkennungsvorrichtung mit einem Kamerasystem, nachdem der zweite Quellbehälter 5c am zweiten Entnahmeplatz 24b bereitgestellt wurde, und Berechnung einer Greifpose für die Greifeinheit 64 aus der ermittelten Greifflächenpose durch die Robotersteuerung 64 (siehe Fig. 5g - Schraffur des zweiten Quellbehälters 5c symbolisiert die vorangehende Ermittlung einer Greifflächenpose),
j) Entnahme der genannten Ware aus dem zweiten Quellbehälter 5c und Ablegen der genannten Ware in den zweiten Zielbehälter 33c durch die Greifeinheit 61 des Roboters 60 gemäß dem zweiten Auftrag (siehe Fig. 5h - Pfeil symbolisiert die erste Entnahme und das Ablegen einer ersten Ware C),
k) Wiederholung des Schrittes i) sofern die Auftragszeile zum zweiten Auftrag nochmals eine Ware C dieses Warentyps enthält, neuerliche Entnahme der genannten Ware C aus dem zweiten Quellbehälter 5c und Ablegen der genannten Ware C in den zweiten Zielbehälter 33c durch die Greifeinheit 61 des Roboters 60 (siehe Fig. 5h - Schraffur des zweiten Quellbehälters 5b symbolisiert die wiederholte Ermittlung einer Greifflächenpose und siehe Fig. 5i - Pfeil symbolisiert die zweite Entnahme und das nochmalige Ablegen einer zweiten Ware C),
l) Abtransport des ersten Quellbehälters 5a nach Abarbeitung der Auftragszeile zum ersten Auftrag von dem ersten Entnahmeplatz 24a und Abtransport des zweiten Quellbehälters 5c nach Abarbeitung der Auftragszeile zum zweiten Auftrag von dem zweiten Entnahmeplatz 24b unabhängig voneinander durch eine zweite Fördervorrichtung 26,
m) Abtransport des ersten Zielbehälters 33a nach Abarbeitung der Auftragszeile zum ersten Auftrag von dem ersten Beladeplatz 34a und Abtransport des zweiten Zielbehälters 33c nach Abarbeitung der Auftragszeile zum zweiten Auftrag von dem zweiten Beladeplatz 34b unabhängig voneinander durch eine zweite Fördervorrichtung 36.

Im Schritt c) erfolgt die Bereitstellung des ersten Quellbehälters 5a auf dem ersten Entnahmeplatz 27a und Bereitstellung des zweiten Quellbehälters 5c auf dem zweiten Entnahmeplatz 27b, welche im Wesentlich zeitlich parallelisiert oder zeitlich versetzt erfolgen kann.

Der Transport der ersten und zweiten Zielbehälters 33a, 33c im Schritt d) und e) kann zeitlich parallelisiert oder zeitlich versetzt erfolgen kann. Ebenso kann der Transport der ersten und zweiten Zielbehälters 33a, 33c im Schritt d) und e) und der Antransport der ersten und zweiten Quellbehälter 5a, 5c im Schritt b) zeitlich parallelisiert oder zeitlich versetzt erfolgen. Es ist aber zweckmäßig, dass der Antransport der ersten und zweiten Quellbehälter 5a, 5c zu den ersten und zweiten Entnahmeplätzen 24a, 24b und der Transport der Zielbehälter 33a, 33c zu den ersten und zweiten Beladeplätzen 34a, 34b so aufeinander abgestimmt sind, dass ein Quellbehälter 5a, 5c und ein Zielbehälter 33a, 33c zu einem Auftrag in etwa gleichzeitig am Entnahmeplatz 24a, 24b und Beladeplatz 34a, 34b ankommen.

Im Schritt h) wird eine Greifflächenpose wiederholt ermittelt, wenn zum ersten Auftrag nochmals eine Ware A dieses Warentyps benötigt wird. Daher umfasst der erste Auftrag eine Auftragszeile beispielweise mit zumindest 2 Stück von der Ware A. Es wird also vor jeder neuerlichen Entnahme einer Ware A aus dem ersten Quellbehälter 5a Schritt h) durchgeführt. Das Sensorsystem 62a kann nach der ersten Entnahme der genannten Ware A aus dem ersten Quellbehälter 5a und sobald der Roboter 60 und/oder die Greifeinheit 61 aus dem Erfassungsbereich des Sensorsystems 62a herausgefahren sind, wiederholt eine Erfassung der Waren A im ersten Quellbehälter 5a durchführen und wiederholt eine Greifflächenpose ermitteln. Ist das Sensorsystem 62a ein Kamerasystem (einer Bilderkennungsvorrichtung) so kann die wiederholte Erfassung der Waren A im ersten Quellbehälter 5a erfolgen, wenn der Roboter 60 und/oder die Greifeinheit 61 aus dem Bilderfassungsbereich herausbewegt wurde.

Im Schritt k) wird eine Greifflächenpose wiederholt ermittelt, wenn zum zweiten Auftrag nochmals eine Ware C dieses Warentyps benötigt wird. Daher umfasst der zweite Auftrag eine Auftragszeile beispielweise mit zumindest 2 Stück von der Ware C. Es wird also vor jeder neuerlichen Entnahme einer Ware C aus dem zweiten Quellbehälter 5c Schritt k) durchgeführt. Das Sensorsystem 62b kann nach der ersten Entnahme der genannten Ware C aus dem zweiten Quellbehälter 5c und sobald der Roboter 60 und/oder die Greifeinheit 61 aus dem Erfassungsbereich des Sensorsystems 62b herausgefahren sind, wiederholt eine Erfassung der Waren C im zweiten Quellbehälter 5c durchführen und wiederholt eine Greifflächenpose ermitteln. Ist das Sensorsystem 62b ein Kamerasystem (einer Bilderkennungsvorrichtung) so kann die wiederholte Erfassung der Waren C im zweiten Quellbehälter 5c erfolgen, wenn der Roboter 60 und/oder die Greifeinheit 61 aus dem Bilderfassungsbereich herausbewegt wurde.

Es kann demnach der Schritt f) während der Bearbeitung der Auftragszeile (beispielweise mit zumindest 2 Stück von der Ware A) zum ersten Auftrag gemäß den Schritten g) und h) und der Schritt i) während der Bearbeitung der Auftragszeile (beispielweise mit zumindest 2 Stück von der Ware C) zum zweiten Auftrag gemäß den Schritten j) und k) durchgeführt.

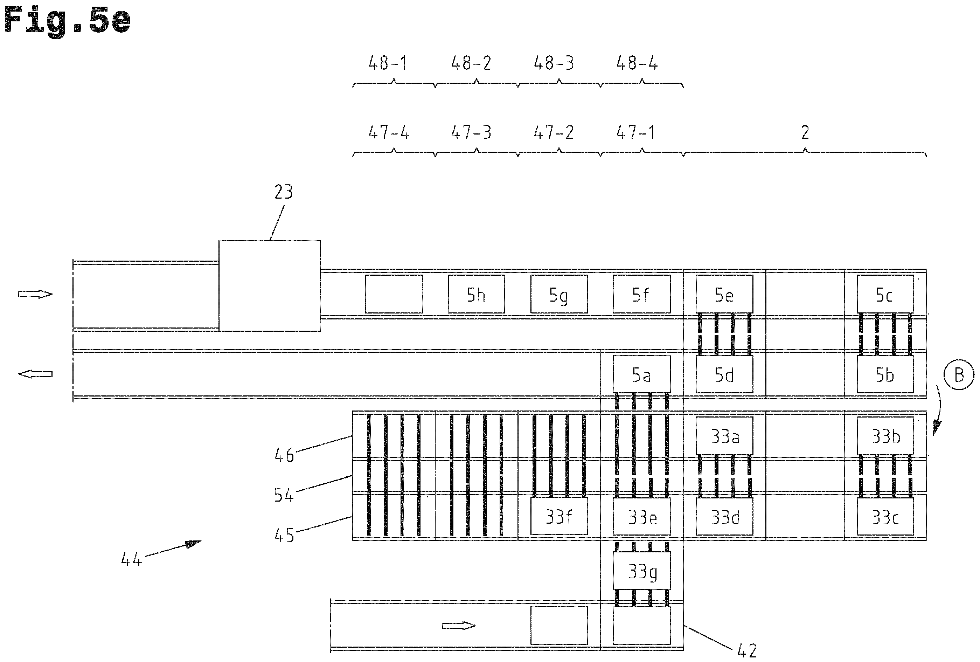

Es sei auch hingewiesen, dass der Schritt h) und/oder Schritt k) nur durchgeführt wird, wenn der Auftrag eine Auftragszeile mit zumindest 2 Waren A, C benötigt. Benötigt der Auftrag für eine Auftragszeile mehr als 2 Waren wiederholt sich der Schritt h) und/oder Schritt k). Umfasst hingegen der Auftrag eine Auftragszeile mit einer einzigen Ware, beispielweise die Ware B (siehe Fig. 5d, 5e) kann der Schritt h) und/oder Schritt k) entfallen. Konkret bedeutet dies im gezeigten Beispiel, das nur der Schritt f) und/oder Schritt i) durchgeführt wird, nämlich Ermittlung einer Greifflächenpose einer Greiffläche 63 für zumindest eine der Waren B im zweiten Quellbehälter 5b mit Hilfe eines Sensorsystem 62b, insbesondere eine Bilderkennungsvorrichtung mit einem Kamerasystem, sobald der zweite Quellbehälter 5b am zweiten Entnahmeplatz 24b bereitgestellt wurde (siehe Fig. 5d - Schraffur des zweiten Quellbehälters 5b symbolisiert die einmalige Ermittlung einer Greifflächenpose),

Im Schritt m) erfolgt der Abtransport des ersten Zielbehälters 33a nach Abarbeitung der Auftragszeile zum ersten Auftrag von dem ersten Beladeplatz 34a und Abtransport des zweiten Zielbehälters 33c nach Abarbeitung der Auftragszeile zum zweiten Auftrag von dem zweiten Beladeplatz 34b unabhängig voneinander durch eine zweite Fördervorrichtung 36. Ist in dieser Kommissionierstation 2 keine weitere Auftragszeile zum ersten Auftrag / zweiten Auftrag abzuarbeiten, so kann der erste Zielbehälters 33a / zweite Zielbehälters 33c von der Kommissionierstation 2 durch die Zielbehälter-Fördertechnik (Fördervorrichtungen 13, 43) abtransportiert werden (siehe beispielweise Zielbehälter 33b). Ist hingegen in dieser Kommissionierstation 2 eine weitere Auftragszeile zum ersten Auftrag / zweiten Auftrag abzuarbeiten, so wird der erste Zielbehälters 33a / zweite Zielbehälter 33c in den oben beschriebenen Sortierpuffer 44 transportiert, um nachfolgend nochmals dem ersten Beladeplatz 34a / zweiten Beladeplatz 34b zugeführt werden zu können (siehe beispielweise Zielbehälter 33a).

Im Schritt i) erfolgt der Abtransport des ersten Quellbehälters 5a von dem ersten Entnahmeplatz 27a und Abtransport des zweiten Quellbehälters 5c von dem zweiten Entnahmeplatz 27b, welcher im Wesentlich zeitlich parallelisiert oder zeitlich versetzt erfolgen kann.

Im Schritt m) erfolgt der Abtransport des ersten Zielbehälters 33a von dem ersten Beladeplatz 37a und Abtransport des zweiten Zielbehälters 33c von dem zweiten Beladeplatz 37b, welcher zeitlich versetzt erfolgen kann.

Der Abtransport des ersten Quellbehälters 5 (beispielweise Quellbehälter 5a) nach Abarbeitung der Auftragszeile zum ersten Auftrag von dem ersten Entnahmeplatz 24a und der Abtransport des ersten Zielbehälters 33 (beispielweise Zielbehälter 33a) nach Abarbeitung der Auftragszeile zum ersten Auftrag von dem ersten Beladeplatz 34a kann zeitlich versetzt oder zeitlich synchron (gleichzeitig) erfolgen, wie in den Fig. 5a-5m dargestellt. Der Abtransport des zweiten Quellbehälters 5 (beispielweise Quellbehälter 5c) nach Abarbeitung der Auftragszeile zum zweiten Auftrag von dem zweiten Entnahmeplatz 24b und der Abtransport des zweiten Zielbehälters 33 (beispielweise Zielbehälter 33c) nach Abarbeitung der Auftragszeile zum zweiten Auftrag von dem zweiten Beladeplatz 34b kann zeitlich versetzt oder zeitlich synchron (gleichzeitig) erfolgen, wie in den Fig. 5a-5m dargestellt.

Nach einer Ausführung ist vorgesehen, dass der erste Auftrag mit den Schritten f) bis h) und der zweite Auftrag mit den Schritten i) bis k) von dem Roboter 60 / der Greifeinheit 61 sequentiell bearbeitet werden.

Dabei erweist es sich von Vorteil, wenn der Schritt i) nach der (vollständigen) Abarbeitung der Auftragszeile zum ersten Auftrag und während der Bewegung des Roboters 60 / der Greifeinheit 61 vom ersten Zielbehälter 33a zum zweiten Quellbehälter 5c durchgeführt wird. Die Robotersteuerung 64 erhält vom Sensorsystem 62b vorzugsweise kurz bevor der Roboter 60 / die Greifeinheit 61 den zweiten Quellbehälter 5c erreicht hat, die Greifflächenpose einer Greiffläche 63 für zumindest eine der Waren C im zweiten Quellbehälter 5c. Der Schritt f) wird nach der (vollständigen) Abarbeitung der Auftragszeile zum zweiten Auftrag während der Bewegung des Roboters 60 / der Greifeinheit 61 vom zweiten Zielbehälter 33c zum ersten Quellbehälter 5a durchgeführt. Die Robotersteuerung 64 erhält vom Sensorsystem 62a vorzugsweise kurz bevor der Roboter 60 / die Greifeinheit 61 den ersten Quellbehälter 5a erreicht hat, die Greifflächenpose einer Greiffläche 63 für zumindest eine der Waren A im ersten Quellbehälter 5a.

Wie aus Fig. 4 gut ersichtlich sind die erste Andienungsvorrichtung 24a und zweite Andienungsvorrichtung 24b in Förderrichtung der zweiten Fördervorrichtung 26 voneinander um einen Abstand distanziert angeordnet. Dieser Abstand kann durch die Puffervorrichtung 32 definiert sein und beträgt zumindest der Behälterabmessung (Länge des Behälters parallel zur Förderrichtung). Dieser Abstand kann aber auch einem Mehrfachen der Behälterabmessung entsprechen.

Ebenso sind auch die erste Andienungsvorrichtung 34a und zweite Andienungsvorrichtung 34b in Förderrichtung der zweiten Fördervorrichtung 36 voneinander um einen Abstand distanziert angeordnet.

Der scheinbare Leistungsnachteil durch die Aneinanderreihung der Schritte f) bis h) und Schritte i) bis k) zur Bearbeitung verschiedener Aufträge wird kompensiert durch die höhere Pickleistung, welche durch die kurzen Roboterbewegungen / Greifeinheitbewegungen zwischen dem ersten Quellbehälter 5 und ersten Zielbehälter 33 oder zweiten Quellbehälter 5 und zweiten Zielbehälter 33 erreicht wird. Die kurzen Roboterbewegungen / Greifeinheitbewegungen resultieren aus der kompakten Bauweise der Kommissionierstation 2, insbesondere durch den geringen Abstand 51 zwischen den zweiten Fördervorrichtungen 26, 36. Zudem ist damit der Vorteil verbunden, dass die Steuerungsabläufe einfacher gestaltet werden können.

In einem besonderen Anwendungsfall können verschiedene Auftragszeilen zu einem ersten Auftrag derart bearbeitet werden, dass vorerst der erste Zielbehälter 33a mit einer Ware A aus dem ersten Quellbehälter 5a und danach mit einer Ware C aus dem zweiten Quellbehälter 5c beladen wird, ohne einem zwischenzeitlichen Abtransport des ersten Zielbehälters 33a von dem ersten Beladeplatzes 37a und neuerlichen Antransport zu dem ersten Beladeplatz 37a. Gleichermaßen können verschiedene Auftragszeilen zu einem zweiten Auftrag derart bearbeitet werden, dass vorerst der zweite Zielbehälter 33c mit einer Ware C aus dem zweiten Quellbehälter 5c und danach mit einer Ware A aus dem ersten Quellbehälter 5a beladen wird, ohne einem zwischenzeitlichen Abtransport des ersten Zielbehälters 33a von dem zweiten Beladeplatzes 37b und neuerlichen Antransport zu dem zweiten Beladeplatz 37b. In diesem Fall wäre der oben beschriebene Sortierpuffer 44 nicht unbedingt erforderlich oder kann sogar entfallen. Es findet eine "Diagonalbewegung" des Roboters 60 / der Greifeinheit 61 zwischen dem ersten / zweiten Entnahmeplatz 27a, 27b und ersten / zweiten Beladeplatz 37a, 37b) statt.

Dabei erweist es sich von Vorteil, wenn der Schritt i) nach Entnahme einer Ware A für eine Auftragszeile zum zweiten Auftrag während der Bewegung des Roboters 60 / der Greifeinheit 61 vom ersten Quellbehälter 5a zum zweiten Zielbehälter 33c durchgeführt wird. Der Schritt f) nach Entnahme einer Ware C für eine Auftragszeile zum zweiten Auftrag während der Bewegung des Roboters 60 / der Greifeinheit 61 vom zweiten Quellbehälter 5c zum ersten Zielbehälter 33a durchgeführt wird.

Dabei erweist es sich von Vorteil, wenn der Schritt i) nach der Abarbeitung einer Auftragszeile zum ersten Auftrag und nach Entnahme einer Ware A für eine Auftragszeile zum zweiten Auftrag während der Bewegung des Roboters 60 / der Greifeinheit 61 vom ersten Zielbehälter 33a zum zweiten Quellbehälter 5c durchgeführt wird. Der Schritt f) wird nach der Abarbeitung der Auftragszeile zum zweiten Auftrag während der Bewegung des Roboters 60 / der Greifeinheit 61 vom zweiten Zielbehälter 33c zum ersten Quellbehälter 5a durchgeführt. Schließlich sei auch noch hingewiesen, dass der Sortierpuffer 44 nicht zwingenderweise notwendig ist. In diesem Fall werden die Quellbehälter 5 und Zielbehälter 33 durch das Quellbehälter-Verteilsystem und Zielbehälter-Verteilsystem derart koordiniert den ersten / zweiten Entnahmeplätzen 27a, 27b und ersten / zweiten Beladeplätzen 37a, 37b zugeführt, dass diese zu den jeweiligen Aufträgen und etwa zeitgleich an den ersten / zweiten Entnahmeplätzen 27a, 27b und ersten / zweiten Beladeplätzen 37a, 37b bereitgestellt werden. Auch kann der Sortierpuffer 44 durch eine andere Ausgestaltung realisiert werden.

Im nachfolgenden wird eine zweite Ausführung eines Verfahrens zum vollautomatisierten Kommissionieren von verschiedenen Waren A..H aus Quellbehälter 5a..5h in Zielbehälter 33a..33g durch einen Roboter 60 mit einer Greifeinheit 61 gemäß Aufträgen beschrieben. Um unnötige Wiederholungen zu vermeiden, wird auf die obige Offenbarung des Verfahrens hingewiesen. Im Unterschied dazu ist der Verfahrensschritt m) optional.

Das Verfahren umfasst zumindest die folgenden Schritte:
a) Erfassung von Aufträgen mit jeweils einer oder mehreren Auftragszeilen, wobei jede Auftragszeile zumindest eine Ware A, C nach seinem Warentyp und seiner bestellten Stückzahl spezifiziert,
b) Antransport eines ersten Quellbehälters 5a zur Bearbeitung einer Auftragszeile zu einem ersten Auftrag zu einer ersten Andienungsvorrichtung 24a mit einem ersten Entnahmeplatz 27a und Antransport eines zweiten Quellbehälters 5c zur Bearbeitung einer Auftragszeile zu einem zweiten Auftrag zu einer zweiten Andienungsvorrichtung 24b mit einem zweiten Entnahmeplatz 27b mit einer automatisiert betriebenen Quellbehälter-Fördertechnik, wobei die Quellbehälter 5a, 5c unterschiedliche Waren A, C bevorraten (siehe Fig. 5a-5f),
c) Bereitstellung des ersten Quellbehälters 5a auf dem ersten Entnahmeplatz 27a und Bereitstellung des zweiten Quellbehälters 5c auf dem zweiten Entnahmeplatz 27b (siehe Fig. 5f),
d) Transport eines ersten Zielbehälters 33a zu einer ersten Andienungsvorrichtung 34a mit einem ersten Beladeplatz 37a mit einer automatisiert betriebenen Zielbehälter-Fördertechnik und Bereitstellung eines ersten Zielbehälters 33a auf dem ersten Beladeplatz 37a, um eine Auftragszeile zum ersten Auftrag zu bearbeiten (siehe Fig. 5a-5b),
e) Transport eines zweiten Zielbehälters 33c zu einer zweiten Andienungsvorrichtung 34b mit einem zweiten Beladeplatz 37b mit einer automatisiert betriebenen Zielbehälter-Fördertechnik und Bereitstellung eines zweiten Zielbehälters 33c auf dem zweiten Beladeplatz 37b, um eine Auftragszeile zu einem zweiten Auftrag zu bearbeiten (siehe Fig. 5b-5g),
f) Ermittlung einer Greifflächenpose einer Greiffläche 63 für zumindest eine der Waren A im ersten Quellbehälter 5a mit Hilfe eines Sensorsystems 62a, nachdem der erste Quellbehälter 5a am ersten Entnahmeplatz 27a bereitgestellt wurde, und Berechnung einer Greifpose für die Greifeinheit 61 aus der ermittelten Greifflächenpose durch eine Robotersteuerung 64 (siehe Fig. 5b - Schraffur des ersten Quellbehälters 5a symbolisiert die vorangehende Ermittlung einer Greifflächenpose),
g) Entnahme der genannten Ware A aus dem ersten Quellbehälter 5a und Ablegen der genannten Ware A in den ersten Zielbehälter 33a durch die Greifeinheit 61 des Roboters 60 zu einer Auftragszeile des ersten Auftrags (siehe Fig. 5c - Pfeil symbolisiert die erste Entnahme und das Ablegen einer ersten Ware A),
h) Wiederholung des Schrittes f) sofern die Auftragszeile zum ersten Auftrag nochmals eine Ware A dieses Warentyps enthält, neuerliche Entnahme der genannten Ware A aus dem ersten Quellbehälter 5a und Ablegen der genannten Ware A in den ersten Zielbehälter 33a durch die Greifeinheit 61 des Roboters 60 (siehe Fig. 5c - Schraffur des ersten Quellbehälters 5a symbolisiert die wiederholte Ermittlung einer Greifflächenpose und siehe Fig. 5d - Pfeil symbolisiert die zweite Entnahme und das nochmalige Ablegen einer ersten Ware A),
i) Ermittlung einer Greifflächenpose einer Greiffläche 63 für zumindest eine der Waren C im zweiten Quellbehälter 5c mit Hilfe eines Sensorsystems 62b, nachdem der zweite Quellbehälter 5c am zweiten Entnahmeplatz 34b bereitgestellt wurde, und Berechnung einer Greifpose für die Greifeinheit 61 aus der ermittelten Greifflächenpose durch eine Robotersteuerung 64 (siehe Fig. 5g - Schraffur des zweiten Quellbehälters 5c symbolisiert die vorangehende Ermittlung einer Greifflächenpose),
j) Entnahme der genannten Ware C aus dem zweiten Quellbehälter 5c und Ablegen der genannten Ware C in den zweiten Zielbehälter 33c durch die Greifeinheit 61 des Roboters 60 zu einer Auftragszeile des zweiten Auftrags (siehe Fig. 5h - Pfeil symbolisiert die erste Entnahme und das Ablegen einer ersten Ware C),
k) Wiederholung des Schrittes i) sofern die Auftragszeile zum zweiten Auftrag nochmals eine Ware C dieses Warentyps enthält, neuerliche Entnahme der genannten Ware C aus dem zweiten Quellbehälter 5c und Ablegen der genannten Ware C in den zweiten Zielbehälter 33c durch die Greifeinheit 61 des Roboters 60 (siehe Fig. 5h - Schraffur des zweiten Quellbehälters 5b symbolisiert die wiederholte Ermittlung einer Greifflächenpose und siehe Fig. 5i - Pfeil symbolisiert die zweite Entnahme und das nochmalige Ablegen einer zweiten Ware C),
l) Abtransport des ersten Quellbehälters 5a nach Abarbeitung der Auftragszeile zum ersten Auftrag von dem ersten Entnahmeplatz 27a und Abtransport des zweiten Quellbehälters 5c nach Abarbeitung der Auftragszeile zum zweiten Auftrag von dem zweiten Entnahmeplatz 27b unabhängig voneinander durch die Zielbehälter-Fördertechnik.

Es sei an dieser Stelle hingewiesen, dass die beschriebenen Verfahren zum Kommissionieren von Waren nicht auf die oben beschriebene Ausführung der Quellbehälter-Fördertechnik und/oder Zielbehälter-Fördertechnik eingeschränkt zu verstehen sind. Vielmehr kann die Quellbehälter-Fördertechnik beispielweise voneinander getrennt angeordnete erste Fördervorrichtungen zum Antransport der Quellbehälter 5 zur ersten Andienungsvorrichtung 24a und zweiten Andienungsvorrichtung 24b aufweisen. Ebenso kann die Quellbehälter-Fördertechnik beispielweise voneinander getrennt angeordnete zweite Fördervorrichtungen zum Abtransport der Quellbehälter 5 von der ersten Andienungsvorrichtung 24a und zweiten Andienungsvorrichtung 24b aufweisen. Außerdem kann die Zielbehälter-Fördertechnik beispielweise voneinander getrennt angeordnete erste Fördervorrichtungen zum Antransport der Zielbehälter 33 zur ersten Andienungsvorrichtung 34a und zweiten Andienungsvorrichtung 34b aufweisen. Auch kann die Zielbehälter-Fördertechnik beispielweise voneinander getrennt angeordnete zweite Fördervorrichtungen zum Abtransport der Zielbehälter 33 von der ersten Andienungsvorrichtung 34a und zweiten Andienungsvorrichtung 34b aufweisen.

In einer ersten Ausführung (siehe Fig. 5a-5m) umfasst das Verfahren zusätzlich den Schritt m):
Abtransport des ersten Zielbehälters 33a nach Abarbeitung der Auftragszeile zum ersten Auftrag von dem ersten Beladeplatz 37a und Abtransport des zweiten Zielbehälters 33c nach Abarbeitung der Auftragszeile zum zweiten Auftrag von dem zweiten Beladeplatz 37b unabhängig voneinander durch eine durch die Zielbehälter-Fördertechnik.

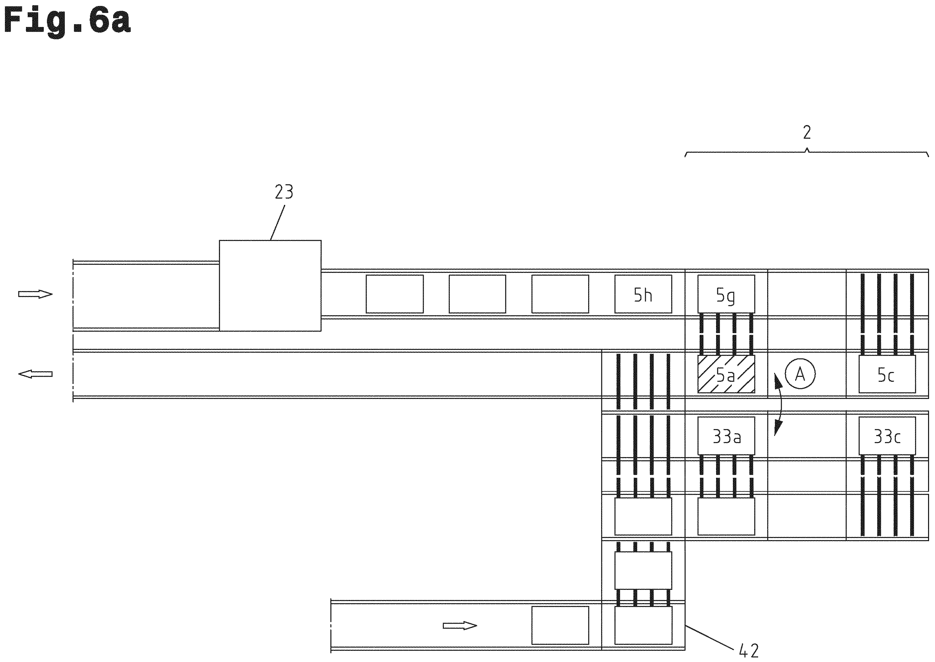

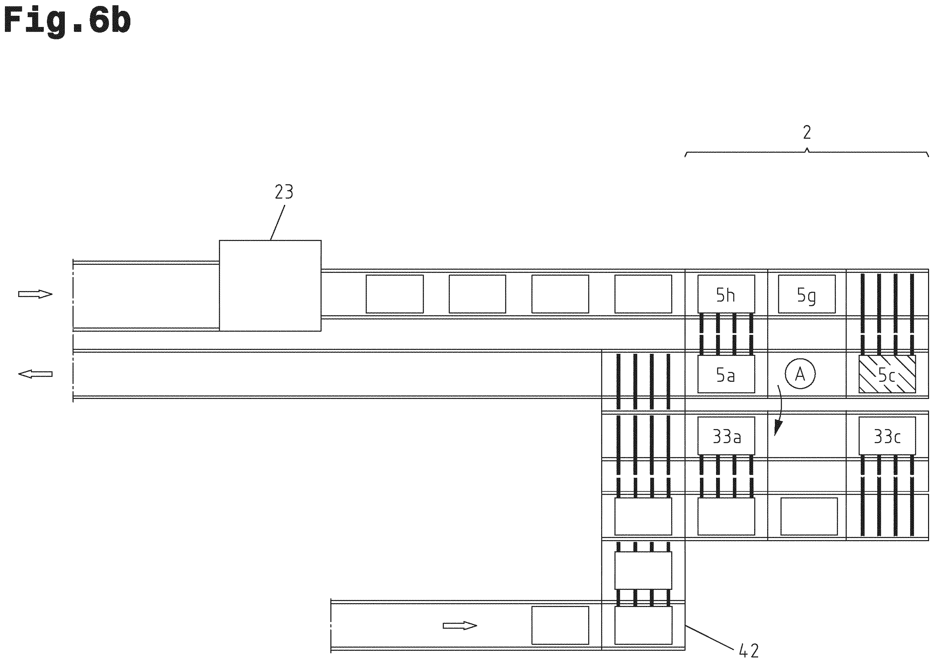

In einer zweiten Ausführung (siehe Fig. 6a-6e) umfasst das Verfahren zusätzlich die Schritte m) bis u). Diesen Schritten geht die Abarbeitung einer Auftragszeile zum ersten Auftrag, welche beispielweise 2 Stück von der Ware A umfasst, (Fig. 6a-6b) und die Abarbeitung einer Auftragszeile zum zweiten Auftrag, welche beispielweise 1 Stück von der Ware C umfasst, (Fig. 6b-6c) voraus. Dies betrifft die Schritte b) bis 1), wie oben beschrieben.

Die Bereitstellung des dritten Quellbehälters 5c auf dem ersten Entnahmeplatz 27a und Bereitstellung des vierten Quellbehälters 5g auf dem zweiten Entnahmeplatz 27b kann im Wesentlich zeitlich parallelisiert oder zeitlich versetzt erfolgen.

Die Verfahrensschritte m) bis u) betreffen eine Weiterbearbeitung des ersten Auftrags mit einer nächsten Auftragszeile und/oder zweiten Auftrags mit einer nächsten Auftragszeile und eine andere Maßnahme in der Bereitstellung des ersten Zielbehälters 33a und/oder zweiten Zielbehälters 33a.

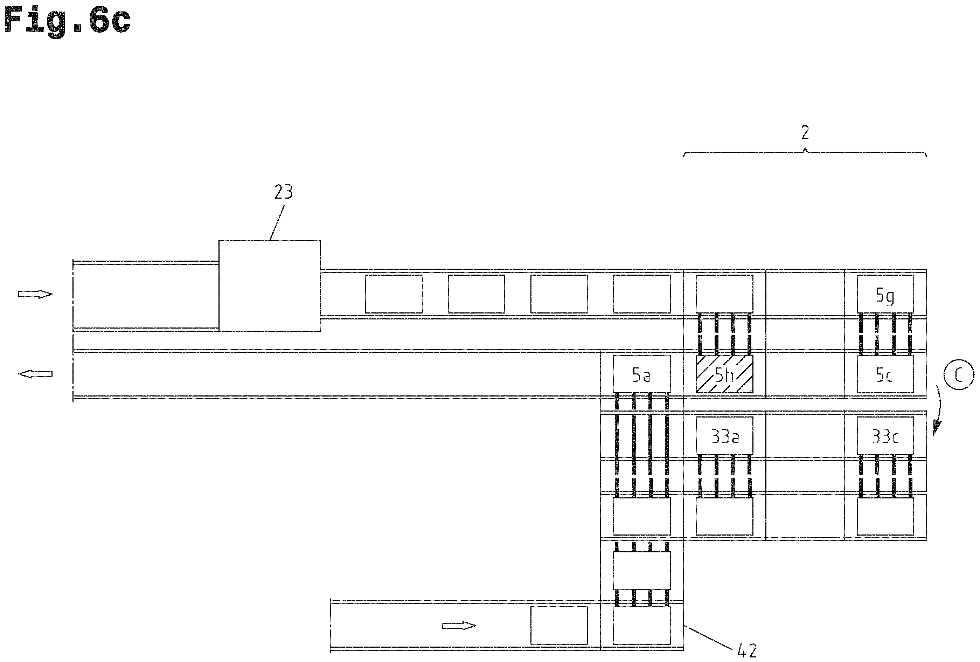

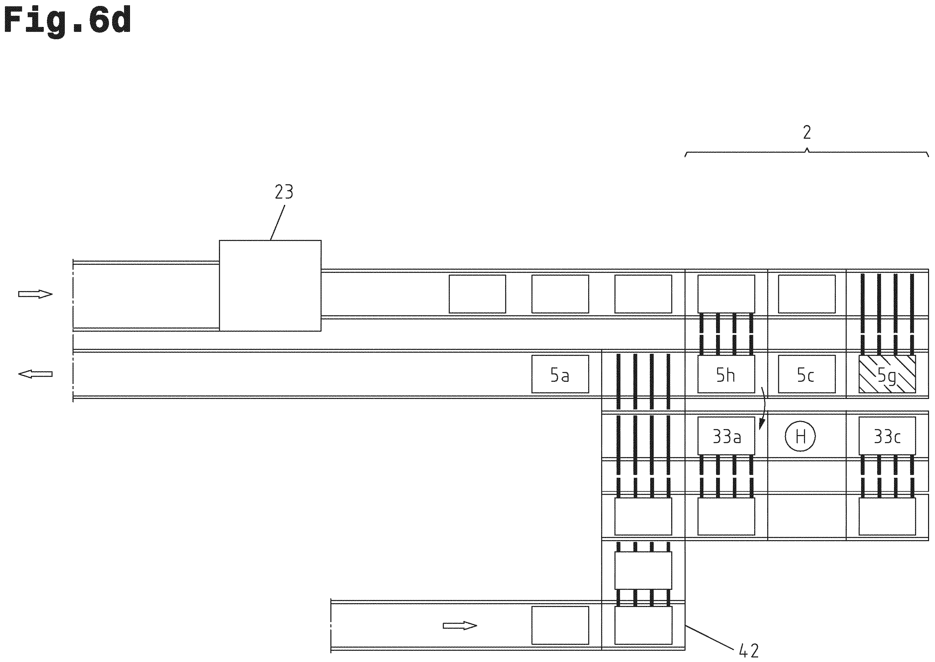

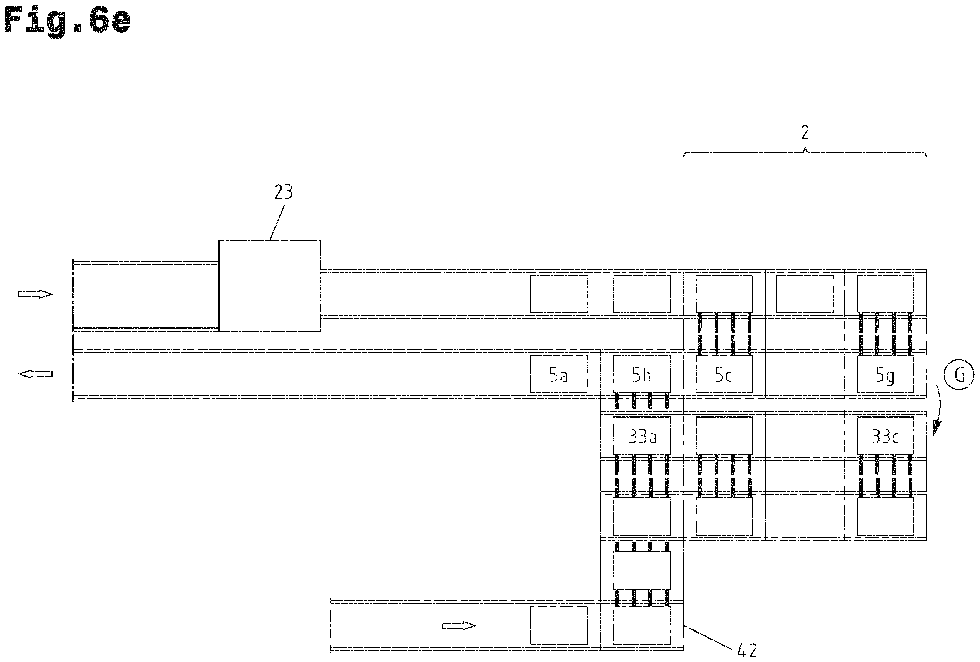

Das Verfahren kann die Schritte umfassen:
m) Antransport eines dritten Quellbehälters 5h zur Bearbeitung der nächsten Auftragszeile zum ersten Auftrag zur ersten Andienungsvorrichtung 24a mit dem ersten Entnahmeplatz 27a und/oder Antransport eines vierten Quellbehälters 5g zur Bearbeitung der nächsten Auftragszeile zum zweiten Auftrag zur zweiten Andienungsvorrichtung 24b mit dem zweiten Entnahmeplatz 27b mit der automatisiert betriebenen Quellbehälter-Fördertechnik, wobei die Quellbehälter 5h, 5g unterschiedliche Waren H, G (nicht dargestellt) bevorraten (siehe Fig. 6a-6e),
n) Bereitstellung des ersten Zielbehälters 33a auf dem ersten Beladeplatz 37a (auch) während des Antransportes des dritten Quellbehälters 5h, um die nächste Auftragszeile zum ersten Auftrag zu bearbeiten, und/oder Bereitstellung des zweiten Zielbehälters 33c auf dem zweiten Beladeplatz 37b (auch) während des Antransportes des vierten Quellbehälters 5g, um die nächste Auftragszeile zum zweiten Auftrag zu bearbeiten (siehe Fig. 6a-6e),
o) Ermittlung einer Greifflächenpose einer Greiffläche 63 für zumindest eine der Waren H im dritten Quellbehälter 5c mit Hilfe eines Sensorsystems 62a, nachdem der dritte Quellbehälter 5c am ersten Entnahmeplatz 27a bereitgestellt wurde, und Berechnung einer Greifpose für die Greifeinheit 61 aus der ermittelten Greifflächenpose durch eine Robotersteuerung 64 (siehe Fig. 6c - Schraffur des dritten Quellbehälters 5h symbolisiert die Ermittlung einer Greifflächenpose),
p) Entnahme der genannten Ware H aus dem dritten Quellbehälter 5h und Ablegen der genannten Ware H in den ersten Zielbehälter 33a durch die Greifeinheit 61 des Roboters 60 zur nächsten Auftragszeile des ersten Auftrags (siehe Fig. 6d - Pfeil symbolisiert die Entnahme und das Ablegen einer Ware H),
q) Wiederholung des Schrittes o) sofern die nächste Auftragszeile zum ersten Auftrag nochmals eine Ware H dieses Warentyps enthält, neuerliche Entnahme der genannten Ware H aus dem dritten Quellbehälter 5h und Ablegen der genannten Ware H in den ersten Zielbehälter 33a durch die Greifeinheit 61 des Roboters 60 (nicht dargestellt, da die nächste Auftragszeile eine einzige Ware H umfasst),
r) und/oder Ermittlung einer Greifflächenpose einer Greiffläche 63 für zumindest eine der Waren G im vierten Quellbehälter 5g mit Hilfe eines Sensorsystems 62b, nachdem der vierte Quellbehälter 5g am zweiten Entnahmeplatz 27b bereitgestellt wurde, und Berechnung einer Greifpose für die Greifeinheit 61 aus der ermittelten Greifflächenpose durch eine Robotersteuerung 64 (siehe Fig. 6d - Schraffur des vierten Quellbehälters 5g symbolisiert die Ermittlung einer Greifflächenpose),
s) und/oder Entnahme der genannten Ware G aus dem vierten Quellbehälter (5g) und Ablegen der genannten Ware G in den zweiten Zielbehälter 33c durch die Greifeinheit 61 des Roboters 60 zur nächsten Auftragszeile des zweiten Auftrags (siehe Fig. 6e - Pfeil symbolisiert die Entnahme und das Ablegen einer Ware G),
t) Wiederholung des Schrittes r) sofern die nächste Auftragszeile zum zweiten Auftrag nochmals eine Ware G dieses Warentyps enthält, neuerliche Entnahme der genannten Ware G aus dem vierten Quellbehälter 5g und Ablegen der genannten Ware G in den zweiten Zielbehälter 33c durch die Greifeinheit 61 des Roboters 60 (nicht dargestellt, da die nächste Auftragszeile eine einzige Ware G umfasst),
u) Abtransport des ersten Zielbehälters 33a nach Abarbeitung der Auftragszeilen zum ersten Auftrag von dem ersten Beladeplatz 37a und/oder Abtransport des zweiten Zielbehälters 33c nach Abarbeitung der Auftragszeilen zum zweiten Auftrag von dem zweiten Beladeplatz 37b unabhängig voneinander durch eine durch die Zielbehälter-Fördertechnik (siehe Fig. 6e - Zielbehälter 33a wird gerade vom ersten Beladeplatz 34a abtransportiert).

Der Schritt n) ist so zu verstehen, dass der erste Zielbehälter 33a..33g und/oder zweite Zielbehälter 33a..33g auf dem ersten Beladeplatz 34a / zweiten Beladeplatz 34b (stillstehend) solange verharrt, bis vorzugsweise alle Auftragszeilen zum ersten Auftrag und/oder alle Auftragszeilen zum zweiten Auftrag (vollständig) abgearbeitet wurden. Der erste Quellbehälter 5a..5h und/oder zweite Quellbehälter 5a..5h werden abhängig von dem zu bearbeiteten ersten Zielbehälter 33a..33g und/oder zweiten Zielbehälter 33a..33g in entsprechender Sequenz auf dem ersten Entnahmeplatz 24a und/oder zweiten Entnahmeplatz 24b bereitgestellt.

Wiederholend zum oben Beschriebenen sei auch hier nochmals erwähnt, dass es eine vorteilhaften Maßnahme ist, wenn der Schritt r) nach der (vollständigen) Abarbeitung der Auftragszeile zum ersten Auftrag und während der Bewegung des Roboters 60 / der Greifeinheit 61 vom ersten Zielbehälter 33a zum vierten Quellbehälter 5g durchgeführt wird. Die Robotersteuerung 64 erhält vom Sensorsystem 62b vorzugsweise kurz bevor der Roboter 60 / die Greifeinheit 61 den vierten Quellbehälter 5g erreicht hat, die Greifflächenpose einer Greiffläche 63 für zumindest eine der Waren G im vierten Quellbehälter 5g. Der Schritt o) wird nach der (vollständigen) Abarbeitung der Auftragszeile zum zweiten Auftrag während der Bewegung des Roboters 60 / der Greifeinheit 61 vom zweiten Zielbehälter 33c zum dritten Quellbehälter 5h durchgeführt. Die Robotersteuerung 64 erhält vom Sensorsystem 62a vorzugsweise kurz bevor der Roboter 60 / die Greifeinheit 61 den dritten Quellbehälter 5h erreicht hat, die Greifflächenpose einer Greiffläche 63 für zumindest eine der Waren H im dritten Quellbehälter 5a.

Darüber hinaus kann es vorgesehen sein, dass der dritte Quellbehälter 5h und/oder vierte Quellbehälter 5g nach dem Kommissionieren der Waren H, G gemäß den Schritten p) und q) und/oder Schritten s) und t) unabhängig voneinander in einen Lagerbereich 1 zurückgelagert werden, sofern nach der Warenentnahme Waren H, G im dritten Quellbehälter 5h und/oder vierten Quellbehälter 5g verbleiben.

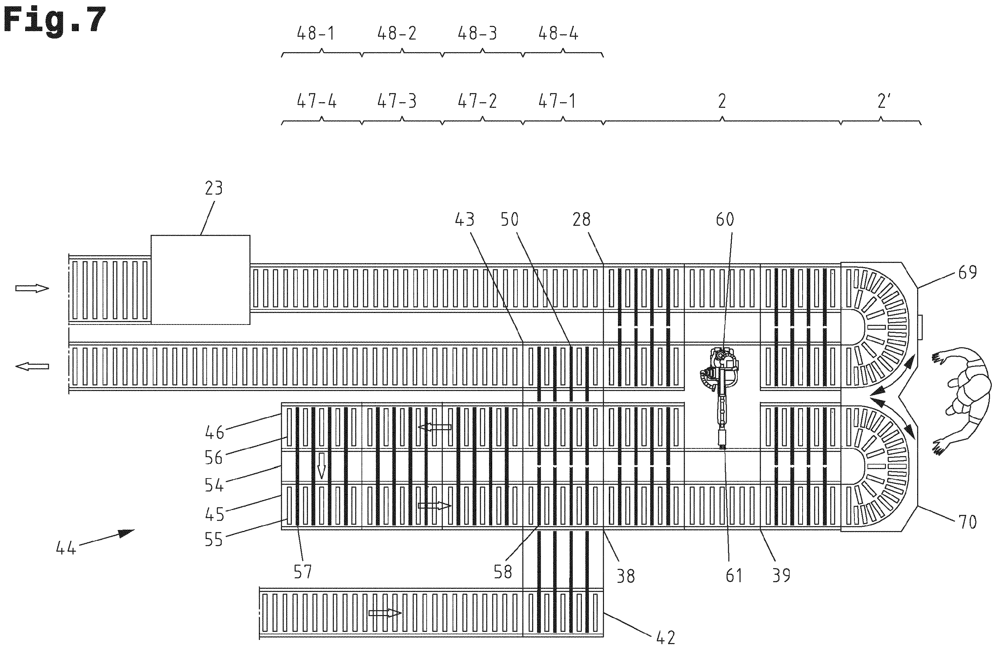

Fig. 7 zeigt eine mögliche Kombination aus der oben beschriebenen Kommissionierstation 2 mit Roboter 60 zur automatischer Kommissionierung und einer Kommissionierstation 2' mit manueller Kommissionierung mit einer Bedienperson. Eine solche Kommissionierstation 2` mit manueller Kommissionierung ist in der WO 2018/006112 A1 beschrieben. Dabei kann derselbe Aufbau der Andienungsvorrichtung 69 für Quellbehälter und derselbe Aufbau der Andienungsvorrichtung für Zielbehälter 70 verwendet werden. Die Andienungsvorrichtung 69 hat vorzugsweise einen einzigen Entnahmeplatz für einen Quellbehälter und die Andienungsvorrichtung 70 hat vorzugsweise einen einzigen Beladeplatz für einen Zielbehälter. Eine solche Ausführung ermöglicht, dass jene Waren, welche vom Roboter 60 / Greifeinheit 61 nur schwer oder gar nicht manipuliert (kommissioniert) werden können, an der Kommissionierstation 2` mit manueller Kommissionierung bearbeitet werden. Die Quellbehälter-Fördertechnik der Kommissionierstation 2 ist mit der Andienungsvorrichtung 69 fördertechnisch verbunden und die Zielbehälter-Fördertechnik der Kommissionierstation 2 ist mit der Andienungsvorrichtung 70 fördertechnisch verbunden. Somit können die Quellbehälter, welche solche Waren enthalten, an der Andienungsvorrichtung 69 bereitgestellt werden. Die Zielbehälter, welche mit solchen Waren beladen werden, können an der Andienungsvorrichtung 70 bereitgestellt werden.

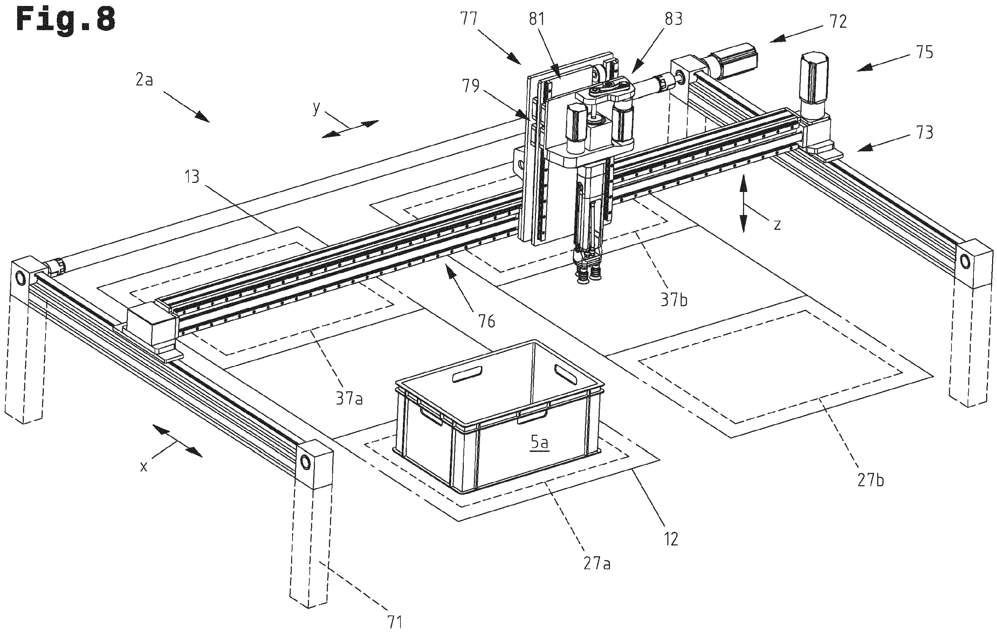

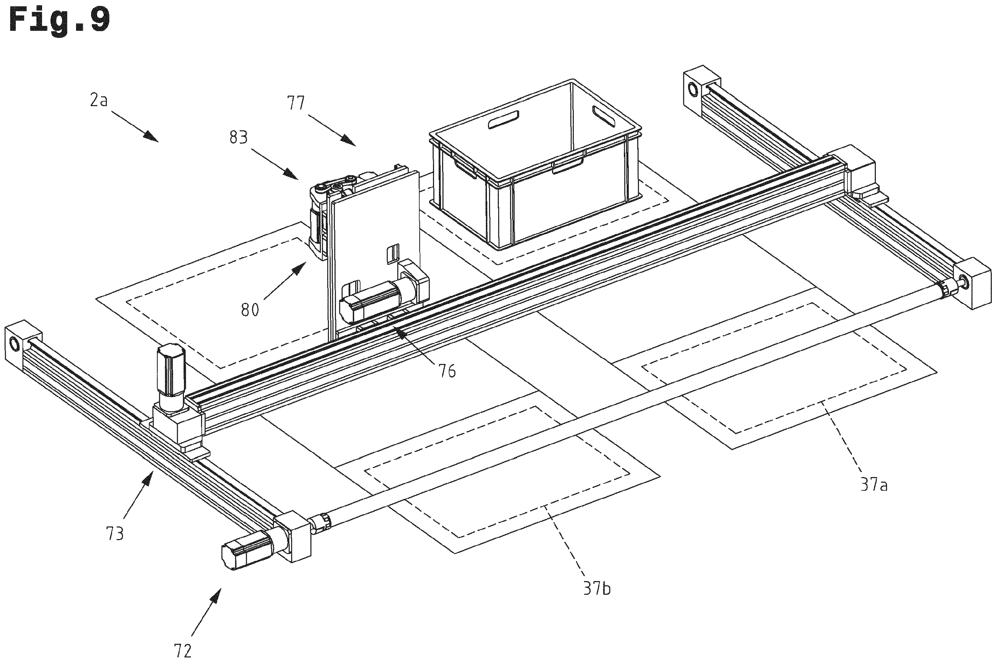

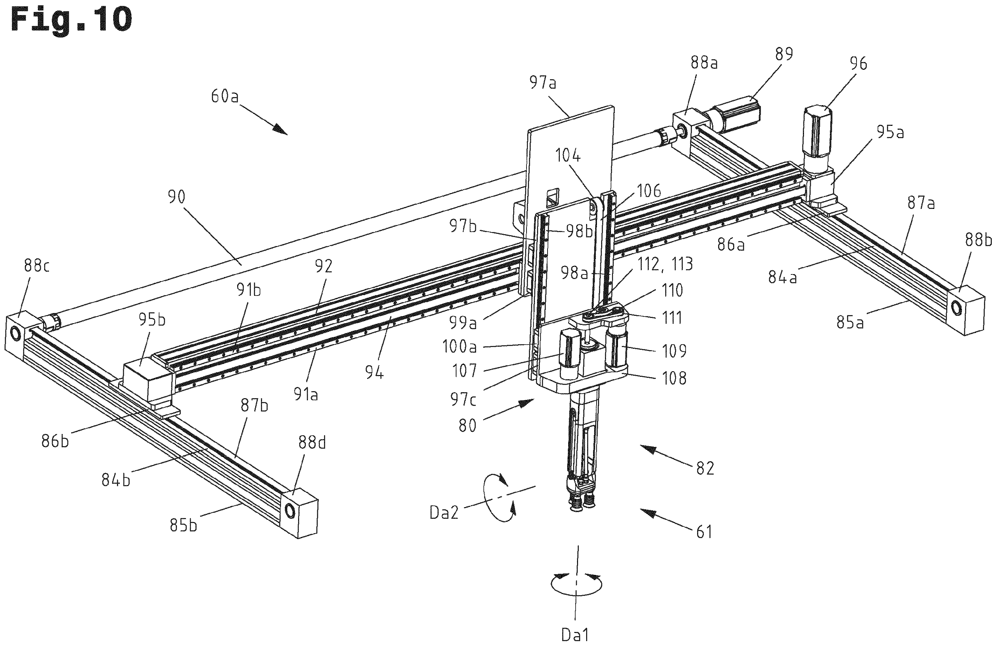

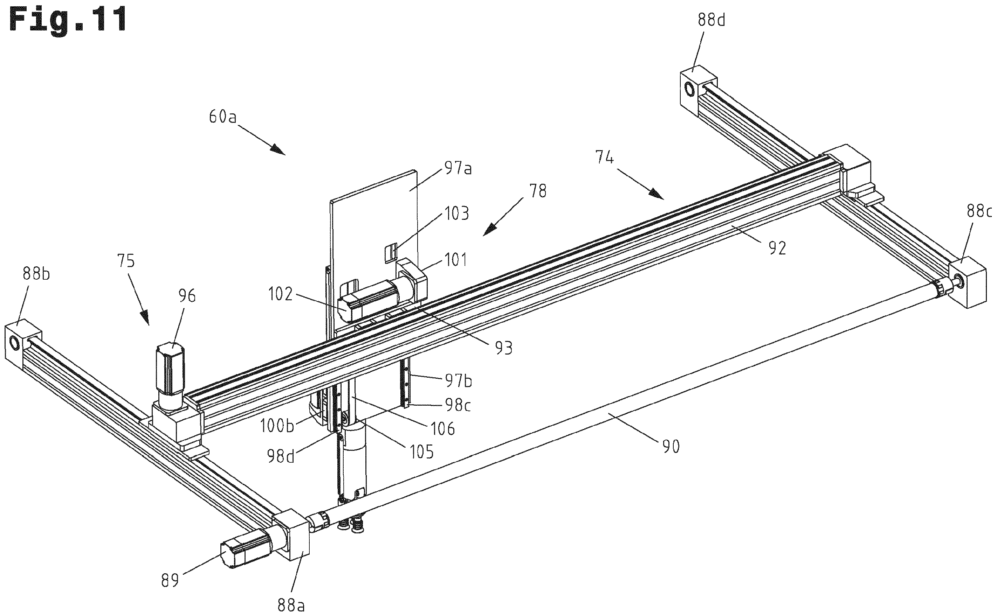

Die Fig. 8 und 9 zeigen nun eine beispielhafte Kommissionierstation 2a mit einem vollautomatisierten Robotersystem, welches einen Portalroboter 60a umfasst, in Schrägansicht, wobei die Fig. 8 die Kommissionierstation 2a schräg von vorne und die Fig. 9 die Kommissionierstation 2a schräg von hinten zeigt. Die Fig. 10 und 11 zeigen den Portalroboter 60a aus den Fig. 8 und 9 mit nach unten ausgefahrener Greifeinheit 61 ebenfalls in Schrägansicht. Die Fig. 10 zeigt den Portalroboter 60a dabei schräg von vorne und die Fig. 11 schräg von hinten. Dieser Portalroboter 60a kann an der oben beschriebenen Kommissionierstation 2 verwendet werden. Ebenso kann dieser Portalroboter 60a zur Ausführung der oben beschriebenen Verfahren zum vollautomatisierten Kommissionieren von verschiedenen Waren aus Quellbehältern 5a..5h in Zielbehälter 33a..33g (vergleiche auch Ansprüche 16 bis 25 oder Ansprüche 26 bis 38) verwendet werden.

Die Kommissionierstation 2a umfasst zwei Entnahmeplätze 27a, 27b, die Teil einer Fördervorrichtung 12 sind oder mit dieser verbindbar sind, sowie zwei Beladeplätze 37a, 37b, die Teil einer Fördervorrichtung 13 sind, oder mit dieser verbindbar sind. Auf dem Entnahmeplatz 27a ist in diesem Beispiel ein Quellbehälter 5a angeordnet. Der Entnahmeplatz 27b ist in diesem Beispiel leer, es könnte aber natürlich ein Quellbehälter 5b darauf angeordnet sein.

Die Beladeplätze 37a, 37b sind diesem Beispiel ebenfalls leer, jedoch könnten Zielbehälter 33a, 33b darauf positioniert sein.

Die Kommissionierstation 2a umfasst in dem gezeigten Beispiel zwei Entnahmeplätze 27a, 27b, und zwei Beladeplätze 37a, 37b. Denkbar wäre aber auch, dass eine andere Zahl an Entnahmeplätzen 27a, 27b, und Beladeplätzen 37a, 37b vorgesehen ist, beispielsweise nur ein Entnahmeplatz 27a und ein Beladeplatz 37a oder auch mehr als zwei Entnahmeplätze 27a, 27b, und Beladeplätzen 37a, 37b. Denkbar ist weiterhin, dass die zu kommissionierenden Waren A..H direkt (also ohne Quellbehälter 5a, 5b und Zielbehälter 33a, 33b auf den Entnahmeplätzen 27a, 27b, und Beladeplätzen 37a, 37b bereitgestellt werden.

Die Fördervorrichtung 12 ist Teil einer Quellbehälter-Fördertechnik zum automatisierten Transport von Quellbehältern 5a, 5b. Weiterhin ist die Fördervorrichtung 13 Teil einer Zielbehälter-Fördertechnik zum automatisierten Transport von Zielbehältern 33a, 33b. Die Quellbehälter-Fördertechnik und/oder die Zielbehälter-Fördertechnik kann insbesondere so wie in einer der vorstehenden Figuren ausgebildet sein. Demgemäß kann die Quellbehälter-Fördertechnik eine erste Andienungsvorrichtung 24a aufweisen, welche den ersten Entnahmeplatz 27a umfasst, und eine optionale zweite Andienungsvorrichtung 24b, welche den zweiten Entnahmeplatz 27b umfasst. Die Zielbehälter-Fördertechnik kann weiterhin eine erste Andienungsvorrichtung 34a aufweisen, welche den ersten Beladeplatz 37a umfasst, und eine zweite Andienungsvorrichtung 34b, welche den zweiten Beladeplatz 37b umfasst.

Die Quellbehälter-Fördertechnik zum automatisierten Transport von Quellbehältern 5a, 5b und/oder die Zielbehälter-Fördertechnik zum automatisierten Transport von Zielbehältern 33a, 33b können gemäß den oben beschriebenen Ausführungen ausgebildet werden. Ebenso kann die oben beschriebenen Ablageplatte 66a und/oder Ablageplatte 66b und/oder Ablageplatte 66c und/oder Ablageplatte 66d vorhanden sein.

Der Portalroboter 60a umfasst ein Grundgestell, dass in diesem Beispiel vier Vertikalsteher 71 umfasst. Das Grundgestell könnte darüber hinaus mit den Vertikalstehern 71 verbundene (und in x-Richtung verlaufende) Längsträger und/oder (in y-Richtung verlaufende) Querträger aufweisen. Denkbar wäre auch, dass das Grundgestell anstelle der Vertikalsteher 71 oder zusätzlich dazu mehrere Seitenwände aufweist.

Der Portalroboter 60a umfasst in diesem Beispiel weiterhin einen gegenüber den Vertikalstehern 71 des Grundgestells verschiebbar gelagerten und über eine erste Antriebsvorrichtung 72 entlang einer ersten Führungsanordnung 73 in einer ersten Richtung x horizontal bewegbaren ersten Portalschlitten 74. Zudem umfasst der Portalroboter 60a einen am ersten Portalschlitten 74 verschiebbar gelagerten und über eine zweite Antriebsvorrichtung 75 entlang einer zweiten Führungsanordnung 76 in einer in einer quer zur ersten Richtung x verlaufenden, zweiten Richtung y horizontal bewegbaren zweiten Portalschlitten 77. Weiterhin umfasst der Portalroboter 60a einen am zweiten Portalschlitten 77 verschiebbar gelagerten und über eine dritte Antriebsvorrichtung 78 entlang einer dritten Führungsanordnung 79 in einer dritten Richtung z vertikal bewegbaren dritten Portalschlitten 80. Darüber hinaus umfasst der Portalroboter 60a eine mit dem dritten Portalschlitten 80 gekoppelte und um eine erste Drehachse Da1 drehbar gelagerte und über eine vierte Antriebsvorrichtung 81 bewegbare Greifeinheit 61.

Konkret umfasst der Portalroboter 60a einen über die vierte Antriebsvorrichtung 81 bewegbaren Portalarm 82, welcher am dritten Portalschlitten 80 um eine erste, vertikale Drehachse Da1 drehbar gelagert ist. Die Greifeinheit 61 ist am Portalarm 82 um eine zweite, horizontale Drehachse Da2 drehbar gelagert und über eine fünfte Antriebsvorrichtung 83 bewegbar. Demgemäß ist die Greifeinheit 61 sowohl um die vertikale Drehachse Da1 drehbar als auch um die horizontale Drehachse Da2. Daher kann die Greifeinheit 61 besonders gut in eine vorteilhafte Greifpose bewegt werden, beispielsweise wenn die zu greifende Ware A..H durch eine schräg in einem Quellbehälter liegende Schachtel gebildet ist oder wenn die Greifeinheit 61 von unten gesehen nicht (rotations)symmetrisch aufgebaut ist, so wie das bei dem gezeigten Portalroboter 60a der Fall ist. Auch wenn eine Drehung um zwei Drehachsen Da1, Da2 von Vorteil ist, wäre natürlich auch denkbar, dass die die Greifeinheit 61 nur um eine vertikale Drehachse Da1 oder nur um eine horizontale Drehachse Da2 gedreht werden kann.

Der Portalroboter 60a umfasst in diesem Beispiel weiterhin konkret eine erste x-Führungsschiene 84a, welche auf einem ersten x-Träger 85a angeordnet ist, und eine zweite x-Führungsschiene 84b, welche auf einem zweiten x-Träger 85b angeordnet ist. Auf der ersten x-Führungsschiene 84a ist der erste x-Führungswagen 86a des ersten Portalschlittens 74 verschiebbar gelagert, und auf der zweiten x-Führungsschiene 84b ist der zweite x-Führungswagen 86b des ersten Portalschlittens 74 verschiebbar gelagert. Die erste x-Führungsschiene 84a, der erste x-Führungswagen 86a, die zweite x-Führungsschiene 84b und der zweite x-Führungswagen 86b bilden in diesem Beispiel die erste Führungsanordnung 73.

Die erste Antriebsvorrichtung 72 umfasst nach der in den Fig. 8 bis 11 dargestellten Ausführung einen mit dem ersten Portalschlitten 74 verbundenen x-Zugmitteltrieb, welcher in diesem Beispiel ein endlos umlaufendes erstes x-Zugmittel 87a und ein endlos umlaufendes zweites x-Zugmittel 87b aufweist. Das erste x-Zugmittel 87a und das zweite x-Zugmittel 87b sind jeweils um ein Umlenkrad und ein Antriebsrad (nicht dargestellt) geführt, die in ersten Rad-Gehäusen 88a..88d an den Enden der x-Träger 85a, 85b angeordnet sind. Eines der Antriebsräder ist an einen elektrischen x-Stellmotor 89 gekoppelt, und die beiden Antriebsräder des x-Zugmitteltriebs sind in diesem Beispiel über eine Koppelwelle 90 gekoppelt. Denkbar wäre aber auch, dass die x-Zugmittel 87a, 87b über getrennte (und elektronisch gekoppelte) x-Stellmotoren 89 angetrieben werden. Die Koppelwelle 90 kann dann entfallen.

Durch eine Drehbewegung des Antriebsrades im Uhrzeigersinn oder im Gegenuhrzeigersinn wird der erste Portalschlitten 74 (und damit auch der zweite Portalschlitten 77 und der dritte Portalschlitten 80) relativ zu den Entnahmeplätzen 27a, 27b und zum Quellbehälter 5a, 5b sowie relativ zu den Beladeplätzen 37a, 37b und zum Zielbehälter 33a, 33b horizontal in x-Richtung bewegt.

Der Portalroboter 60a umfasst in diesem Beispiel weiterhin eine erste y-Führungsschiene 91a und eine zweite y-Führungsschiene 91b, welche auf einem y-Träger 92 angeordnet sind. Auf der ersten y-Führungsschiene 91a und der zweiten y-Führungsschiene 91b ist der y-Führungswagen 93 des zweiten Portalschlittens 77 verschiebbar gelagert. Die erste y-Führungsschiene 91a, die zweite y-Führungsschiene 91b und der y-Führungswagen 93 bilden in diesem Beispiel die zweite Führungsanordnung 76.

Die zweite Antriebsvorrichtung 75 umfasst nach der in den Fig. 8 bis 11 dargestellten Ausführung einen mit dem zweiten Portalschlitten 77 verbundenen y-Zugmitteltrieb, welcher in diesem Beispiel ein ebenfalls endlos umlaufendes y-Zugmittel 94 aufweist. Das erste y-Zugmittel 94 ist wiederum um ein Umlenkrad und ein Antriebsrad (nicht dargestellt) geführt, die in zweiten Rad-Gehäusen 95a, 95b an den Enden des y-Trägers 92 angeordnet sind. Das Antriebsrad ist an einen elektrischen y-Stellmotor 96 gekoppelt.

Durch eine Drehbewegung des Antriebsrades im Uhrzeigersinn oder im Gegenuhrzeigersinn wird der zweite Portalschlitten 77 (und damit auch der dritte Portalschlitten 80) relativ zu den Entnahmeplätzen 27a, 27b und zum Quellbehälter 5a, 5b sowie relativ zu den Beladeplätzen 37a, 37b und zum Zielbehälter 33a, 33b horizontal in y-Richtung bewegt.

Der Portalroboter 60a umfasst weiterhin drei Basisplatten 97a..97c, die gegeneinander in z-Richtung verschiebbar gelagert sind. Auf der zweiten Basisplatte 97b sind in diesem Beispiel vier z-Führungsschienen 98a..98d angeordnet. Die Führungsschienen 98a, 98b sind auf der Vorderseite der zweiten Basisplatte 97b angeordnet, und die beiden anderen Führungsschienen 98c, 98d sind jeweils hinter den Führungsschienen 98a, 98b auf der Rückseite der zweiten Basisplatte 97b angeordnet. Die Führungsschienen 98a, 98b auf der Rückseite der zweiten Basisplatte 97b sind verschiebbar in z-Führungswägen 99a gelagert, die auf der ersten Basisplatte 97a montiert sind (Anmerkung: in den Fig. 8 bis 11 ist nur ein z-Führungswagen 99a der beiden z-Führungswägen sichtbar). Zwei weitere z-Führungswägen 100a, 100b sind auf der dritten Basisplatte 98c montiert und auf den Führungsschienen 98a, 98b verschiebbar gelagert.

Die erste Basisplatte 97a und die z-Führungswägen 99a sind somit vom zweiten Portalschlitten 77 umfasst. Die zweite Basisplatte 97b und die dritte Basisplatte 97c, die Führungsschienen 98a..98d und die z-Führungswägen 100a, 100b sind Teil des dritten Portalschlittens 80.

Die dritte Antriebsvorrichtung 78 umfasst nach der in den Fig. 8 bis 11 dargestellten Ausführung ein Zahnrad (nicht dargestellt) in einem Zahnradgehäuse 101. Das Zahnrad ist mit einer Welle eines elektrischen z-Stellmotors 102 verbunden und kämmt mit einer Zahnstange 103, die auf der Rückseite der zweiten Basisplatte 97b montiert ist. Dadurch kann die zweite Basisplatte 97b gegenüber der ersten Basisplatte 97a bewegt werden. Auf der zweiten Basisplatte 97b ist im oberen Bereich ein erstes Umlenkrad 104 und im unteren Bereich ein zweites Umlenkrad 105 drehbar gelagert, um welche ein z-Zugmittel 106 geführt ist. Das z-Zugmittel 106 ist jeweils mit der ersten Basisplatte 97a und mit der dritten Basisplatte 97c verbunden. Bei einer Bewegung der zweiten Basisplatte 97b relativ zur ersten Basisplatte 97a wird dadurch auch die dritte Basisplatte 97c gegenüber der der zweiten Basisplatte 97b bewegt, obwohl das z-Zugmittel 106 selbst nicht durch einen Motor angetrieben wird. Insgesamt ergibt sich damit ein Zweifach-Teleskop.

Durch Drehbewegung des genannten Zahnrads im Uhrzeigersinn oder im Gegenuhrzeigersinn wird der dritte Portalschlitten 80 somit relativ zu den Entnahmeplätzen 27a, 27b und zum Quellbehälter 5a, 5b sowie relativ zu den Beladeplätzen 37a, 37b und zum Zielbehälter 33a, 33b vertikal in z-Richtung bewegt.

Die Fig. 8 und 9 zeigen den dritten Portalschlitten 80 in seiner oberen Ruhestellung. Die Fig. 10 und 11 zeigen eine Ansicht, in welcher der dritte Portalschlitten 80 und damit die bewegbare Greifeinheit 61 nach unten ausgefahren sind.

Der Portalroboter 60a kann eine nicht dargestellte Wegmessvorrichtung umfassen, mittels welchem die Verstellbewegungen des ersten Portalschlittens 74, des zweiten Portalschlittens 77 und des dritten Portalschlittens 80 erfasst werden. Dabei kann man sich das Messverfahren der absoluten und inkrementalen Wegmessung zu Nutze machen.

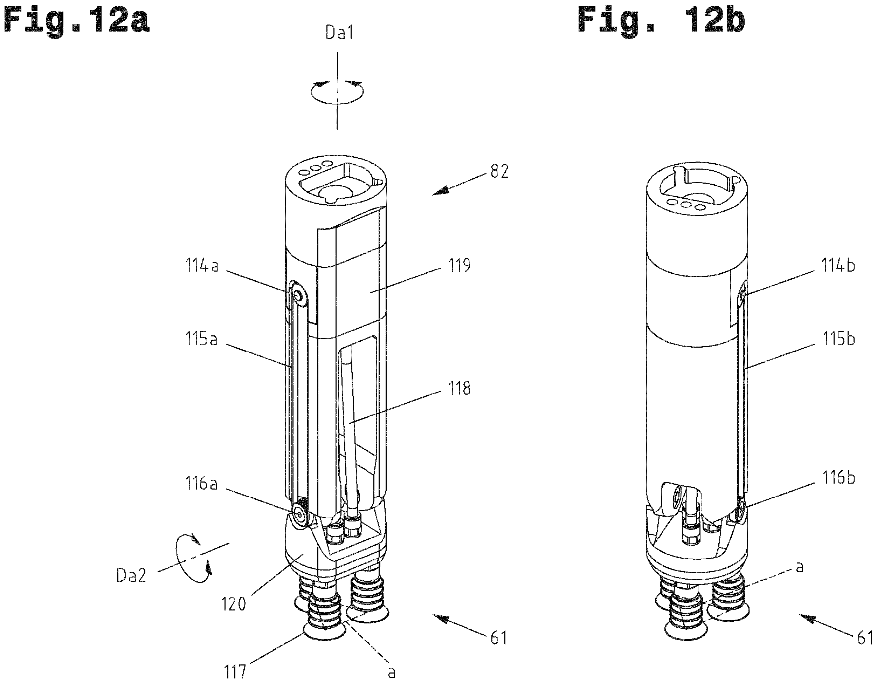

Fig. 12a zeigt nun eine Detailansicht des Portalarms 82 mit der im unteren Bereich angeordneten Greifeinheit 61 von schräg vorne. Fig. 12b zeigt den Portalarm 82 mit der im unteren Bereich angeordneten Greifeinheit 61 von schräg hinten.

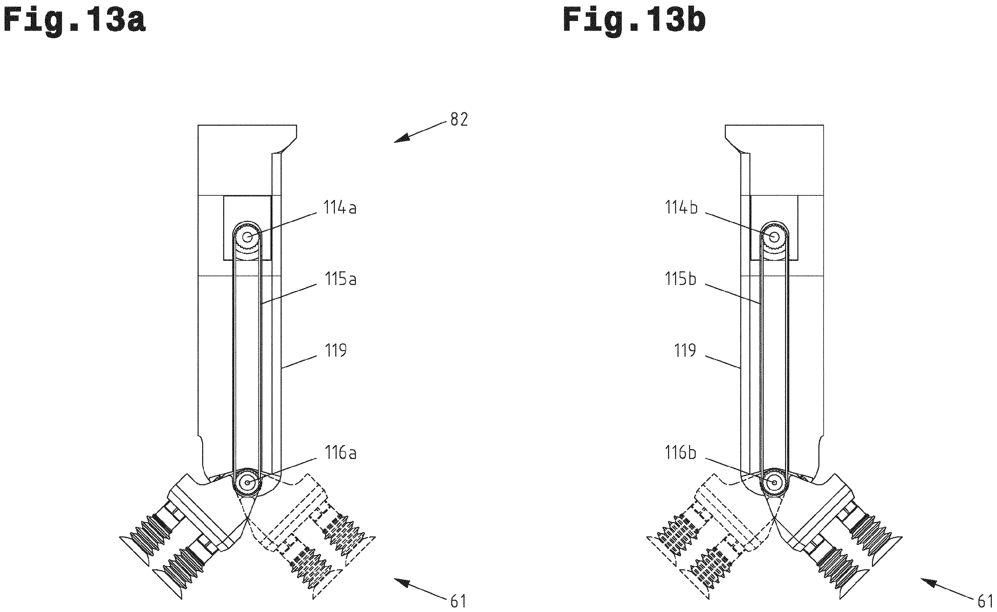

Fig. 13a zeigt weiterhin eine Detailansicht des Portalarms 82 mit der im unteren Bereich angeordneten Greifeinheit 61 von der linken Seite, die Fig. 13b von der rechten Seite. Dabei ist Die Greifeinheit 61 um 45° um die horizontale Drehachse Da2 nach hinten geschwenkt. Mit strichlierten Linien ist auch eine Verschwenkung der Greifeinheit 61 um 45° nach vorne dargestellt. Ein Schwenkwinkel von 45° ist dabei nicht einschränkend zu verstehen, sondern die Greifeinheit 61 kann auch um einen anderen Schwenkwinkel um die horizontale Drehachse Da2 geschwenkt werden.

Die vierte Antriebsvorrichtung 81 umfasst nach der in den Fig. 8 bis 13b dargestellten Ausführung einen ersten Dreh-Stellmotor 107, welcher auf den Portalarm 82 über ein Getriebe (nicht dargestellt) im ersten Getriebegehäuse 108 eine Drehbewegung überträgt und so eine Relativdrehung des Portalarms 82 relativ zu den Entnahmeplätzen 27a, 27b und zum Quellbehälter 5a, 5b sowie relativ zu den Beladeplätzen 37a, 37b und zum Zielbehälter 33a, 33b ermöglicht. Der mögliche Drehwinkel beträgt im gezeigten Beispiel 360°, und insbesondere kann der Portalarm 82 endlos gedreht werden. Es wäre aber auch denkbar, dass der Drehwinkel des Portalarms 82 auf kleinere Drehwinkel beschränkt wird.

Die fünfte Antriebsvorrichtung 83 umfasst nach der in den Fig. 8 bis 13b dargestellten Ausführung einen zweiten Dreh-Stellmotor 109, welcher auf die Greifeinheit 61 eine Drehbewegung überträgt und so eine Relativdrehung der Greifeinheit 61 relativ zu den Entnahmeplätzen 27a, 27b und zum Quellbehälter 5a, 5b sowie relativ zu den Beladeplätzen 37a, 37b und zum Zielbehälter 33a, 33b ermöglicht. Konkret erfolgt die Übertragung der Drehbewegung von einem ersten Riemenrad 110 über einen ersten Riemen 111 auf ein zweites Riemenrad 112, auf die Welle 113, von der Welle auf ein nicht dargestelltes (Winkel)getriebe, auf zwei dritte Riemenräder 114a, 114b, auf zwei zweite Riemen 115a, 115b und schließlich auf zwei vierte Riemenräder 116a, 116b. Der mögliche Schwenkwinkel beträgt im gezeigten Beispiel ±45°. Es wäre aber auch denkbar, dass der maximale Drehwinkel der Greifeinheit 61 kleiner als ±45° ist oder auch größer als ±45°.

Der Portalroboter 60a kann darüber hinaus eine nicht dargestellte Winkelmessvorrichtung umfassen, mittels welcher die Verstellbewegungen des Portalarms 82 und der Greifeinheit 61, erfasst werden. Dabei kann man sich das Messverfahren der absoluten und inkrementalen Winkelmessung zu Nutze machen.

Gut erkennbar ist insbesondere in den Fig. 12a und 12b, dass die Greifeinheit 61 in diesem Beispiel drei Vakuum-Sauggreifer 117 umfasst, welche über Fluidleitungen, insbesondere Luftschläuche 118 an einen Unterdruckgenerator (nicht dargestellt) angeschlossen sind. Es erweist sich von Vorteil, wenn die Luftschläuche 118 (Fluidleitungen) in einem nicht näher dargestellten und in Längsrichtung des Portalarms 82 verlaufenden innenliegenden (integral ausgebildeten) Leitungsaufnahmekanal untergebracht sind. Andererseits können Luftführungskanäle (Fluidleitungen) im Portalarm 82 ausgearbeitet sein, beispielsweise sind im Portalarm Bohrungen vorhanden, welche die Luftführungskanäle bilden.

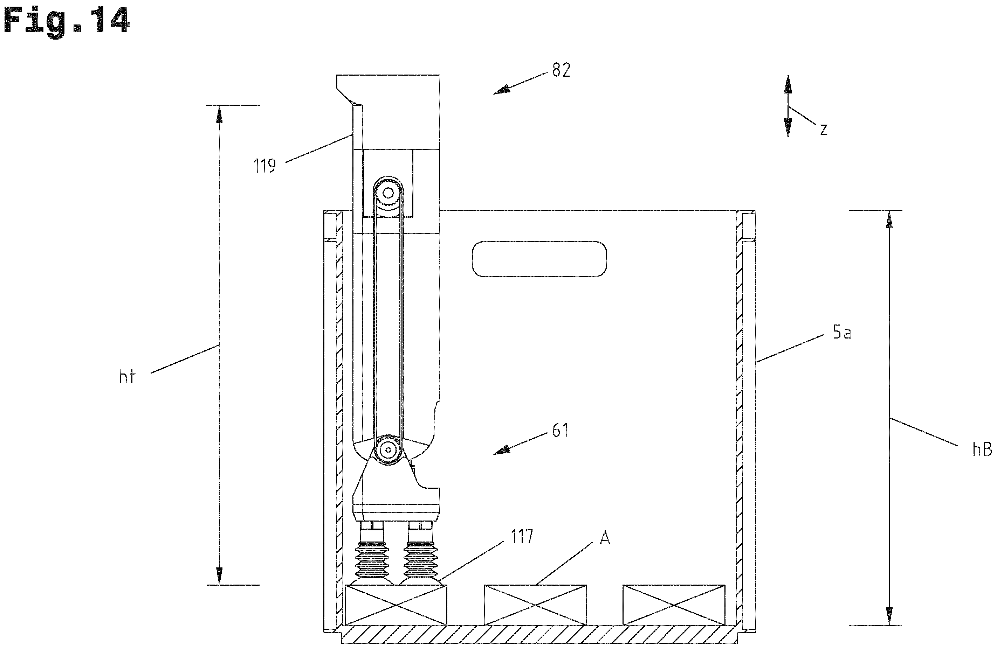

Mit anderen Worten sind die Fluidleitungen integral im Portalarm 82 vorhanden. Dies begünstigt wiederum die Entnahme einer Ware aus einem Quellbehälter 5a oder das Ablegen einer Ware in einen Zielbehälter 33. Der Portalarm 82 kann ungehindert und besonders nahe an eine Behälterwand bewegt und in den Quellbehälter 5a oder Zielbehälter 33 eintauchen, wie in Fig. 14 gezeigt.

Wegen der Redundanz der Vakuum-Sauggreifer 117 können Waren A..H auf diese Weise bei besonders geringer Fehlerrate ergriffen werden. Das heißt, eine Anzahl fehlgeschlagener Handhabungen von Waren A..H im Verhältnis zu einer Gesamtanzahl an Handhabungen dieser Waren A..H ist gering.

Konkret sind die Vakuum-Sauggreifer 117 im Dreieck angeordnet und bilden eine Greifebene aus, wodurch insbesondere Waren A..H gut erfasst werden, die eine ebene Begrenzungsfläche oder mehrere solcher Begrenzungsflächen aufweisen, beispielsweise Schachteln.

Vorteilhaft umfasst der Portalarm 82 eine ebene, vertikale Begrenzungsfläche 119, welche parallel zu einer der Seiten a jenes Dreiecks ausgerichtet ist, an dessen Eckpunkten die Mittelpunkte der Vakuum-Sauggreifer 117 liegen. Insbesondere kann der Portalarm 82, so wie das in den Fig. 8 bis 13a dargestellt ist, einen runden (kreisförmigen) Querschnitt aufweisen, der im Bereich der genannten, vertikalen Begrenzungsfläche 119 abgeflacht ist. Denkbar wäre aber auch, dass der Portalarm 82 einen polygonförmigen Querschnitt aufweist (insbesondere einen rechteckförmigen Querschnitt oder dreieckförmigen Querschnitt). Die genannte, vertikale Begrenzungsfläche 119 ist dann durch eine Seitenfläche eines polygonförmigen Prismas gebildet.

Durch die zumindest eine, zu einer der Seiten des Dreiecks ausgerichtete, vertikale Begrenzungsfläche 119 des Portalarms 82 kann dieser besonders nahe an einer Behälterwand in einen Quellbehälter 5a oder Zielbehälter 33 eingetaucht werden, um eine Ware A..H zu greifen, so wie das beispielhaft in der Fig. 14 für die Ware A gezeigt ist.

Vorteilhaft ist die ebene, vertikale Begrenzungsfläche 119 des Portalarms 82 bis zum unteren Ende der Greifeinheit 61 größer (länger) als die 1,1-fache Behälterhöhe hB des Quellbehälters 5a und/oder des Zielbehälters 33, so wie das im Zusammenhang mit der Fig. 14 gezeigt ist. Das heißt es gilt:
Eintauch-Höhe ht > 1,1-fache Behälterhöhe hB.

Im gezeigten Beispiel weist der Portalarm 82 eine vertikale, ebene Begrenzungsfläche 119 (Seitenwand) auf, welche gegenüber einer maximalen Querschnittskontur des Portalarms 82 zurückversetzt ist. Denkbar wäre aber auch, dass der (gesamte) Portalarm 82 eine prismatische Außenkontur aufweist.

Wie in Fig. 14 ersichtlich, kann es sich auch von Vorteil erweisen, wenn ein Durchmesser der Greifeinheit 61, unabhängig davon welche Anzahl an Vakuum-Sauggreifern 117 verwendet wird, nicht oder nicht wesentlich größer ist als ein Durchmesser des Portalarms 82.

An dieser Stelle wird angemerkt, dass der Portalarm 82 beziehungsweise die Greifeinheit 61 von unten gesehen nicht rotationssysmmetrisch sind, weswegen eine Drehbarkeit der Greifeinheit 61 um die vertikale Drehachse Da1 von besonderem Vorteil ist. Sind der Portalarm 82 und die Greifeinheit 61 von unten gesehen dagegen rotationssysmmetrisch, so kann die Drehbarkeit der Greifeinheit 61 um die vertikale Drehachse Da1 unter Umständen auch ohne wesentlichen Nachteil entfallen.

Von Vorteil ist es auch, wenn der Portalroboter 60a eine am Portalarm 82 um die zweite, horizontale Drehachse Da2 drehbar gelagerte Greiferaufnahme 120 aufweist, an welcher die Greifeinheit 61 befestigt ist. Durch die Greiferaufnahme 120 können Greifeinheiten 61 verschiedener Art auf dem Portalroboter 60a befestigt werden, wobei die Greifeinheiten 61 jeweils an unterschiedliche Greifaufgaben angepasst sind. Beispielsweise können neben Greifeinheiten 61 mit Vakuum-Sauggreifern 117 auch mechanische Greifelemente (z.B. eine Roboterhand oder eine Greifzange) auf der Greifeinheit 61 angeordnet sein. Darüber hinaus ist eine Greifeinheit 61 nicht auf drei im Dreieck angeordnete Vakuum-Sauggreifer 117 eingeschränkt, sondern die Greifeinheit 61 kann auch mehr oder weniger als drei Vakuum-Sauggreifer 117 aufweisen, und die Vakuum-Sauggreifer 117 können auch geometrisch anders angeordnet sein.

In einer weiteren vorteilhaften Ausführungsvariante der Kommissionierstation 2a umfasst diese zumindest einen Behälter-Antrieb
zum Drehen des zumindest einen Entnahmeplatzes 27a, 27b (inklusive einem darauf bereitgestellten Quellbehälter 5a, 5b) und des zumindest einen Beladeplatzes 37a, 37b (inklusive einem darauf bereitgestellten Zielbehälter 33a, 33b) relativ zum Grundgestell 71 des Portalroboters 60a um eine vertikale Drehachse, und/oder
zum Kippen des zumindest einen Entnahmeplatzes 27a, 27b (inklusive einem darauf bereitgestellten Quellbehälter 5a, 5b) und des zumindest einen Beladeplatzes 37a, 37b (inklusive einem darauf bereitgestellten Zielbehälter 33a, 33b) relativ zum Grundgestell 71 des Portalroboters 60a um eine horizontale Drehachse.

Dadurch kann die Greifeinheit 61 ebenfalls gut in eine vorteilhafte Greifpose zum Greifen von Waren A..H bewegt werden, allerdings durch Drehung des Quellbehälters 5a, 5b und/oder Zielbehälters 33a, 33b relativ zum Portalroboter 60a. Können der Quellbehälter 5a, 5b und der Zielbehälter 33a, 33b um eine vertikale Drehachse gedreht werden, so braucht die Greifeinheit 61 an sich nicht um eine vertikale Drehachse Da2 drehbar gegenüber dem dritten Portalschlitten 80 gelagert sein. Ebenso braucht die Greifeinheit 61 nicht um eine horizontale Drehachse Da1 drehbar gegenüber dem dritten Portalschlitten 80 gelagert sein, wenn der Quellbehälter 5a, 5b und der Zielbehälter 33a, 33b um eine horizontale Drehachse gekippt werden können.

Das vollautomatisierte Robotersystem mit dem Portalroboter 60a umfasst in einer vorteilhaften Ausführungsvariante ein Sensorsystem 62a, 62b, insbesondere ein Kamerasystem, zumindest zum Erfassen der Waren A..H im ersten Quellbehälter 5a und gegebenenfalls im zweiten Quellbehälter 5b, sofern eine zweite Andienungsvorrichtung 24b vorgesehen ist, sowie eine Robotersteuerung 64, die mit dem Sensorsystem 62a, 62b verbunden ist und den Roboter 60 mit der Greifeinheit 61 ansteuert. Auf diese Weise kann der Kommissioniervorgang vollautomatisch ablaufen. Insbesondere ist durch die vorgeschlagenen Maßnahmen auch eine Korrektur beim Kommissionieren eventuell auftretender Fehler möglich.

Durch die vorgestellten Maßnahmen kann die Greifeinheit 61 besonders gut in eine vorteilhafte Greifpose bewegt werden. Insbesondere kann der Portalarm 82 in senkrechter Richtung auf einen Boden eines Quellbehälters 5a, 5b oder Zielbehälters 37a, 37b bewegt werden. Eine optimale Greifpose kann erreicht werden, indem der Portalarm 82 in seiner Vertikalstellung verbleibt, während die Greifeinheit 61 relativ zum Portalarm 82 verschwenkt wird. Der Portalarm 82 und die Greifeinheit 61 können dadurch sehr knapp neben einer Seitenwand in einen Quellbehälter 5a, 5b oder Zielbehälter 37a, 37b eintauchen, auch wenn der Portalarm 82 keine speziell geformte Begrenzungsfläche 119 aufweist. Somit können aus einem Quellbehälter 5a, 5b auch Waren A..H im Randbereich entnommen werden, und es können Waren A..H im Randbereich eines Zielbehälters 37a, 37b abgegeben werden.

Abschließend wird auch festgehalten, dass der Schutzbereich durch die Patentansprüche bestimmt ist. Die Beschreibung und die Zeichnungen sind jedoch zur Auslegung der Ansprüche heranzuziehen.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

### Bezugszeichenaufstellung

- 1: Lagerbereich
- 2, 2a: Kommissionierstation
- 3: Quellbehälter-Verteilsystem
- 4: Zielbehälter-Verteilsystem
- 5: Quellbehälter

- 6: Lagerregal
- 7: Regalgasse
- 8: Lagerplatz
- 9: Lagerbediengerät
- 10: Fördervorrichtung

- 11: Fördervorrichtung
- 12: Fördervorrichtung
- 13: Fördervorrichtung
- 14: Fördervorrichtung
- 15: Ein- und/oder Ausschleusvorrichtung

- 16: Übergabevorrichtung
- 17: Führungsbahn
- 18: Transportvorrichtung
- 19: Puffervorrichtung
- 20: Hebevorrichtung

- 21 22a, 22b: Fördermittel
- 23: Drehstation
- 24a, 24b: Andienungsvorrichtung erster Quellbehälter / zweiter Quellbehälter
- 25: Fördervorrichtung Antransport Quellbehälter

- 26: Fördervorrichtung Abtransport Quellbehälter
- 27a, 27b: Entnahmeplatz erster Quellbehälter / zweiter Quellbehälter
- 28: Umsetzvorrichtung
- 29: Umsetzvorrichtung
- 30a, 30b: Fördermittel

- 31: Steuereinheit
- 32: Puffervorrichtung
- 33: Zielbehälter
- 34: Andienungsvorrichtung erster Zielbehälter / zweiter Zielbehälter
- 35: Fördervorrichtung Antransport Zielbehälter

- 36: Fördervorrichtung Abtransport Zielbehälter
- 37a, 37b: Beladeplatz erster Zielbehälter / zweiter Zielbehälter
- 38: Umsetzvorrichtung
- 39: Umsetzvorrichtung
- 40: Puffervorrichtung
- 41: Warenausgang
- 42: Fördervorrichtung
- 43: Fördervorrichtung

- 44: Sortierpuffer
- 45: Fördervorrichtung
- 46: Fördervorrichtung
- 47: Pufferplatz
- 48: Sortierplatz

- 49 50: Fördermittel
- 51: Abstand
- 52a, 52b: Andienungsebene
- 53a, 53b: Andienungsebene

- 54: Fördervorrichtung
- 55: Fördermittel
- 56: Fördermittel
- 57: Fördermittel
- 58: Fördermittel

- 59 60, 60a: Roboter
- 61: Greifeinheit
- 62a, 62b: Sensorsystem
- 63: Greiffläche

- 64: Robotersteuerung
- 65a, 65b: Sensorsystem
- 66a..66d: Ablageplatte
- 67a, 67b: Zugangsöffnung
- 68: Sensorsystem

- 69: Andienungsvorrichtung Quellbehälter
- 70: Andienungsvorrichtung Zielbehälter
- 71: (Vertikalsteher) Grundgestell
- 72: erste Antriebsvorrichtung
- 73: erste Führungsanordnung

- 74: erster Portalschlitten
- 75: zweite Antriebsvorrichtung
- 76: zweite Führungsanordnung
- 77: zweiter Portalschlitten
- 78: dritte Antriebsvorrichtung

- 79: dritte Führungsanordnung
- 80: dritter Portalschlitten
- 81: vierte Antriebsvorrichtung
- 82: Portalarm
- 83: fünfte Antriebsvorrichtung

- 84a, 84b: x-Führungsschiene
- 85a, 85b: x-Träger
- 86a, 86b: x-Führungswagen
- 87a, 87b: x-Zugmittel
- 88a..88d: erstes Rad-Gehäuse

- 89: x-Stellmotor
- 90: Koppelwelle
- 91a, 91b: y-Führungsschiene
- 92: y-Träger
- 93: y-Führungswagen

- 94: y-Zugmittel
- 95a, 95b: zweites Rad-Gehäuse
- 96: y-Stellmotor
- 97a..97c: Basisplatte
- 98a..98d: z-Führungsschiene

- 99a: z-Führungswagen
- 100a, 100b: z-Führungswagen
- 101: Zahnradgehäuse
- 102: z-Stellmotor
- 103: Zahnstange

- 104: erstes Umlenkrad
- 105: zweites Umlenkrad
- 106: z-Zugmittel
- 107: erster Dreh-Stellmotor
- 108: Getriebegehäuse

- 109: zweiter Dreh-Stellmotor
- 110: erstes Riemenrad
- 111: erster Riemen
- 112: zweites Riemenrad
- 113: Welle

- 114a, 114b: drittes Riemenrad
- 115a, 115b: zweiter Riemen
- 116a, 116b: viertes Riemenrad
- 117: Vakuum-Sauggreifer
- 118: Luftschlauch

- 119: vertikale Begrenzungsfläche des Portalarms
- 120: Greiferaufnahme
- A..H: Ware
- x: erste (horizontale) Richtung
- y: zweite (horizontale) Richtung
- z: dritte (vertikale) Richtung
- Da1: erste Drehachse

- Da2: zweite Drehachse
- a: Dreiecksseite
- ht: Eintauch-Höhe
- hB: Behälterhöhe

## Patentansprüche

1. Verfahren zum vollautomatisierten Kommissionieren von verschiedenen Waren aus Quellbehälter (5a..5h) in Zielbehälter (33a..33g) durch einen Roboter (60, 60a) mit einer Greifeinheit (61) gemäß Aufträgen, mit den folgenden Schritten:
a) Erfassung von Aufträgen mit jeweils einer oder mehreren Auftragszeilen, wobei jede Auftragszeile zumindest eine Ware (A, C) nach seinem Warentyp und seiner bestellten Stückzahl spezifiziert,
b) Antransport eines ersten Quellbehälters (5a) zur Bearbeitung einer Auftragszeile zu einem ersten Auftrag zu einer ersten Andienungsvorrichtung (24a) mit einem ersten Entnahmeplatz (27a) und Antransport eines zweiten Quellbehälters (5c) zur Bearbeitung einer Auftragszeile zu einem zweiten Auftrag zu einer zweiten Andienungsvorrichtung (24b) mit einem zweiten Entnahmeplatz (27b) mit einer automatisiert betriebenen Quellbehälter-Fördertechnik, wobei die Quellbehälter (5a, 5c) unterschiedliche Waren (A, C) bevorraten,
c) Bereitstellung des ersten Quellbehälters (5a) auf dem ersten Entnahmeplatz (27a) und Bereitstellung des zweiten Quellbehälters (5c) auf dem zweiten Entnahmeplatz (27b),
d) Transport eines ersten Zielbehälters (33a) zu einer ersten Andienungsvorrichtung (34a) mit einem ersten Beladeplatz (37a) mit einer automatisiert betriebenen Zielbehälter-Fördertechnik und Bereitstellung des ersten Zielbehälters (33a) auf dem ersten Beladeplatz (37a), um eine Auftragszeile zum ersten Auftrag zu bearbeiten,
e) Transport eines zweiten Zielbehälters (33c) zu einer zweiten Andienungsvorrichtung (34b) mit einem zweiten Beladeplatz (37b) mit einer automatisiert betriebenen Zielbehälter-Fördertechnik und Bereitstellung des zweiten Zielbehälters (33c) auf dem zweiten Beladeplatz (37b), um eine Auftragszeile zum zweiten Auftrag zu bearbeiten,
f) Ermittlung einer Greifflächenpose einer Greiffläche (63) für zumindest eine der Waren (A) im ersten Quellbehälter (5a) mit Hilfe eines Sensorsystems (62a), nachdem der erste Quellbehälter (5a) am ersten Entnahmeplatz (27a) bereitgestellt wurde, und Berechnung einer Greifpose für die Greifeinheit (61) aus der ermittelten Greifflächenpose durch eine Robotersteuerung (64),
g) Entnahme der genannten Ware (A) aus dem ersten Quellbehälter (5a) und Ablegen der genannten Ware (A) in den ersten Zielbehälter (33a) durch die Greifeinheit (61) des Roboters (60, 60a) zu einer Auftragszeile des ersten Auftrags,
h) Wiederholung des Schrittes f) sofern die Auftragszeile zum ersten Auftrag nochmals eine Ware (A) dieses Warentyps enthält, neuerliche Entnahme der genannten Ware (A) aus dem ersten Quellbehälter (5a) und Ablegen der genannten Ware (A) in den ersten Zielbehälter (33a) durch die Greifeinheit (61) des Roboters (60, 60a),
i) Ermittlung einer Greifflächenpose einer Greiffläche (63) für zumindest eine der Waren (C) im zweiten Quellbehälter (5c) mit Hilfe eines Sensorsystems (62b), nachdem der zweite Quellbehälter (5c) am zweiten Entnahmeplatz (27b) bereitgestellt wurde, und Berechnung einer Greifpose für die Greifeinheit (61) aus der ermittelten Greifflächenpose durch eine Robotersteuerung (64),
j) Entnahme der genannten Ware (C) aus dem zweiten Quellbehälter (5c) und Ablegen der genannten Ware (C) in den zweiten Zielbehälter (33c) durch die Greifeinheit (61) des Roboters (60, 60a) zu einer Auftragszeile des zweiten Auftrags,
k) Wiederholung des Schrittes i) sofern die Auftragszeile zum zweiten Auftrag nochmals eine Ware (C) dieses Warentyps enthält, neuerliche Entnahme der genannten Ware (C) aus dem zweiten Quellbehälter (5c) und Ablegen der genannten Ware (C) in den zweiten Zielbehälter (33c) durch die Greifeinheit (61) des Roboters (60, 60a),
l) Abtransport des ersten Quellbehälters (5a) nach Abarbeitung der Auftragszeile zum ersten Auftrag von dem ersten Entnahmeplatz (27a) und Abtransport des zweiten Quellbehälters (5c) nach Abarbeitung der Auftragszeile zum zweiten Auftrag von dem zweiten Entnahmeplatz (27b) unabhängig voneinander durch die Quellbehälter-Fördertechnik,
**dadurch gekennzeichnet, dass**
von einem Sensorsystem (62a, 62b, 65a, 65b, 68) nach der Entnahme einer Ware (A..C) durch die Greifeinheit (61) aus einem der ersten und zweiten Quellbehälter (5a..5h) gemäß dem Schritt g) oder Schritt j)
geprüft wird, ob von der Greifeinheit (61) eine Ware (A..C) heruntergefallen ist und sich auf einer Ablageplatte (66a..66d) befindet, welche oberhalb der Quellbehälter-Fördertechnik und Zielbehälter-Fördertechnik, insbesondere von zweiten Fördervorrichtungen (26, 36), zwischen dem ersten Quellbehälter und ersten Zielbehälter und zwischen dem zweiten Quellbehälter (5a..5h) und zweiten Zielbehälter (33a..33g) angeordnet ist, und
die auf der Ablageplatte (66a..66d) befindliche Ware (A..C) von der Greifeinheit (61) aufgenommen und im
ersten Quellbehälter (5a..5h), oder
zweiten Quellbehälter (5a..5h), oder
ersten Zielbehälter (33a..33g), oder
zweiten Zielbehälter (33a..33g)
ablegt wird.

2. Verfahren nach Anspruch 1, **dadurch gekennzeichnet, dass** ferner der Schritt durchgeführt wird:
m) Abtransport des ersten Zielbehälters (33a) nach Abarbeitung der Auftragszeile zum ersten Auftrag von dem ersten Beladeplatz (37a) und Abtransport des zweiten Zielbehälters (33c) nach Abarbeitung der Auftragszeile zum zweiten Auftrag von dem zweiten Beladeplatz (37b) unabhängig voneinander durch die Zielbehälter-Fördertechnik.

3. Verfahren nach Anspruch 1, **dadurch gekennzeichnet, dass** zur Weiterbearbeitung des ersten Auftrags mit einer nächsten Auftragszeile und/oder zweiten Auftrags mit einer nächsten Auftragszeile ferner die Schritte durchgeführt werden:
m) Antransport eines dritten Quellbehälters (5h) zur Bearbeitung der nächsten Auftragszeile zum ersten Auftrag zur ersten Andienungsvorrichtung (24a) mit dem ersten Entnahmeplatz (27a) und/oder Antransport eines vierten Quellbehälters (5g) zur Bearbeitung der nächsten Auftragszeile zum zweiten Auftrag zur zweiten Andienungsvorrichtung (24b) mit dem zweiten Entnahmeplatz (27b) mit der automatisiert betriebenen Quellbehälter-Fördertechnik, wobei die Quellbehälter (5h, 5g) unterschiedliche Waren (H, G) bevorraten,
n) Bereitstellung des ersten Zielbehälters (33a) auf dem ersten Beladeplatz (37a) während des Antransportes des dritten Quellbehälters (5h), um die nächste Auftragszeile zum ersten Auftrag zu bearbeiten, und/oder Bereitstellung des zweiten Zielbehälters (33c) auf dem zweiten Beladeplatz (37b) während des Antransportes des vierten Quellbehälters (5g), um die nächste Auftragszeile zum zweiten Auftrag zu bearbeiten,
o) Ermittlung einer Greifflächenpose einer Greiffläche (63) für zumindest eine der Waren (H) im dritten Quellbehälter (5c) mit Hilfe des Sensorsystems (62a), nachdem der dritte Quellbehälter (5c) am ersten Entnahmeplatz (27a) bereitgestellt wurde, und Berechnung einer Greifpose für die Greifeinheit (61) aus der ermittelten Greifflächenpose durch die Robotersteuerung (64),
p) Entnahme der genannten Ware (H) aus dem dritten Quellbehälter (5h) und Ablegen der genannten Ware (H) in den ersten Zielbehälter (33a) durch die Greifeinheit (61) des Roboters (60, 60a) zur nächsten Auftragszeile des ersten Auftrags,
q) Wiederholung des Schrittes o) sofern die nächste Auftragszeile zum ersten Auftrag nochmals eine Ware (H) dieses Warentyps enthält, neuerliche Entnahme der genannten Ware (H) aus dem dritten Quellbehälter (5h) und Ablegen der genannten Ware (H) in den ersten Zielbehälter (33a) durch die Greifeinheit (61) des Roboters (60, 60a),
r) und/oder Ermittlung einer Greifflächenpose einer Greiffläche (63) für zumindest eine der Waren (G) im vierten Quellbehälter (5g) mit Hilfe des Sensorsystems (62b), nachdem der vierte Quellbehälter (5g) am zweiten Entnahmeplatz (27b) bereitgestellt wurde, und Berechnung einer Greifpose für die Greifeinheit (61) aus der ermittelten Greifflächenpose durch die Robotersteuerung (64),
s) und/oder Entnahme der genannten Ware (G) aus dem vierten Quellbehälter (5g) und Ablegen der genannten Ware (G) in den zweiten Zielbehälter (33c) durch die Greifeinheit (61) des Roboters (60, 60a) zur nächsten Auftragszeile des zweiten Auftrags,
t) Wiederholung des Schrittes r) sofern die nächste Auftragszeile zum zweiten Auftrag nochmals eine Ware (G) dieses Warentyps enthält, neuerliche Entnahme der genannten Ware (G) aus dem vierten Quellbehälter (5g) und Ablegen der genannten Ware (G) in den zweiten Zielbehälter (33c) durch die Greifeinheit (61) des Roboters (60, 60a),
u) Abtransport des ersten Zielbehälters (33a) nach Abarbeitung der Auftragszeilen zum ersten Auftrag von dem ersten Beladeplatz (37a) und/oder Abtransport des zweiten Zielbehälters (33c) nach Abarbeitung der Auftragszeilen zum zweiten Auftrag von dem zweiten Beladeplatz (37b) unabhängig voneinander durch die Zielbehälter-Fördertechnik.

4. Verfahren nach Anspruch 1 oder 3, **dadurch gekennzeichnet, dass** der erste Auftrag mit den Schritten f) bis h) oder Schritten o) bis q) und der zweite Auftrag mit den Schritten i) bis k) oder Schritten r) bis t) vom Roboter (60, 60a) sequentiell bearbeitet werden.

5. Verfahren nach einem der Ansprüche 1 bis 4, **dadurch gekennzeichnet, dass** der Schritt i) oder Schritt r) nach der Abarbeitung der Auftragszeile zum ersten Auftrag während der Bewegung des Roboters (60, 60a) / der Greifeinheit (61) vom ersten Zielbehälter (33a) zum zweiten Quellbehälter (5c) oder vierten Quellbehälter (5g) durchgeführt wird.

6. Verfahren nach einem der Ansprüche 1 bis 5, **dadurch gekennzeichnet, dass** der Schritt f) oder Schritt o) nach der Abarbeitung der Auftragszeile zum zweiten Auftrag während der Bewegung des Roboters (60, 60a) / der Greifeinheit (61) vom zweiten Zielbehälter (33c) zum ersten Quellbehälter (5a) oder dritten Quellbehälter (5a) durchgeführt wird.

7. Verfahren nach einem der Ansprüche 1 bis 6, **dadurch gekennzeichnet, dass** der Schritt f) oder Schritt o) während der Bearbeitung der Auftragszeile zum ersten Auftrag gemäß den Schritten g) und h) oder Schritten p) und q), und der Schritt i) oder Schritt r) während der Bearbeitung der Auftragszeile zum zweiten Auftrag gemäß den Schritten j) und k) oder Schritten s) und t) durchgeführt werden.

8. Verfahren nach einem der Ansprüche 1 bis 7, **dadurch gekennzeichnet, dass** der erste Auftrag mit den Schritten g) und h) oder Schritten p) und q), und der zweite Auftrag mit den Schritten j) und k) oder Schritten s) und t) vom Roboter (60, 60a) sequentiell bearbeitet werden.

9. Verfahren nach Anspruch 1, **dadurch gekennzeichnet, dass** der erste Quellbehälter (5a) und zweite Quellbehälter (5c) nach dem Kommissionieren der Waren (A, C) gemäß den Schritten g) und h) und Schritten j) und k) unabhängig voneinander in einen Lagerbereich (1) zurückgelagert werden, sofern nach der Warenentnahme Waren (A, C) im ersten Quellbehälter (5a) und zweiten Quellbehälter (5c) verbleiben.

10. Verfahren nach einem der Ansprüche 1 bis 9, **dadurch gekennzeichnet, dass** der dritte Quellbehälter (5h) und/oder vierte Quellbehälter (5g) nach dem Kommissionieren der Waren (H, G) gemäß den Schritten p) und q) und/oder Schritten s) und t) unabhängig voneinander in einen Lagerbereich (1) zurückgelagert werden, sofern nach der Warenentnahme Waren (H, G) im dritten Quellbehälter (5h) und vierten Quellbehälter (5g) verbleiben.

11. Verfahren nach Anspruch 1 oder 2, **dadurch gekennzeichnet, dass** der erste Zielbehälter (33a) und zweite Zielbehälter (33c) nach dem Kommissionieren der Waren (A, C) gemäß den Schritten g) und h) und Schritten j) und k) unabhängig voneinander in einen Sortierpuffer (44) transportiert werden, sofern zum ersten Auftrag unterschiedliche Auftragszeilen und zum zweiten Auftrag unterschiedliche Auftragszeilen zu bearbeiten sind.

12. Verfahren nach Anspruch 11, **dadurch gekennzeichnet, dass**
die Quellbehälter (5a..5h) aus einem Lagerbereich (1) gemäß den Aufträgen ausgelagert und an dem ersten Entnahmeplatz (27a) und zweiten Entnahmeplatz (27b) in beliebiger Reihenfolge bereitgestellt werden,
wobei die Reihenfolge der Quellbehälter (5a..5h), in welcher die Quellbehälter (5a..5h) zum ersten Entnahmeplatz (27a) und zweiten Entnahmeplatz (27b) antransportiert werden, erfasst wird, und
wobei die Zielbehälter (33a..33g) im Sortierpuffer (44) in eine Reihenfolge sortiert werden, die abhängig von der Reihenfolge in welcher die Quellbehälter (5) auf dem ersten Entnahmeplatz (27a) und zweiten Entnahmeplatz (27b) bereitgestellt werden, bestimmt wird, und dass ein erster / zweiter Quellbehälter (5a..5h) und ein erster / zweiter Zielbehälter (33a..33g) zu einem Auftrag in etwa gleichzeitig am ersten / zweiten Entnahmeplatz (27a, 27b) und ersten / zweiten Beladeplatz (37a, 37b) ankommen.

13. Verfahren nach Anspruch 1, **dadurch gekennzeichnet, dass** als Roboter ein Portalroboter (60a) bereitgestellt wird, umfassend
ein Grundgestell (71),
einen gegenüber dem Grundgestell (71) verschiebbar gelagerten und über eine erste Antriebsvorrichtung (72) entlang einer ersten Führungsanordnung (73) in einer ersten Richtung (x) horizontal bewegbaren ersten Portalschlitten (74),
einen am ersten Portalschlitten (74) verschiebbar gelagerten und über eine zweite Antriebsvorrichtung (75) entlang einer zweiten Führungsanordnung (76) in einer quer zur ersten Richtung (x) verlaufenden, zweiten Richtung (y) horizontal bewegbaren zweiten Portalschlitten (77),
einen am zweiten Portalschlitten (77) verschiebbar gelagerten und über eine dritte Antriebsvorrichtung (78) entlang einer dritten Führungsanordnung (79) in einer dritten Richtung (z) vertikal bewegbaren dritten Portalschlitten (80),
einen am dritten Portalschlitten (80) um eine erste, vertikale Drehachse (Da1) drehbar gelagerten und über eine vierte Antriebsvorrichtung (81) bewegbaren Portalarm (82), und
eine am Portalarm (82) um eine zweite, horizontale Drehachse (Da2) drehbar gelagerte und über eine fünfte Antriebsvorrichtung (83) bewegbare Greiferaufnahme (120), an welcher die Greifeinheit (61) befestigt ist.

## Claims

1. A method for fully automated picking of different goods from source containers (5a..5h) into target containers (33a..33g) by a robot (60, 60a) having a gripping unit (61) in accordance with orders, having the following steps:
a) acquiring orders having, respectively, one or multiple order lines, wherein each order line specifies at least one good (A, C) according to its type of good and the number of pieces ordered,
b) supplying a first source container (5a) for processing an order line according to a first order to a first provisioning device (24a) having a first removal area (27a) and supplying a second source container (5c) for processing an order line according to a second order to a second provisioning device (24b) having a second removal area (27b) using a source container conveying system operated in an automated manner, wherein the source containers (5a, 5c) stock different goods (A, C),
c) provisioning the first source container (5a) at the first removal area (27a) and provisioning the second source container (5c) at the second removal area (27b),
d) transporting a first target container (33a) to a first provisioning device (34a) having a first loading area (37a) using a target container conveying system operated in an automated manner and provisioning the first target container (33a) at the first loading area (37a) to process an order line according to the first order,
e) transporting a second target container (33c) to a second provisioning device (34b) having a second loading area (37b) using a target container conveying system operated in an automated manner and provisioning the second target container (33c) at the second loading area (37b) to process an order line according to the second order,
f) ascertaining a gripping surface pose of a gripping surface (63) for at least one of the goods (A) in the first source container (5a) using a sensor system (62a) after the first source container (5a) has been provisioned at the first removal area (27a) and computing a gripping pose for the gripping unit (61) on the basis of the ascertained gripping surface pose by a robot control (64),
g) removing said good (A) from the first source container (5a) and placing said good (A) into the first target container (33a) by the gripping unit (61) of the robot (60, 60a) according to an order line of the first order,
h) repeating the step f), provided that the order line according to the first order contains, once again, a good (A) of this type of good, newly removing said good (A) from the first source container (5a) and placing said good (A) into the first target container (33a) by the gripping unit (61) of the robot (60, 60a),
i) ascertaining a gripping surface pose of a gripping surface (63) for at least one of the goods (C) in the second source container (5c) using a sensor system (62b) after the second source container (5c) has been provisioned at the second removal area (27b) and computing a gripping pose for the gripping unit (61) on the basis of the ascertained gripping surface pose by a robot control (64),
j) removing said good (C) from the second source container (5c) and placing said good (C) into the second target container (33c) by the gripping unit (61) of the robot (60, 60a) according to an order line of the second order,
k) repeating the step i), provided that the order line according to the second order contains, once again, a good (C) of this type of good, newly removing said good (C) from the second source container (5c) and placing said good (C) into the second target container (33c) by the gripping unit (61) of the robot (60, 60a),
l) removing the first source container (5a) from the first removal area (27a) after handling of the order line according to the first order and removing the second source container (5c) from the second removal area (27b) after handling of the order line according to the second order, independent of each other, by the source container conveying system, **characterized in that**
after the removal of a good (A..C) by the gripping unit (61) from either one of the first and second source containers (5a..5h) in accordance with the step g) or step j), the sensor system (62a, 62b, 65a, 65b, 68)
checks whether a good (A..C) has dropped off the gripping unit (61) and is located on a holding plate (66a..66d) which is arranged above the source container conveying system and target container conveying system, in particular above second conveying devices (26, 36), between the first source container and first target container and between the second source container (5a..5h) and second target container (33a..33g), and
the good (A..C) located on the holding plate (66a..66d) is picked up by the gripping unit (61) and placed in the
first source container (5a..5h), or
second source container (5a..5h), or
first target container (33a..33g), or
second target container (33a..33g).

2. The method according to claim 1, **characterized in that**, further, the following step is carried out:
m) removing the first target container (33a) from the first loading area (37a) after handling of the order line according to the first order and discharging the second target container (33c) from the second loading area (37b) after handling of the order line according to the second order, independent of each other, by the target container conveying system.

3. The method according to claim 1, **characterized in that** for further processing of the first order having a next order line and/or second order having a next order line the steps are further carried out:
m) supplying a third source container (5h) to the first provisioning device (24a) having the first removal area (27a) for processing the next order line according to the first order and/or supplying a fourth source container (5g) to the second provisioning device (24b) having the second removal area (27b) for processing the next order line according to the second order using the source container conveying system operated in an automated manner, wherein the source containers (5h, 5g) stock different goods (H, G),
n) provisioning the first target container (33a) at the first loading area (37a) during the supply of the third source container (5h) to process the next order line according to the first order and/or provisioning the second target container (33c) at the second loading area (37b) during the supply of the fourth source container (5g) to process the next order line according to the second order,
o) ascertaining a gripping surface pose of a gripping surface (63) for at least one of the goods (H) in the third source container (5c) using the sensor system (62a) after the third source container (5c) has been provisioned at the first removal area (27a) and computing a gripping pose for the gripping unit (61) on the basis of the ascertained gripping surface pose by the robot control (64),
p) removing said good (H) from the third source container (5h) and placing said good (H) into the first target container (33a) by the gripping unit (61) of the robot (60, 60a) according to the next order line of the first order,
q) repeating the step o), provided that the next order line according to the first order contains, once again, a good (H) of this type of good, newly removing said goods (H) from the third source container (5h) and placing said goods (H) into the first target container (33a) by the gripping unit (61) of the robot (60, 60a),
r) and/or ascertaining a gripping surface pose of a gripping surface (63) for at least one of the goods (G) in the fourth source container (5g) using the sensor system (62b) after the fourth source container (5g) has been provisioned at the second removal area (27b) and computing a gripping pose for the gripping unit (61) on the basis of the ascertained gripping surface pose by the robot control (64),
s) and/or removing said good (G) from the fourth source container (5g) and placing said good (G) into the second target container (33c) by the gripping unit (61) of the robot (60, 60a) according to the next order line of the second order,
t) repeating the step r), provided that the next order line according to the second order contains, once again, a good (G) of this type of good, newly removing said good (G) from the fourth source container (5g) and placing said good (G) into the second target container (33c) by the gripping unit (61) of the robot (60, 60a),
u) removing the first target container (33a) from the first loading area (37a) after handling of the order lines according to the first order and/or removing the second target container (33c) from the second loading area (37b) after handling of the order lines according to the second order, independent of each other, by the target container conveying system.

4. The method according to claim 1 or 3, **characterized in that** the first order having the steps f) to h) or steps o) to q) and the second order having the steps i) to k) or steps r) to t) are processed sequentially by the robot (60, 60a).

5. The method according to any one of the claims 1 to 4, **characterized in that** the step i) or step r) is executed after the handling of the order line according to the first order during the movement of the robot (60, 60a) / the gripping unit (61) from the first target container (33a) to the second source container (5c) or fourth source container (5g).

6. The method according to any one of the claims 1 to 5, **characterized in that** the step f) or step o) is executed after the handling of the order line according to the second order during the movement of the robot (60, 60a) / the gripping unit (61) from the second target container (33c) to the first source container (5a) or third source container (5a).

7. The method according to any one of the claims 1 to 6, **characterized in that** the step f) or step o) is executed during the processing of the order line according to the first order in accordance with the steps g) and h) or steps p) and q), and the step i) or step r) is executed during the processing of the order line according to the second order in accordance with the steps j) and k) or steps s) and t).

8. The method according to any one of the claims 1 to 7, **characterized in that** the first order having the steps g) and h) or steps p) and q), and the second order having the steps j) and k) or steps s) and t) are processed sequentially by the robot (60, 60a).

9. The method according to claim 1, **characterized in that** the first source container (5a) and second source container (5c) are stored back into a storage area (1), independent of each other, after the picking of the goods (A, C) in accordance with the steps g) and h) and steps j) and k), provided that goods (A, C) remain in the first source container (5a) and second source container (5c) after the goods removal.

10. The method according to any one of the claims 1 to 9, **characterized in that** the third source container (5h) and/or fourth source container (5g) are stored back into a storage area (1), independent of each other, after the picking of the goods (H, G) in accordance with the steps p) and q) and/or steps s) and t), provided that goods (H, G) remain in the third source container (5h) and fourth source container (5g) after the goods removal.

11. The method according to claim 1 or 2, **characterized in that** the first target container (33a) and second target container (33c) are transported into a sorting buffer (44) independent of each other after the picking of the goods (A, C) in accordance with the steps g) and h) and steps j) and k), provided that different order lines are to be processed according to the first order and different order lines are to be processed according to second order.

12. The method according to claim 11, **characterized in that**
the source containers (5a..5h) are removed from a storage area (1) in accordance with the orders and provisioned in a random sequence at the first removal area (27a) and second removal area (27b),
wherein the sequence of the source containers (5a..5h) in which the source containers (5a..5h) are supplied to the first removal area (27a) and second removal area (27b) isdetected, and
wherein the target containers (33a..33g) in the sorting buffer (44) are sorted into a sequence which is determined depending on the sequence in which the source containers (5) are provisioned at the first removal area (27a) and second removal area (27b), and that a first/second source container (5a..5h) and a first/second target container (33a..33g), respectively according to an order, arrive approximately simultaneously at the first/second removal area (27a, 27b) and first/second loading area (37a, 37b).

13. The method according to claim 1, **characterized in that** as the robot, a gantry robot (60a) is provided, comprising
a base frame (71),
a first gantry slide (74) mounted so as to be displaceable relative to the base frame (71) and horizontally movable by a first drive device (72) along a first guide assembly (73) in a first direction (x),
a second gantry slide (77) mounted at the first gantry slide (74) so as to be displaceable and horizontally movable by a second drive device (75) along a second guide assembly (76) in a second direction (y) extending transverse to the first direction (x),
a third gantry slide (80) mounted at the second gantry slide (77) so as to be displaceable and vertically movable via a third drive device (78) along a third guide assembly (79) in a third direction (z),
a gantry arm (82) mounted on the third gantry slide (80) so as to be rotatable about a first, vertical axis of rotation (Da1) and movable by a fourth drive device (81), and
a gripper receptacle (120) which is rotatably mounted on the gantry arm (82) about a second, horizontal axis of rotation (Da2) and is movable by a fifth drive device (83) and to which the gripping unit (61) is fastened.

## Revendications

1. Procédé pour la préparation de commandes entièrement automatisée de différents articles de récipients sources (5a... 5h) vers des récipients cibles (33a... 33g) à l'aide d'un robot (60, 60a) avec une unité de préhension (61) selon des commandes, avec les étapes suivantes :
a) saisie de commandes avec chacune une ou plusieurs lignes de commande, dans lequel chaque ligne de commande spécifie au moins un article (A, C) selon son type d'article et le nombre de pièces commandé,
b) transport d'un premier récipient source (5a) pour le traitement d'une ligne de commande concernant une première commande vers un premier dispositif d'approvisionnement (24a) avec un premier emplacement de prélèvement (27a) et transport d'un deuxième récipient source (5c) pour le traitement d'une ligne de commande concernant une deuxième commande vers un deuxième dispositif d'approvisionnement (24b) avec un deuxième emplacement de prélèvement (27b) avec un système de convoyage de récipient source automatisé, dans lequel les récipients sources (5a, 5c) contiennent différents articles (A, C),
c) mise à disposition du premier récipient source (5a) sur le premier emplacement de prélèvement (27a) et mise à disposition du deuxième récipient source (5c) sur le deuxième emplacement de prélèvement (27b),
d) transport d'un premier récipient cible (33a) vers un premier dispositif d'approvisionnement (34a) avec un premier emplacement de chargement (37a) avec un système de convoyage de récipient cible automatisé et mise à dispositif du premier récipient cible (33a) sur le premier emplacement de chargement (37a), afin de traiter une ligne de commande concernant la première commande,
e) transport d'un deuxième récipient cible (33c) vers un deuxième dispositif d'approvisionnement (34b) avec un deuxième emplacement de chargement (37b) avec un système de convoyage de récipient cible automatisé et mise à dispositif du deuxième récipient cible (33c) sur le deuxième emplacement de chargement (37b), afin de traiter une ligne de commande concernant la deuxième commande,
f) détermination d'une posture de surface de préhension d'une surface de préhension (63) pour au moins un des articles (A) dans le premier récipient source (5a) à l'aide d'un système de capteur (62a), après que le premier récipient source (5a) a été mis à disposition au niveau du premier emplacement de prélèvement (27a) et calcul d'une posture de préhension pour l'unité de préhension (61) à partir de la posture de surface de préhension déterminée à l'aide d'une commande de robot (64),
g) prélèvement dudit article (A) dans le premier récipient source (5a) et dépôt dudit article (A) dans le premier récipient cible (33a) par l'unité de préhension (61) du robot (60, 60a) en fonction d'une ligne de commande de la première commande,
h) répétition de l'étape f) tant que la ligne de commande concernant la première commande contient encore un article (A) de ce type d'article, nouveau prélèvement dudit article (A) dans le premier récipient source (5a) et dépôt dudit article (A) dans le premier récipient cible (33a) par l'unité de préhension (61) du robot (60, 60a),
i) détermination d'une posture de surface de préhension d'une surface de préhension (63) pour au moins un des articles (C) dans le deuxième récipient source (5c) à l'aide d'un système de capteur (62b), après que le deuxième récipient source (5c) a été mis à disposition sur le deuxième emplacement de prélèvement (27b) et calcul d'une posture de préhension pour l'unité de préhension (61) à partir de la posture de surface de préhension déterminée par une commande de robot (64),
j) prélèvement dudit article (C) dans le deuxième récipient source (5c) et dépôt dudit article (C) dans le deuxième récipient cible (33c) par l'unité de préhension (61) du robot (60, 60a) en fonction d'une ligne de commande de la deuxième commande,
k) répétition de l'étape i) tant que la ligne de commande concernant la deuxième commande contient encore un article (C) de ce type d'article, nouveau prélèvement dudit article (C) dans le deuxième récipient source (5c) et dépôt dudit article (C) dans le deuxième récipient cible (33c) par l'unité de préhension (61) du robot (60, 60a),
l) transport du premier récipient source (5a) après traitement de la ligne de commande concernant la première commande hors du premier emplacement de prélèvement (27a) et transport du deuxième récipient source (5c) après le traitement de la ligne de commande concernant la deuxième commande hors du deuxième emplacement de prélèvement (27b) indépendamment entre eux à l'aide du système de convoyage de récipient source,
**caractérisé en ce que**
il est vérifié, à l'aide d'un système de capteur (62a, 62b, 65a, 65b, 68), après le prélèvement d'un article (A... C) par l'unité de préhension (61) dans les premier et deuxième récipients sources (5a... 5h) selon l'étape g) ou l'étape j) si un article (A... C) est tombé de l'unité de préhension (61) et se trouve sur une plaque de dépôt (66a... 6d) qui est disposée au-dessus du système de convoyage de récipient source et du système de convoyage de récipient cible, plus particulièrement de deux dispositifs de convoyage (26, 36), entre le premier récipient source et le premier récipient cible et entre le deuxième récipient source (5a... 5h) et le deuxième récipient cible (33a... 33g) et
si l'article (A... C) se trouvant sur la plaque de dépôt (66a... 66d) est prise en charge par l'unité de préhension (61) et est déposée
dans le premier récipient source (5a... 5h) ou
dans le deuxième récipient source (5a... 5h) ou
dans le premier récipient cible (33a... 33g) ou
dans le deuxième récipient cible (33a... 33g).

2. Procédé selon la revendication 1, **caractérisé en ce qu'**en outre l'étape suivante est exécutée :
m) transport du premier récipient cible (33a) après le traitement de la ligne de commande concernant la première commande hors du premier emplacement de chargement (37a) et transport du deuxième récipient cible (33c) après le traitement de la ligne de commande concernant la deuxième commande hors du deuxième emplacement de chargement (37b) indépendamment entre eux à l'aide du système de convoyage de récipient cible.

3. Procédé selon la revendication 1, **caractérisé en ce que**, pour le traitement ultérieur de la première commande avec une ligne de commande suivante et/ou de la deuxième commande avec une ligne de commande suivante, les étapes suivantes sont exécutées en outre :
m) transport d'un troisième récipient source (5h) pour le traitement de la ligne de commande suivante concernant la première commande vers le premier dispositif d'approvisionnement (24a) avec le premier emplacement de prélèvement (27a) et/ou transport d'un quatrième récipient source (5g) pour le traitement de la ligne de commande suivante concernant la deuxième commande vers le deuxième dispositif d'approvisionnement (24b) avec le deuxième emplacement de prélèvement (27b) avec le système de convoyage de récipient source automatisé, dans lequel les récipients sources (5h, 5g) contiennent différents articles (H, G),
n) mise à disposition du premier récipient cible (33a) sur le premier emplacement de chargement (37a) pendant le transport du troisième récipient source (5h), afin de traiter la ligne de commande suivante concernant la première commande et/ou mise à disposition du deuxième récipient cible (33c) sur le deuxième emplacement de chargement (37b) pendant le transport du quatrième récipient source (5g) afin de traiter la ligne de commande suivante concernant la deuxième commande,
o) détermination d'une posture de surface de préhension d'une surface de préhension (63) pour au moins un des articles (H) dans le troisième récipient source (5c) à l'aide du système de capteur (62a), après que le troisième récipient source (5c) a été mis à disposition au niveau du premier emplacement de prélèvement (27a) et calcul d'une posture de préhension pour l'unité de préhension (61) à partir de la posture de surface de préhension déterminée par la commande de robot (64),
p) prélèvement dudit article (H) dans le troisième récipient source (5h) et dépôt dudit article (H) dans le premier récipient cible (33a) par l'unité de préhension (61) du robot (60, 60a) pour la ligne de commande suivante de la première commande,
q) répétition de l'étape o) tant que la ligne de commande suivante concernant la première commande contient encore un article (H) de ce type d'article, nouveau prélèvement dudit article (H) dans le troisième récipient source (5h) et dépôt dudit article (H) dans le premier récipient cible (33a) par l'unité de préhension (61) du robot (60, 60a),
r) et/ou détermination d'une posture de surface de préhension d'une surface de préhension (63) pour au moins un des articles (G) dans le quatrième récipient source (5g) à l'aide du système de capteur (62b) après que le quatrième récipient source (5g) a été mis à disposition au niveau du deuxième emplacement de prélèvement (27b) et calcul d'une posture de préhension pour l'unité de préhension (61) à partir de la posture de surface de préhension déterminée par la commande de robot (64),
s) et/ou prélèvement dudit article (G) dans le quatrième récipient source (5g) et dépôt dudit article (G) dans le deuxième récipient cible (33c) par l'unité de préhension (61) du robot (60, 60a) pour la ligne de commande suivante de la deuxième commande,
t) répétition de l'étape r) tant que la ligne de commande suivante concernant la deuxième commande contient encore un article (G) de ce type d'article, nouveau prélèvement dudit article (G) dans le quatrième récipient source (5g) et dépôt dudit article (G) dans le deuxième récipient cible (33c) par l'unité de préhension (61) du robot (60, 60a),
u) transport du premier récipient cible (33a) après le traitement des lignes de commande concernant la première commande hors du premier emplacement de chargement (37a) et/ou transport du deuxième récipient cible (33c) après le traitement des lignes de commande concernant la deuxième commande hors du deuxième emplacement de chargement (37b) indépendamment entre eux à l'aide du système de convoyage de récipient cible.

4. Procédé selon la revendication 1 ou 3, **caractérisé en ce que** la première commande avec les étapes f) à h) ou les étapes o) à q) et la deuxième commande avec les étapes i) à k) ou les étapes r) à t) sont traitées de manière séquentielle par le robot (60, 60a).

5. Procédé selon l'une des revendications 1 à 4, **caractérisé en ce que** l'étape i) ou l'étape r) est exécutée après le traitement de la ligne de commande concernant la première commande pendant le déplacement du robot (60, 60a) / de l'unité de préhension (61) du premier récipient cible (33a) vers le deuxième récipient source (5c) ou le quatrième récipient source (5g).

6. Procédé selon l'une des revendications 1 à 5, **caractérisé en ce que** l'étape f) ou l'étape o) est exécutée après le traitement de la ligne de commande concernant la deuxième commande pendant le déplacement du robot (60, 60a) / de l'unité de préhension (61) du deuxième récipient cible (33c) vers le premier récipient source (5a) ou le troisième récipient source (5a).

7. Procédé selon l'une des revendications 1 à 6, **caractérisé en ce que** l'étape f) ou l'étape o) est exécutée pendant le traitement de la ligne de commande concernant la première commande selon les étapes g) et h) ou les étapes p) et q) et l'étape i) ou l'étape r) est exécutée pendant le traitement de la ligne de commande concernant la deuxième commande selon les étapes j) et k) ou les étapes s) et t).

8. Procédé selon l'une des revendications 1 à 7, **caractérisé en ce que** la première commande, avec les étapes g) et h) ou les étapes p) et q) ou la deuxième commande, avec les étapes j) et k) ou les étapes s) et t) sont traitées de manière séquentielle par le robot (60, 60a).

9. Procédé selon la revendication 1, **caractérisé en ce que** le premier récipient source (5a) et le deuxième récipient source (5c) sont entreposés, après la préparation des articles (A, C) selon les étapes g) et h) et les étapes j) et k) indépendamment entre eux dans une zone de stockage (1) si, après le prélèvement d'articles, il reste des articles (A, C) dans le premier récipient cible (5a) et le deuxième récipient cible (5c).

10. Procédé selon l'une des revendications 1 à 9, **caractérisé en ce que** le troisième récipient source (5h) et/ou le quatrième récipient source (5g) sont entreposés, après la préparation des articles (H, G) selon les étapes p) et q) et/ou les étapes s) et t) indépendamment entre eux dans une zone de stockage (1) si, après le prélèvement d'articles, il reste des articles (H, G) dans le troisième récipient cible (5h) et le quatrième récipient cible (5g).

11. Procédé selon la revendication 1 ou 2, **caractérisé en ce que** le premier récipient cible (33a) et le deuxième récipient cible (33c) sont transportés, après la préparation des articles (A, C) selon les étapes g) et h) et les étapes j) et k) indépendamment entre eux dans un tampon de tri (44) si, en ce qui concerne la première commande, différentes lignes de commande et, en ce qui concerne la deuxième commande, différentes lignes de commande doivent être traitées.

12. Procédé selon la revendication 11, **caractérisé en ce que**
les récipients cibles (5a... 5h) sont déstockés d'une zone de stockage (1) selon les commandes et sont mis à disposition dans un ordre quelconque au niveau du premier emplacement de prélèvement (27a) et du deuxième emplacement de prélèvement (27b), dans lequel l'ordre des récipients sources (5a... 5h) dans lequel les récipients sources (5a... 5h) sont transportés vers le premier emplacement de prélèvement (27a) et le deuxième emplacement de prélèvement (27b), est détecté et
dans lequel les récipients cibles (33a... 33g) sont triés, dans le tampon de tri (44), dans un ordre qui est déterminé en fonction de l'ordre dans lequel les récipients sources (5) sont mis à disposition sur l'emplacement de prélèvement (27a) et sur l'emplacement de prélèvement (27b) et **en ce qu'**un premier / deuxième récipient source (5a... 5h) et un premier / deuxième récipient cible (33a... 33g) concernant une commande arrivent en même temps au niveau du premier / deuxième emplacement de prélèvement (27a, 27b) et du premier / deuxième emplacement de chargement (37a, 37b).

13. Procédé selon la revendication 1, **caractérisé en ce que** le robot mis à disposition est un robot à portique (60a) comprenant
un châssis de base (71),
un premier chariot de portique (74) logé de manière coulissante par rapport au châssis de base (71) et pouvant être déplacé horizontalement par l'intermédiaire d'un premier dispositif d'entraînement (72) le long d'un premier dispositif de guidage (73) dans une première direction (x),
un deuxième chariot de portique (77) logé de manière coulissante au niveau du premier chariot de portique (74) et pouvant être déplacé horizontalement par l'intermédiaire d'un deuxième dispositif d'entraînement (75) le long d'un deuxième dispositif de guidage (76) dans une deuxième direction (y) transversale par rapport à la première direction (x),
un troisième chariot de portique (80) logé de manière coulissante au niveau du deuxième chariot de portique (77) et pouvant être déplacé verticalement par l'intermédiaire d'un troisième dispositif d'entraînement (78) le long d'un troisième dispositif de guidage (79) dans une troisième direction (z),
un bras de portique (82) logé de manière rotative au niveau du troisième chariot de portique (80) autour d'un premier axe de rotation vertical (Da1)et pouvant être déplacé par l'intermédiaire d'un quatrième dispositif d'entraînement (81) et
un logement de préhenseur (120), auquel l'unité de préhension (61) est fixée, logé de manière rotative au niveau du bras de portique (82) autour d'un deuxième axe de rotation horizontal (Da2) et pouvant être déplacé par l'intermédiaire d'un cinquième dispositif d'entraînement (83).
